# EUROPÄISCHE PATENTSCHRIFT

(11) **EP 4 226 217 B1**
(45) Veröffentlichungstag und Bekanntmachung des Hinweises auf die Patenterteilung: **02.07.2025**
(21) Anmeldenummer: 21790209.7
(22) Anmeldetag: 11.10.2021
(51) Int. Cl.: G05B 9/03, G05B 19/05

(54) **VERFAHREN ZUM STEUERN EINES AUTOMATISIERUNGSSYSTEMS MIT STEUERUNGS-REDUNDANZ UND AUTOMATISIERUNGSSYSTEM**
METHOD FOR OPERATING AN AUTOMATION SYSTEM WITH CONTROL REDUNDANCY, AND AUTOMATION SYSTEM
PROCÉDÉ DE FONCTIONNEMENT D'UN SYSTÈME D'AUTOMATISATION DOTÉ D'UNE REDONDANCE DE COMMANDE ET SYSTÈME D'AUTOMATISATION

(30) Priorität: 14.10.2020 DE 102020127022
(43) Veröffentlichungstag der Anmeldung: 16.08.2023
(73) Patentinhaber: Beckhoff Automation GmbH, 33415 Verl (DE)
(72) Erfinder: DR. JANSSEN, Dirk, 33415 Verl (DE); BECKHOFF, Hans, 33415 Verl (DE)
(74) Vertreter: Patentanwaltskanzlei WILHELM & BECK
(86) Internationale Anmeldenummer: PCT/EP2021/078059
(87) Internationale Veröffentlichungsnummer: WO 2022/078963

(56) Entgegenhaltungen:
- US-A1- 2013 318 041
- US-B2- 7 159 152

## Beschreibung

Die Erfindung betrifft ein Verfahren zum Steuern eines Automatisierungssystems mit Steuerungs-Redundanz. Die Erfindung betrifft ferner ein Automatisierungssystem, das eingerichtet ist, das Verfahren zum Steuern eines Automatisierungssystems mit Steuerungs-Redundanz auszuführen.

In der Fertigungs- und Automatisierungstechnik werden oft serielle Netzwerksysteme eingesetzt, bei denen die dezentral angeordneten Geräte einer Maschinenperipherie wie E/A-Module, Messumformer, Antriebe, Ventile und Bedienerterminals mit Automatisierungs-, Engineeringsoder Visualisierungssystemen kommunizieren. Alle Teilnehmer sind dabei über einen seriellen Datenbus, vorzugsweise über einen Feldbus, miteinander vernetzt, wobei der Datenaustausch über den Datenbus in der Regel auf der Grundlage des Master-Slave-Prinzips in Form von Datenpaketen, auch als Telegramme bezeichnet, ausgeführt wird.

Die Master-Einheiten am Datenbus, in der Regel die Steuergeräte, sind im Besitz einer Buszugriffsberechtigung und bestimmen den Datentransfer auf dem Datenbus. Die Slave-Einheiten am Datenbus, in der Regel Maschinenperipheriegeräte, haben keine Buszugriffsberechtigung, d. h. sie dürfen nur empfangene Telegramme quittieren oder auf Anfrage einer Master-Einheit Telegramme an diese übermitteln.

Die Telegramme, auch als Frames bezeichnet, setzen sich aus Steuerdaten und Nutzdaten zusammen. Als Protokoll zum Steuern des Datenaustausches auf den Datenbus wird dabei oft der Ethernet-Standard verwendet, der Telegramme mit einer Länge von bis zu 1500 Byte bei einer gleichzeitig hohen Übertragungsgeschwindigkeit von bis zu 10 Gbit/sec ermöglicht.

Der Datenbus des Master-Slave-Automatisierungssystems besitzt oft eine Ringstruktur, bei der die einzelnen Slave-Einheiten am Übertragungsweg zu einem Ring zusammengeschlossen sind, wobei jeder Teilnehmer mit zwei Nachbarn und der erste und der letzte Teilnehmer im Ring mit der Master-Einheit verbunden ist. Die Übertragung der Telegramme erfolgt dabei in eine Richtung ausgehend von der Master-Einheit über deren Sendeeinheit zur ersten angeschlossenen Slave-Einheit und von dort zur nächsten, bis die in Datenübertragungsrichtung letzte Slave-Einheit im Ring erreicht ist, und dann von der letzten Slave-Einheit zurück zur Empfangseinheit der Master-Einheit.

Eine Anforderung an Automatisierungssysteme, insbesondere beim Einsatz in der Fertigungsund Prozessautomatisierung, ist eine hohe Fehlertoleranz, also die Fähigkeit des Automatisierungssystems, trotz des Auftretens von Fehlern die geforderte Funktion, d. h. zum Beispiel die Herstellung eines Werkstücks, zu gewährleisten. Fehler im Automatisierungssystem, die ohne Beeinträchtigung überstanden werden müssen, sind dabei neben Fehlern in den Telegrammen auch der Ausfall eines Teilnehmers im Übertragungsweg bzw. eine Unterbrechung des Übertragungsweges, beispielsweise durch physikalisches Durchtrennen des Übertragungsmediums.

Aufgabe der vorliegenden Erfindung ist es, ein Verfahren zum Steuern eines Automatisierungssystems mit Steuerungs-Redundanz bereitzustellen, das eine sichere Steuerung eines Automatisierungsprozesses eines Automatisierungssystems gewährleistet und eine Kompensation einer Fehlfunktion innerhalb des Automatisierungssystems ermöglicht.

Diese Aufgabe wird durch ein Verfahren zum Steuern eines Automatisierungssystems mit Steuerungs-Redundanz und durch ein Automatisierungssystem nach den unabhängigen Ansprüchen gelöst. Bevorzugte Weiterbildungen sind in den abhängigen Ansprüchen angegeben.

Nach einem Aspekt der Erfindung wird ein Verfahren zum Steuern eines Automatisierungssystems mit Steuerungs-Redundanz bereitgestellt, wobei das Automatisierungssystem wenigstens eine erste Steuereinheit, eine zweite Steuereinheit und eine Mehrzahl von Feldgeräten umfasst, die über einen Datenbus mit der ersten Steuereinheit und der zweiten Steuereinheit verbunden sind, wobei die erste Steuereinheit und die zweite Steuereinheit eingerichtet sind, einen Automatisierungsprozess des Automatisierungssystems zyklisch zu steuern,
wobei die erste Steuereinheit umfasst:
eine erste Eingabe-Ausgabe-Einheit zum Empfangen von Eingabedaten der Feldgeräte und zum Aussenden von Ausgabedaten an die Feldgeräte,
eine erste Bearbeitungseinheit zum Ausführen wenigstens einer Steuerungs-Task und zum Analysieren der empfangenen Eingabedaten und zum Erzeugen von Ausgabedaten gemäß der Steuerungs-Task, und
eine erste Ausgabespeichereinheit zum Speichern der generierten Ausgabedaten,
wobei die zweite Steuereinheit umfasst:
   eine zweite Eingabe-Ausgabe-Einheit zum Empfangen von Eingabedaten der Feldgeräte und zum Aussenden von Ausgabedaten an die Feldgeräte,
   eine zweite Bearbeitungs-Einheit zum Ausführen der wenigstens einen Steuerungs-Task und zum Analysieren der empfangenen Eingabedaten und zum Erzeugen von Ausgabedaten gemäß der Steuerungs-Task, und
   eine zweite Ausgabespeichereinheit zum Speichern der generierten Ausgabedaten,
   und wobei das Verfahren umfasst:
      Zyklisches Steuern des Automatisierungsprozesses des Automatisierungssystems durch die erste Steuereinheit in einem ersten Steuerschritt, wobei der erste Steuerschritt in einem n-ten Steuerzyklus ausgeführt wird, wobei der n-te Steuerzyklus zeitlich nach einem Ausführen von n-1 Steuerzyklen ausgeführt wird, und wobei n eine natürliche Zahl >= 2 ist, und wobei der erste Steuerschritt umfasst:
      Empfangen eines n-ten Satzes von Eingabedaten durch die erste Eingabe-Ausgabe-Einheit der ersten Steuereinheit in einem ersten Eingabeempfangsschritt; und
      Aussenden eines (n-x)-ten Satzes von Ausgabedaten durch die erste Eingabe-Ausgabe-Einheit der ersten Steuereinheit an die Feldgeräte in einem ersten Ausgabesendeschritt, wobei x eine natürliche Zahl >=1 ist, wobei der ausgesendete (n-x)-te Satz von Ausgabedaten auf Basis eines in einem (n-x)-ten Steuerzyklus empfangenen (n-x)-ten Satzes von Eingabedaten gemäß der Steuerungs-Task generiert wird, und wobei der (n-x)-te Steuerzyklus um x Steuerzyklen zeitlich vor dem n-ten Steuerzyklus durchgeführt wird;
      Übermitteln des n-ten Satzes von Eingabedaten von der ersten Steuereinheit an die zweite Steuereinheit in einem ersten Datenübermittlungsschritt;
      Bearbeiten des n-ten Satzes von Eingabedaten und Erzeugen eines n-ten Satzes von Ausgabedaten durch die zweite Bearbeitungseinheit der zweiten Steuereinheit in einem ersten Bearbeitungsschritt;
      Speichern des n-ten Satzes von Ausgabedaten in der zweiten Ausgabespeichereinheit der zweiten Steuereinheit in einem ersten Ausgabespeicherschritt;
      Ermitteln einer Fehlfunktion der ersten Steuereinheit während eines (n+x)-ten Steuerzyklus in einem Fehlerermittlungsschritt, wobei der (n+x)-te Steuerzyklus um x Steuerzyklen zeitlich später als der n-te Steuerzyklus ausgeführt wird; und
      Aussenden des n-ten Satzes von Ausgabedaten über die zweite Eingabe-Ausgabe-Einheit der zweiten Steuereinheit an die Mehrzahl von Feldgeräten im (n+x)-ten Steuerzyklus und Steuern des Automatisierungsprozesses auf Basis des n-ten Satzes von Ausgabedaten in einem weiteren Ausgabesendeschritt.

Hierdurch kann der technische Vorteil erreicht werden, dass ein effizientes Verfahren zum Steuern eines Automatisierungssystems mit Steuerredundanz bereitgestellt werden kann. Das Automatisierungssystem umfasst eine erste Steuereinheit und eine zweite Steuereinheit, die jeweils eingerichtet sind, einen Automatisierungsprozess des Automatisierungssystems zyklisch zu steuern. Das Automatisierungssystem umfasst ferner eine Mehrzahl von Feldgeräten, die über einen Datenbus mit der ersten Steuerung und der zweiten Steuerung verbunden sind. Die Feldgeräte können Sensoren bzw. Aktoren des Automatisierungssystems sein, über die der zu steuernde Automatisierungsprozess ausgeführt wird.

In einem ersten Steuerschritt steuert die erste Steuereinheit den Automatisierungsprozess zyklisch an, indem in aufeinanderfolgenden Steuerzyklen Eingabedaten der Feldgeräte mittels einer zur Steuerung des Automatisierungsprozesses geeigneten Steuerungs-Task ausgewertet werden und entsprechende Ausgabedaten generiert werden. Auf Basis der Ausgabedaten können die Feldgeräte zum Ausführen des Automatisierungsprozesses angesteuert werden.

Ein Steuerzyklus ist im Sinne der Anmeldung ein Eingabe-Ausgabe-Zyklus und beschreibt einen Zeitabschnitt ausgehend von einem Empfangen von Eingabedaten durch die erste Steuereinheit oder die zweite Steuereinheit bis zum Aussenden entsprechender Ausgabedaten durch die jeweilige Steuereinheit.

Eingabedaten sind im Sinne der Anmeldung insbesondere Sensordaten von Sensoren des Automatisierungssystems und können beispielsweise in einem Prozessabbild der Eingänge, wie im Betrieb von speicherprogrammierbaren Steuerungen SPS üblich, zusammengefasst sein und sind im Sinne der Anmeldung Teil der Steuerdaten, auf deren Basis eine Steuerung eines Automatisierungsprozesses durchführbar ist. Ausgabedaten sind im Sinne der Anmeldung entsprechende Steuerdaten für Aktoren des Automatisierungssystems und können ebenfalls in einem Prozessabbild der Ausgänge, wie bei SPS üblich, zusammengefasst sein.

Eine Steuerungs-Task ist im Sinne der Anmeldung ein Steuerprogramm zum Steuern des Automatisierungsprozesses. Alternativ kann eine Steuerungs-Task lediglich ein Teilprogramm des Steuerprogramms umfassen, sodass das gesamte Steuerprogramm durch Ausführen mehrerer Steuerungs-Tasks ausgeführt wird. Eine Steuerungs-Task kann eine PLC-Task umfassen, wobei eine SPS-Task ein Steuerprogramm oder Teilprogramm einer Speicherprogrammierbaren Steuerung SPS ist. Alternativ oder zusätzlich kann eine Steuerungs-Task eine NC-Task umfassen, wobei eine NC-Task ein Steuerprogramm oder ein Teilprogramm einer Numerischen Steuerung NC ist.

Zum Ausführen der Steuerungs-Task umfasst jede Steuereinheit eine Bearbeitungseinheit, mittels der die Steuerungs-Tasks bzw. eine Mehrzahl von Steuerungs-Tasks ausgeführt werden können.

Zum zyklischen Steuern des Automatisierungsprozesses führt die erste Steuereinheit somit eine Mehrzahl nacheinander folgender Steuerzyklen durch, in denen jeweils ein Satz von Eingabedaten, der beispielsweise einem Prozessabbild der Eingänge entspricht, empfangen wird, und ein Satz Ausgabedaten, der beispielsweise einem Prozessabbild der Ausgänge entspricht, an die Feldgeräte des Automatisierungssystems ausgesendet wird.

Das Verfahren ist derart ausgelegt, dass während eines Steuerzyklus aktuelle Eingabedaten durch die jeweilige Steuereinheit aufgenommen werden, die einen aktuellen Zustand des zu steuernden Automatisierungsprozesses widerspiegeln. Im gleichen Steuerzyklus werden nach Empfang der aktuellen Eingabedaten Ausgabedaten von der jeweiligen Steuereinheit an die Feldgeräte ausgesendet, die zu einem zeitlich früher durchgeführten Steuerzyklus gemäß der Steuerungs-Task auf Basis zeitlich früher aufgenommener Eingabedaten erzeugt wurden. In einem beliebigen Steuerzyklus werden somit Ausgabedaten an die Feldgeräte ausgesendet, die auf Basis von Eingabedaten durch Ausführen der Steuerungs-Task erzeugt wurden, die zu einem zeitlich früheren Steuerzyklus durch die jeweilige Steuereinheit empfangen wurden.

Ausgabedaten werden somit mit einer zeitlichen Verzögerung relativ zu dem Empfang der jeweiligen Eingabedaten von der entsprechen Steuereinheit an die Feldgeräte ausgesendet. Die zeitliche Verzögerung kann hierbei eine beliebige Anzahl x von Steuerzyklen umfassen. So können beispielsweise Ausgabedaten, die auf Basis von Eingabedaten erzeugt wurden, die zu einem beliebigen n-ten Steuerzyklus empfangen wurden, in einem (n+x)-ten Steuerzyklus ausgesendet werden, wobei der (n+x)-te Steuerzyklus zeitlich um x Steuerzyklen nach dem n-ten Steuerzyklus ausgeführt wird.

Durch die zeitliche Verzögerung des Aussendens der Ausgabedaten relativ zum Empfangen der entsprechenden Eingabedaten kann eine Totzeit erzeugt werden, die für eine Reaktion auf eine Fehlfunktion einer der Steuereinheiten des Automatisierungssystems benutzt werden kann.

Hierzu werden Eingabedaten, die von der ersten Steuereinheit in einem beliebigen n-ten Steuerzyklus empfangen werden, an die zweite Steuereinheit übermittelt. Die an die zweite Steuereinheit übermittelten Eingabedaten werden darauffolgend durch Ausführen der SteuerungsTask durch die zweite Steuereinheit analysiert und es werden entsprechende Ausgabedaten durch die zweite Steuereinheit erzeugt. Das Ausführen der Steuerungs-Task durch die zweite Steuereinheit, insbesondere durch eine Bearbeitungseinheit der zweiten Steuereinheit, und das Erzeugen von entsprechenden Ausgabedaten kann im n-ten Steuerzyklus oder in einem zeitlich späteren Steuerzyklus durchgeführt werden. Die erzeugten Ausgabedaten können darauffolgend in einer Ausgabespeichereinheit der zweiten Steuereinheit gespeichert werden.

Hierdurch kann erreicht werden, dass die zweite Steuereinheit über Ausgabedaten verfügt, die auf den im n-ten Steuerzyklus durch die erste Steuereinheit empfangenen Eingabedaten basieren. In Abhängigkeit der voreingestellten Totzeit, die die Zeitdifferenz zwischen dem Empfangen von Eingabedaten und dem Aussenden auf diesen Eingabedaten basierenden Ausgabedaten beschreibt, können die durch die zweite Verarbeitungseinheit der zweiten Steuereinheit auf Basis der zum n-ten Steuerzyklus durch die erste Steuereinheit empfangenen Eingabedaten erzeugten Ausgabedaten zu einem (n+x)-ten Steuerzyklus, der um die voreingestellte Totzeit von x Steuerzyklen zeitlich später als der n-te Steuerzyklus ausgeführt wird, an die Feldgeräte des Automatisierungssystems ausgesendet werden.

Hierzu führt die erste Steuereinheit in einem Steuerzyklus, der zeitlich zwischen dem n-ten Steuerzyklus und einem (n+x)-ten Steuerzyklus durchgeführt wird, eine Analyse der im n-ten Steuerzyklus aufgenommenen Eingabedaten durch und erzeugt entsprechende Ausgabedaten.

Nach weiterem zyklischen Steuern des Automatisierungsprozesses durch die erste Steuereinheit, bei dem zu jedem Steuerzyklus weitere Eingabedaten aufgenommen werden und Ausgabedaten ausgesendet werden, die auf Eingabedaten basieren, die zu zeitlich früher ausgeführten Steuerzyklus aufgenommen wurden, wird zu einem (n+x)-ten Steuerzyklus eine Fehlfunktion der ersten Steuereinheit ermittelt.

Nach Ermittlung der Fehlfunktion der ersten Steuereinheit sendet die zweite Steuereinheit im (n+x)-ten Steuerzyklus die auf Basis der im n-ten Steuerzyklus durch die erste Steuereinheit aufgenommenen Eingabedaten erzeugten Ausgabedaten an die Feldgeräte des Automatisierungsprozesses aus. Hierdurch kann erreicht werden, dass trotz Fehlfunktion der ersten Steuereinheit, die bis zur Fehlfunktion den Automatisierungsprozess des Automatisierungssystems zyklisch gesteuert hat, nahtlos eine Steuerung des Automatisierungsprozesses fortgesetzt werden kann.

Eine Fehlfunktion einer Steuereinheit ist im Sinne der Anmeldung ein nicht den Anforderungen an den Betrieb einer Steuereinheit entsprechender Betrieb der Steuereinheit. Dies kann sich dadurch äußern, dass die jeweilige Steuereinheit fehlerhafte Ausgabedaten ausgibt. Alternativ kann eine Fehlfunktion umfassen, dass die Steuereinheit fehlerhaft Eingabedaten empfängt, beziehungsweise einen anders gearteten technischen Fehler aufweist, der beispielsweise durch eine entsprechende Fehlermeldung begleitet angezeigt wird. Eine Fehlfunktion einer Steuereinheit kann auch den vollständigen Ausfall einer Steuereinheit umfassen. Ein Ausfall einer Steuereinheit kann hierbei durch einen technischen Fehler der Steuereinheit hervorgerufen sein. Alternativ kann ein Ausfall einer Steuereinheit auch bewusst bewirkt sein, indem die jeweilige Steuereinheit beispielsweise zu Wartungszwecken, oder um diese durch eine andere Steuereinheit auszutauschen, abgeschaltet beziehungsweise aus dem Automatisierungssystem entfernt worden ist.

Durch Aussenden der Ausgabedaten, die auf Basis der im n-ten Steuerzyklus aufgenommenen Eingabedaten erzeugt wurden, durch die zweite Steuereinheit im (n+x)-ten Steuerzyklus, in dem eine Fehlfunktion der ersten Steuereinheit ermittelt wurde, werden trotz Fehlfunktion der ersten Steuereinheit zum vorgesehenen Zeitpunkt die entsprechenden Ausgabedaten zur Steuerung des Automatisierungsprozesses ausgesendet. Hierdurch wird erreicht, dass eine Unterbrechung des Automatisierungsprozesses aufgrund der Fehlfunktion der ersten Steuereinheit vermieden werden kann.

Darüber hinaus wird durch die voreingestellte Totzeit, die dafür sorgt, dass Ausgabedaten relativ zu den entsprechenden Eingabedaten mit einer vorbestimmten zeitlichen Verzögerung ausgesendet werden, erreicht, dass bei ermittelten Fehlfunktionen einer Steuereinheit des Automatisierungssystems die jeweils andere Steuereinheit unmittelbar die Steuerung des Automatisierungsprozesses übernehmen kann, da zu einem beliebigen Steuerzyklus die zweite Steuereinheit bereits über eine Mehrzahl verschiedener Sätze von Ausgabedaten verfügt, die jeweils entweder zu dem jeweiligen Steuerzyklus oder zu einem später auszuführenden Steuerzyklus zur Steuerung des Automatisierungsprozesses auszusenden sind. Durch die bereits vorrätig gespeicherten Sätze von Ausgabedaten ist die zweite Steuereinheit somit zu jedem Zeitpunkt eingerichtet, die Steuerung des Automatisierungsprozesses auf den jeweils relevanten Ausgabedaten zu übernehmen.

Durch die Steuerredundanz kann eine sichere Steuerung des Automatisierungssystems gewährleistet werden. Indem bei Ermittlung einer Fehlfunktion der ersten Steuereinheit der Automatisierungsprozess ohne Verzögerung durch die zweite Steuereinheit fortgesetzt werden kann, können Sicherheitsvorgaben an das jeweilige Automatisierungssystem erfüllt werden, die einen ungestörten Ablauf des zu steuernden Automatisierungsprozesses erlangen. Hierdurch kann ein erhöhter Grad an Sicherheit des Automatisierungssystems erreicht werden.

Nach einer Ausführungsform umfasst das Verfahren ferner:
Zyklisches Steuern des Automatisierungsprozesses des Automatisierungssystems durch die zweite Steuereinheit in einem zweiten Steuerschritt; wobei der zweite Steuerschritt in einem (n+m+x)-ten Steuerzyklus ausgeführt wird, wobei m eine natürliche Zahl >=1 ist, wobei der (n+m+x)-te Steuerzyklus um m Steuerzyklen zeitlich später als der (n+x)-te Steuerzyklus ausgeführt wird, und wobei der zweite Steuerschritt umfasst:
Empfangen eines (n+m+x)-ten Satzes von Eingabedaten durch die zweite Eingabe-Ausgabe-Einheit der zweiten Steuereinheit in einem zweiten Eingabeempfangsschritt; und
Aussenden eines (n+m)-ten Satzes von Ausgabedaten durch die zweite Eingabe-Ausgabe-Einheit der zweiten Steuereinheit an die Feldgeräte in einem zweiten Ausgabesendeschritt, wobei der ausgesendete (n+m)-te Satz von Ausgabedaten auf Basis eines in einem (n+m)-ten Steuerzyklus empfangenen (n+m)-ten Satzes von Eingabedaten gemäß der Steuerungs-Task generiert wird, und wobei der (n+m)-te Steuerzyklus um x Steuerzyklen zeitlich vor dem (n+m+x)-ten Steuerzyklus durchgeführt wird.

Hierdurch kann der technische Vorteil erreicht werden, dass bei Fehlfunktion einer Steuereinheit eine reibungslose unverzögerte Übernahme der Steuerung des Automatisierungsprozesses des Automatisierungssystems durch die jeweils weitere Steuereinheit ermöglicht ist. Hierdurch ist ein unverzögerter Ablauf des Automatisierungsprozesses gewährleistet. Hierzu wird nach Ermittlung der Fehlfunktion der ersten Steuereinheit im (n+x)-ten Steuerzyklus und dem Aussenden des jeweils n-ten Satzes von Ausgabedaten durch die zweite Steuereinheit im (n+x)-ten Steuerzyklus, in den auf den (n+x)-ten Steuerzyklus folgenden Steuerzyklen der Automatisierungsprozess zyklisch durch die zweite Steuereinheit gesteuert.

Hierzu nimmt die zweite Steuereinheit zu jedem Steuerzyklus einen entsprechenden Satz von Eingabedaten auf und sendet einen Satz von Ausgabedaten an die Feldgeräte aus. Hierzu wird weiterhin die fest bestimmte Totzeit berücksichtigt, sodass durch die zweite Steuereinheit zu einem beliebigen Steuerzyklus Ausgabedaten ausgesendet werden, die zu einem zeitlich früher ausgeführten Steuerzyklus basierend auf zeitlich früher empfangen Eingabedaten erzeugt wurden.

Nach einer Ausführungsform umfasst die erste Steuereinheit ferner eine erste Ausgabespeichereinheit zum Speichern von Ausgabedaten, wobei im n-ten Steuerzyklus der (n-x)-te Satz von Ausgabedaten in der ersten Ausgabespeichereinheit gespeichert ist, und wobei der (n-x)-te Satz von Ausgabedaten im (n-x)-ten Steuerzyklus oder in einem beliebigen Steuerzyklus, der zeitlich zwischen dem (n-x)-ten Steuerzyklus und dem n-ten Steuerzyklus angeordnet ist, generiert wird.

Hierdurch kann der technische Vorteil erreicht werden, dass eine beliebig vorbestimmte Totzeit generiert werden kann, die eine Zeitspanne von mehreren aufeinanderfolgenden Steuerzyklen umfasst. Über das Speichern der Ausgabedaten in der ersten Ausgabespeichereinheit der ersten Steuereinheit wird erreicht, dass die erzeugten Ausgabedaten zu einem beliebigen späteren Zeitpunkt, sprich: zu einem beliebigen späteren Steuerzyklus, ausgesendet werden können.

Nach einer Ausführungsform umfasst das Verfahren ferner:
Bearbeiten des n-ten Satzes von Eingabedaten und Erzeugen eines n-ten Satzes von Ausgabedaten durch die erste Bearbeitungseinheit der ersten Steuereinheit in einem zweiten Bearbeitungsschritt;
Speichern des n-ten Satzes von Ausgabedaten in der ersten Ausgabespeichereinheit der ersten Steuereinheit in einem zweiten Ausgabespeicherschritt, wobei das Erzeugen des n-ten Satzes von Ausgabedaten durch die erste Bearbeitungseinheit der ersten Steuereinheit, das Speichern des n-ten Satzes von Ausgabedaten in der zweiten Ausgabespeichereinheit durch die zweite Steuereinheit und das Übermitteln des n-ten Satzes von Eingabedaten von der ersten Steuereinheit an die zweite Steuereinheit im n-ten Steuerzyklus oder in beliebigen Steuerzyklen, die zeitlich zwischen dem n-ten Steuerzyklus und dem (n+x)-ten Steuerzyklus angeordnet sind, durchgeführt werden;
Bearbeiten des (n+m)-ten Satzes von Eingabedaten und Erzeugen eines (n+m)-ten Satzes von Ausgabedaten durch die zweite Bearbeitungseinheit der zweiten Steuereinheit in einem dritten Bearbeitungsschritt;
Speichern des (n+m)-ten Satzes von Ausgabedaten in der zweiten Ausgabespeichereinheit der zweiten Steuereinheit in einem dritten Ausgabespeicherschritt, wobei das Erzeugen des (n+m)-ten Satzes von Ausgabedaten durch die zweite Bearbeitungseinheit der zweiten Steuerungseinheit und das Speichern des (n+m)-ten Satzes von Ausgabedaten in der zweiten Ausgangsspeichereinheit der zweiten Steuereinheit im (n+m)-ten Steuerzyklus oder in einem beliebigen Steuerzyklus, der zeitlich zwischen dem (n+m)-ten Steuerzyklus und dem (n+m+x)-ten Steuerzyklus angeordnet ist, durchgeführt werden;
Bearbeiten des (n+m+x)-ten Satzes von Eingabedaten und Erzeugen eines (n+m+x)-ten Satzes von Ausgabedaten durch die zweite Bearbeitungseinheit der zweiten Steuereinheit in einem vierten Bearbeitungsschritt; und
Speichern des (n+m+x)-ten Satzes von Ausgabedaten in der zweiten Ausgabespeichereinheit der zweiten Steuereinheit in einem vierten Ausgabespeicherschritt, wobei das Erzeugen des (n+m+x)-ten Satzes von Ausgabedaten durch die zweite Bearbeitungseinheit der zweiten Steuerungseinheit und das Speichern des (n+m+x)-ten Satzes von Ausgabedaten in der zweiten Ausgangsspeichereinheit der zweiten Steuereinheit im (n+m+x)-ten Steuerzyklus oder in einem beliebigen Steuerzyklus, der zeitlich zwischen dem (n+m+x)-ten Steuerzyklus und einem (n+m+2x)-ten Steuerzyklus angeordnet ist, durchgeführt wird.

Hierdurch kann der technische Vorteil erreicht werden, dass eine möglichst effiziente Aufteilung verschiedener Prozesse, die durch die erste Steuereinheit oder die zweite Steuereinheit durchgeführt werden, ermöglicht ist. Hierdurch wird ein möglichst effizientes Verfahren zum Steuern eines Automatisierungssystems erreicht.

Hierzu wird im n-ten Steuerzyklus durch die erste Bearbeitungseinheit der ersten Steuereinheit ein n-ter Satz von Eingabedaten, der während des n-ten Steuerzyklus von der ersten Steuereinheit empfangen wird, analysiert und es wird ein entsprechender n-ter Satz von Ausgabedaten erzeugt. Dieser n-te Satz von Ausgabedaten wird in der ersten Ausgabespeichereinheit der ersten Steuereinheit gespeichert. Das Erzeugen des n-ten Satzes von Ausgabedaten bzw. das Speichern des n-ten Satzes von Ausgabedaten in der ersten Ausgabespeichereinheit kann hierbei im n-ten Steuerzyklus oder aber in einem beliebigen Steuerzyklus durchgeführt werden, der zwischen dem n-ten Steuerzyklus und dem (n+x)-ten Steuerzyklus durchgeführt wird. Hierdurch wird erreicht, dass das Erzeugen des n-ten Satzes von Ausgabedaten bzw. das Speichern des n-ten Satzes von Ausgabedaten zu einem Zeitpunkt durchgeführt werden kann, zu dem eine entsprechende Rechenzeit des Prozessors zur Verfügung steht.

Durch Verschieben der Erzeugung bzw. Speicherung der Ausgabedaten auf einen geeigneten Zeitpunkt kann vermieden werden, dass andere Prozesse wegen der Durchführung des Erzeugens bzw. des Speicherns der Ausgabedaten gestoppt bzw. verzögert werden müssen. Ferner kann hierdurch die benötige Rechenkapazität verringert werden, indem Prozesse nicht zwingend in einem Steuerzyklus durchgeführt werden müssen, sondern diese auf beliebige andere Zeitpunkte verschoben werden können, zu denen eine benötigte Rechenkapazität zur Verfügung steht.

Analog kann die Bearbeitung eines (n+m)-ten Satzes von Eingabedaten, die in einem (n+m)-ten Steuerzyklus von der zweiten Steuereinheit empfangen wurden, und das Erzeugen von (n+m)-ten Satzes von Ausgabedaten bzw. das Speichern des (n+m)-ten Satzes von Ausgabedaten entweder während des (n+m)-ten Steuerzyklus oder während eines beliebigen Steuerzyklus durchgeführt werden, der zeitlich zwischen dem (n+m)-ten Steuerzyklus und dem (n+m+x)-ten Steuerzyklus durchgeführt werden. Hierdurch kann wiederum Rechenkapazität eingespart werden, indem die genannten Prozesse zu Zeitpunkten durchgeführt werden können, zu denen die jeweilige Rechenkapazität zur Verfügung steht.

Analog kann mit der Erzeugung eines (n+m+x)-ten Satzes von Ausgabedaten durch die zweite Verarbeitungseinheit bzw. mit dem Speichern des erzeugten (n+m+x)-ten Satzes von Ausgabedaten verfahren werden, die ebenfalls entweder während des (n+m+x)-ten Steuerzyklus oder aber während eines beliebigen Steuerzyklus durchgeführt werden können, der zeitlich zwischen dem (n+m+x)-ten und einem (n+m+2x)-ten Steuerzyklus liegt.

Nach einer Ausführungsform umfasst das Verfahren ferner:
Empfangen eines weiteren n-ten Satzes von Eingabedaten durch die zweite Eingabe-Ausgabe-Einheit der zweiten Steuereinheit im n-ten Steuerzyklus in einem weiteren Eingabeempfangsschritt;
Vergleichen des n-ten Satzes von Eingabedaten der ersten Steuereinheit mit dem weiteren n-ten Satz von Eingabedaten der zweiten Steuereinheit in einem Vergleichsschritt;
Ermitteln einer Abweichung zwischen dem n-ten Satz von Eingabedaten der ersten Steuereinheit und dem weiteren n-ten Satz von Eingabedaten der zweiten Steuereinheit in einem Abweichungsermittlungsschritt; und
Ermitteln eines Fehlers in einer Datenübertragung zwischen den Feldgeräten und der ersten Steuereinheit in einem Übertragungsfehlerermittlungsschritt.

Hierdurch kann der technische Vorteil erreicht werden, dass gewährleistet werden kann, dass die erste Steuereinheit und die zweite Steuereinheit auf identischen Eingabedaten arbeiten. Hierdurch wird eine fehlerfreie Steuerung des Automatisierungsprozesses erreicht. Hierzu werden durch die zweite Eingabe-Ausgabe-Einheit der zweiten Steuereinheit im n-ten Steuerzyklus ein n-ter Satz von Eingabedaten aufgenommen und die Eingabedaten des durch die zweite Steuereinheit aufgenommenen n-ten Satzes mit den Eingabedaten des durch die erste Steuereinheit aufgenommenen n-ten Satzes verglichen. Wird eine Abweichung zwischen dem n-ten Satz von Eingabedaten der ersten Steuereinheit und dem n-ten Satz von Eingabedaten der zweiten Steuereinheit ermittelt, so wird ein Fehler in einer Datenübertragung zwischen den Feldgeräten und der ersten Steuereinheit detektiert. Dieser Fehler kann als eine Fehlfunktion der ersten Steuereinheit interpretiert werden, sodass bei Ermittlung des Fehlers in der Datenübertragung zwischen den Feldgeräten und der ersten Steuereinheit die zweite Steuereinheit die Steuerung des Automatisierungsprozesses übernimmt. Hierdurch kann erreicht werden, dass die erste Steuerung und die zweite Steuerung auf identischen Eingabedaten arbeiten bzw. eine Abweichung der durch die eine Steuereinheit empfangenen Eingabedaten von denen durch die weitere Steuereinheit empfangenen Eingabedaten eine Fehlfunktion ermittelt wird.

Nach einer Ausführungsform sind in der ersten Ausgabespeichereinheit der ersten Steuereinheit und/oder in der zweiten Ausgabespeichereinheit der zweiten Steuereinheit während des n-ten Steuerzyklus eine Mehrzahl von Sätzen von Ausgabedaten gespeichert, wobei die gespeicherten Sätze von Ausgabedaten jeweils auf Basis eines in einem Steuerzyklus empfangenen Satzes von Eingabedaten gemäß der Steuerungs-Task generiert werden, und wobei die jeweiligen Steuerzyklen zeitlich zwischen dem (n-x)-ten Steuerzyklus und dem n-ten Steuerzyklus durchgeführt werden, und wobei die jeweiligen Sätze von Ausgabedaten in entsprechenden Steuerzyklen, die zeitlich zwischen dem n-ten Steuerzyklus und dem (n+x)-ten Steuerzyklus ausgeführt werden, von der ersten Eingabe-Ausgabe-Einheit der ersten Steuereinheit an die Feldgeräte ausgesendet werden.

Hierdurch kann der technische Vorteil erreicht werden, dass bei Fehlfunktion einer Steuereinheit unverzögert die weitere Steuereinheit des Automatisierungssystems die Steuerung des Automatisierungsprozesses übernehmen kann. Eine Unterbrechung des Automatisierungsprozesses kann somit vermieden werden. Indem zu einem beliebigen Steuerzyklus in der ersten Ausgabespeichereinheit der ersten Steuereinheit und/oder in der zweiten Ausgabespeichereinheit der zweiten Steuereinheit eine Mehrzahl von Sätzen von Ausgabedaten gespeichert sind, die jeweils auf Basis von Eingabedaten erzeugt sind, die zu einem zeitlich früheren Steuerzyklus empfangen wurden und die gemäß der fest definierten Totzeit zu einem zeitlich späteren Steuerzyklus ausgesendet werden, kann bei einer ermittelten Fehlfunktion einer der Steuereinheiten die jeweils andere Steuereinheit unmittelbar einen entsprechenden Satz von Ausgabedaten zum Steuern des Automatisierungsprozesses an die Feldgeräte aussenden.

Somit ist vermieden, dass zum Fortsetzen des Automatisierungsprozesses bei Ermittlung einer Fehlfunktion einer der Steuereinheiten die jeweils andere Steuereinheit zunächst entsprechende Ausgabedaten erzeugen muss, wodurch der Automatisierungsprozess gegebenenfalls verzögert oder unterbrochen werden muss. Indem die benötigten Sätze von Ausgabedaten zu jedem Zeitpunkt bereits in den Ausgabespeichereinheiten der Steuereinheiten gespeichert sind, kann von jeder Steuereinheit zu einem beliebigen Steuerzyklus auf die entsprechenden benötigten Ausgabedaten zurückgegriffen und diese zur Steuerung des Automatisierungsprozesses ausgesendet werden.

Nach einer Ausführungsform sind in der zweiten Ausgabespeichereinheit der zweiten Steuereinheit während des (n+m+x)-ten Steuerzyklus eine Mehrzahl von Sätzen von Ausgabedaten gespeichert, wobei die gespeicherten Sätze von Ausgabedaten jeweils auf Basis eines in einem Steuerzyklus empfangenen Satzes von Eingabedaten gemäß der Steuerungs-Task generiert wurden, und wobei die jeweiligen Steuerzyklen zeitlich zwischen dem (n+m)-ten Steuerzyklus und dem (n+m+x)-ten Steuerzyklus durchgeführt werden, und wobei die jeweiligen Sätze von Ausgabedaten in entsprechenden Steuerzyklen, die zeitlich zwischen dem (n+m+x)-ten Steuerzyklus und einem (n+m+2x)-ten Steuerzyklus ausgeführt werden, von der zweiten Eingabe-Ausgabe-Einheit der zweiten Steuereinheit an die Feldgeräte ausgesendet werden.

Hierdurch kann der technische Vorteil erreicht werden, dass für einen beliebigen Steuerzyklus, nachdem eine Fehlfunktion der ersten Steuereinheit ermittelt wurde, die Totzeit zwischen Empfangen von Eingabedaten und Aussenden entsprechender Ausgabedaten durch die zweite Steuereinheit beibehalten werden kann. Hierzu sind zu einem beliebigen Steuerzyklus nach Ermittlung der Fehlfunktion der ersten Steuereinheit in der zweiten Ausgabespeichereinheit der zweiten Steuereinheit eine Mehrzahl von Sätzen von Ausgabedaten gespeichert, wobei die jeweiligen Ausgabedaten auf Eingabedaten basieren, die zu einem zeitlich früheren Steuerzyklus empfangen wurden. Durch die Mehrzahl von Sätzen von Ausgabedaten, die in der Ausgabespeichereinheit gespeichert ist, kann zu jedem Steuerzyklus ein entsprechender Satz von Ausgabedaten an die jeweiligen Feldgeräte ausgesendet werden, sodass eine Steuerung des Automatisierungsprozesses durch die zweite Steuereinheit fortgesetzt werden kann. Hierdurch kann ein fehlerfreier Betrieb des Automatisierungssystems gewährleistet werden.

Nach einer Ausführungsform umfasst die erste Steuereinheit eine erste Eingabespeichereinheit zum Speichern von Eingabedaten, wobei die zweite Steuereinheit eine zweite Eingabespeichereinheit zum Speichern von Eingabedaten umfasst, und wobei das Verfahren ferner umfasst: Speichern des n-ten Satzes von Eingabedaten in der ersten Eingabespeichereinheit der ersten Steuereinheit im n-ten Steuerzyklus in einem ersten Eingabespeicherschritt; und/oder Speichern des von der ersten Steuereinheit an die zweite Steuereinheit übertragenen n-ten Satzes von Eingabedaten in der zweiten Eingabespeichereinheit der zweiten Steuereinheit im n-ten Steuerzyklus in einem zweiten Eingabespeicherschritt.

Hierdurch kann der technische Vorteil erreicht werden, dass das Erzeugen von Ausgabedaten durch Ausführen der Steuerungs-Task auf entsprechenden Eingabedaten zu einem beliebigen Zeitpunkt durchgeführt werden kann. Hierzu umfassen die erste Steuereinheit eine erste Eingabespeichereinheit und die zweite Steuereinheit eine zweite Eingabespeichereinheit, in denen jeweils Eingabedaten gespeichert werden können. Bei Empfang der Eingabedaten zu einem beliebigen n-ten Steuerzyklus können somit die empfangenen Eingabedaten in der jeweiligen Eingabespeichereinheit gespeichert werden, sodass eine Analyse der Eingabedaten durch Ausführung der entsprechenden Steuerungs-Task und ein Erzeugen entsprechender Ausgabedaten auf einen beliebigen Zeitpunkt verlegt werden kann, sodass eine Analyse der empfangen Eingabedaten nicht zwingend während des n-ten Steuerzyklus durchgeführt werden muss.

Hierdurch kann Rechenkapazität eingespart werden, indem der Prozess auf einen günstigen Zeitpunkt verlegt werden kann, zu dem die entsprechende Rechenkapazität zur Verfügung steht. Wenn somit während eines Steuerzyklus mehrere Prozesse durchgeführt werden müssen, so kann das Erzeugen von Ausgabedaten auf einen späteren Steuerzyklus verschoben werden. Alternativ kann die Analyse der empfangenen Eingabedaten und das Erzeugen entsprechender Ausgabedaten auch zwischen verschiedenen Steuerzyklen bzw. in einem Zeitraum durchgeführt werden, der mehrere Steuerzyklen umfasst. Hierdurch ist eine erhöhte Flexibilität und Effizienz des Verfahrens zum Steuern des Automatisierungssystems erreicht.

Nach einer Ausführungsform weist die erste Steuereinheit einen ersten Speicherbereich zum Speichern von ersten Steuerdaten der ersten Steuereinheit auf, wobei die zweite Steuereinheit einen zweiten Speicherbereich zum Speichern von zweiten Steuerdaten der zweiten Steuereinheit aufweist, wobei der erste Speicherbereich die erste Eingabespeichereinheit und die erste Ausgabespeichereinheit umfasst, und wobei der zweite Speicherbereich die zweite Eingabespeichereinheit und die zweite Ausgabespeichereinheit umfasst, ferner umfassend:
Generieren einer Speicherkopie in einem Speicherkopierschritt, wobei die Speicherkopie eine Kopie des ersten Speicherbereichs der ersten Steuereinheit ist und die in der ersten Eingabespeichereinheit gespeicherten Sätze von Eingabedaten und die in der ersten Ausgabespeichereinheit gespeicherten Sätze von Ausgabedaten umfasst, wobei die Speicherkopie zu einem beliebigen Steuerzyklus, der zeitlich vor dem n-ten Steuerzyklus durchgeführt wird, durchgeführt wird und wenigstens einen zum Zeitpunkt des jeweiligen Steuerzyklus in der ersten Eingabespeichereinheit gespeicherten Satz von Eingabedaten und/oder wenigstens einen zum Zeitpunkt des jeweiligen Steuerzyklus in der ersten Ausgabespeichereinheit gespeicherten Satz von Ausgabedaten umfasst;
Übermitteln der Speicherkopie an die zweite Steuereinheit in einem Kopieübermittlungsschritt; Speichern des wenigstens einen Satzes von Eingabedaten der Speicherkopie in der zweiten Eingabespeichereinheit der zweiten Steuereinheit in einem ersten Kopiespeicherschritt; und/oder
Speichern des wenigstens einen Satzes von Ausgabedaten der Speicherkopie in der zweiten Ausgabespeichereinheit der zweiten Steuereinheit in einem zweiten Kopiespeicherschritt; Bearbeiten des wenigstens einen Satzes von Eingabedaten der Speicherkopie und Erzeugen eines entsprechenden Satzes von Ausgabedaten durch die zweite Bearbeitungseinheit der zweiten Steuereinheit in einem fünften Bearbeitungsschritt; und
Speichern des erzeugten Satzes von Ausgabedaten in der zweiten Ausgabespeichereinheit der zweiten Steuereinheit in einem fünften Ausgabespeicherschritt.

Hierdurch kann der technische Vorteil erreicht werden, dass gewährleistet ist, dass die erste Steuereinheit und die zweite Steuereinheit auf identischen Eingabe- und Ausgabedaten agieren. Insbesondere beim Auffahren bzw. Starten des Automatisierungsprozesses kann hierbei durch Erstellen einer Speicherkopie, die die Steuerdaten der ersten Steuereinheit umfasst, und durch Übermitteln der Speicherkopie an die zweite Steuereinheit erreicht werden, dass die zweite Steuereinheit auf den Steuerdaten der ersten Steuereinheit betrieben werden kann. Die Steuerdaten, die in der Speicherkopie gespeichert sind, können hierbei Eingabedaten und Ausgabedaten der ersten Steuereinheit umfassen, die zu zeitlich früher ausgeführten Steuerzyklen aufgenommen bzw. erzeugt wurden.

Die erste Steuereinheit und die zweite Steuereinheit können hierbei als separate Module ausgebildet sein, die jeweils separate voneinander getrennte eigenständige Speicherbereiche umfassen. Beispielsweise können die erste Steuereinheit und die zweite Steuereinheit als jeweils individuelle Steuergeräte ausgebildet sein.

Ein erster Speicherbereich der ersten Steuereinheit kann hierbei die erste Eingabespeichereinheit und die erste Ausgabespeichereinheit umfassen. Die Steuerdaten der ersten Steuereinheit können hierbei die in der ersten Eingabespeichereinheit gespeicherten Sätze von Eingabedaten bzw. die in der ersten Ausgabespeichereinheit gespeicherten Sätze von Ausgabedaten umfassen. Durch Erstellen der Speicherkopie und Übermitteln der Speicherkopie an die zweite Steuereinheit können somit die in der Speicherkopie gespeicherten Eingabedaten bzw. Ausgabedaten in die entsprechende Eingabespeichereinheit bzw. Ausgabespeichereinheit der zweiten Steuereinheit gespeichert werden. Auf Basis der in der Ausgabespeichereinheit gespeicherten Ausgabedaten kann somit durch die zweite Steuereinheit der Automatisierungsprozess bei einer Fehlfunktion der ersten Steuereinheit gesteuert werden. Alternativ können auf Basis der Sätze von Eingabedaten, die mit der Speicherkopie an die zweite Steuereinheit übermittelt werden, durch Ausführen der Steuerungs-Task entsprechende Sätze von Ausgabedaten erzeugt werden. Auf Basis der erzeugten Ausgabedaten kann bei Ermittlung einer Fehlfunktion der ersten Steuereinheit durch die zweite Steuereinheit der Automatisierungsprozess gesteuert werden. Durch das Erstellen der Speicherkopie und das Übermitteln der Speicherkopie an die zweite Steuereinheit kann somit erreicht werden, dass zu jedem Zeitpunkt die erste Steuereinheit und die zweite Steuereinheit auf identischen Eingabedaten ausgeführt werden, sodass eine fehlerfreie Steuerung des Automatisierungsprozesses entweder durch die erste Steuereinheit oder die zweite Steuereinheit erreicht werden kann.

Die Speicherkopie kann ferner einen Programmzustand des Steuerprogramms beziehungsweise des Automatisierungssystems umfassen, durch den ein aktueller Zustand des gesteuerten Automatisierungsprozesses beschrieben ist. Im Programmzustand kann jegliche Information gespeichert sein, die für den Betrieb des Automatisierungsprozesses benötigt ist. Diese Information kann aktuelle Werte einzelner zu steuernder Komponenten des Automatisierungsprozesses umfassen, wie beispielsweise Messwerte, die einen Betriebszustand einer zu steuernden Maschine beschreiben. Durch die Übertragung der Speicherkopie an die zweite Steuerung wird erreicht, dass der Automatisierungsprozess durch die zweite Steuerung auf dem gleichen Zustand gesteuert werden kann, wie zuvor durch die erste Steuereinheit. Somit kann nur ein unmittelbarer Übergang der Steuerung durch die erste Steuereinheit zur Steuerung des Automatisierungsprozesses durch die zweite Steuereinheit erreicht werden, wobei die Steuerung des Automatisierungsprozesses unterbrechungslos auf dem aktuellen Zustand durch die zweite Steuereinheit fortgesetzt werden kann.

Nach einer Ausführungsform umfasst die erste Steuereinheit eine erste Kommunikationsschnittstelle zum Empfangen und Aussenden von Kommunikationsdaten, wobei die zweite Steuereinheit eine zweite Kommunikationsschnittstelle zum Empfangen und Aussenden von Kommunikationsdaten aufweist, ferner umfassend:
Empfangen von n-ten Kommunikationsdaten durch die erste Kommunikationseinheit der ersten Steuereinheit im n-ten Steuerzyklus in einem ersten Nachrichtempfangsschritt;
Bestimmen von n-ten Antwortdaten auf die empfangenen n-ten Kommunikationsdaten in einem ersten Antworterzeugungsschritt;
Speichern der n-ten Antwortdaten in der ersten Ausgabespeichereinheit der ersten Steuereinheit in einem ersten Antwortspeicherschritt, wobei die n-ten Antwortdaten in der ersten Ausgabespeichereinheit gemeinsam mit dem n-ten Satz von Ausgabedaten gespeichert sind; Aussenden der n-ten Antwortdaten über die erste Kommunikationsschnittstelle der ersten Steuereinheit im (n+x)-ten Steuerzyklus in einem ersten Antwortsendeschritt; und/oder Empfangen von (n+m+x)-ten Kommunikationsdaten durch die zweite Kommunikationseinheit der zweiten Steuereinheit im (n+m+x)-ten Steuerzyklus in einem zweiten Nachrichtempfangsschritt;
Bestimmen von (n+m+x)-ten Antwortdaten auf die empfangenen (n+m+x)-ten Kommunikationsdaten in einem zweiten Antworterzeugungsschritt;
Speichern der (n+m+x)-ten Antwortdaten in der zweiten Ausgabespeichereinheit der zweiten Steuereinheit in einem zweiten Antwortspeicherschritt, wobei die (n+m+x)-ten Kommunikationsdaten in der zweiten Ausgabespeichereinheit gemeinsam mit dem (n+m+x)-ten Satz von Ausgabedaten gespeichert sind; und
Aussenden der (n+m+x)-ten Antwortdaten über die zweite Kommunikationsschnittstelle der zweiten Steuereinheit im (n+m+2x)-ten Steuerzyklus in einem zweiten Antwortsendeschritt. Hierdurch kann der technische Vorteil erreicht werden, dass neben Steuerdaten auch Kommunikationsdaten ausgetauscht werden können, wodurch eine Kommunikation zwischen den Steuereinheiten bzw. zwischen Modulen des Automatisierungssystems ermöglicht ist. Hierdurch kann eine effiziente Steuerung des Automatisierungssystems bereitgestellt werden.

Kommunikationsdaten sind im Sinne der Anmeldung Daten einer Datenkommunikation zwischen Komponenten des Automatisierungssystems und einer Steuereinheit des Automatisierungssystems. Komponenten können beispielsweise eine HMI Human-Machine-Interface oder eine andere Eingabeeinheit umfassen, mittels der ein Nutzer Zugang zu der Steuereinheit des Automatisierungssystems ermöglicht ist.

Nach einem zweiten Aspekt der Erfindung wird ein Automatisierungssystem mit wenigstens einer ersten Steuereinheit und einer zweiten Steuereinheit und einer Mehrzahl von Feldgeräten bereitgestellt, die über einen Datenbus mit der ersten Steuereinheit und der zweiten Steuereinheit verbunden sind, wobei die erste Steuereinheit und die zweite Steuereinheit eingerichtet sind, einen Automatisierungsprozess des Automatisierungssystems zyklisch zu steuern, wobei die erste Steuereinheit umfasst:
eine erste Eingabe-Ausgabe-Einheit zum Empfangen von Eingabedaten der Feldgeräte und zum Aussenden von Ausgabedaten an die Feldgeräte,
eine erste Bearbeitungseinheit zum Ausführen wenigstens einer Steuerungs-Task und zum Analysieren der empfangenen Eingabedaten und zum Erzeugen von Ausgabedaten gemäß der Steuerungs-Task,
eine erste Eingabespeichereinheit zum Speichern der empfangenen Eingabedaten, und
eine erste Ausgabespeichereinheit zum Speichern der generierten Ausgabedaten,
wobei die zweite Steuereinheit umfasst:
   eine zweite Eingabe-Ausgabe-Einheit zum Empfangen von Eingabedaten der Feldgeräte und zum Aussenden von Ausgabedaten an die Feldgeräte,
   eine zweite Bearbeitungs-Einheit zum Ausführen der wenigstens einen Steuerungs-Task und zum Analysieren der empfangenen Eingabedaten und zum Erzeugen von Ausgabedaten gemäß der Steuerungs-Task,
   eine zweite Eingabespeichereinheit zum Speichern von Eingabedaten, und
   eine zweite Ausgabespeichereinheit zum Speichern der generierten Ausgabedaten, und wobei das Automatisierungssystem ausgebildet ist, das erfindungsgemäße Verfahren auszuführen.

Hierdurch kann der technische Vorteil erreicht werden, dass ein Automatisierungssystem bereitgestellt werden kann, das eingerichtet ist, das erfindungsgemäße Verfahren zum Steuern eines Automatisierungssystems mit Steuerredundanz mit den oben genannten Vorteilen auszuführen.

Nach einer Ausführungsform weist die erste Steuereinheit einen ersten Speicherbereich zum Speichern von ersten Steuerdaten der ersten Steuereinheit auf, wobei die zweite Steuereinheit einen zweiten Speicherbereich zum Speichern von zweiten Steuerdaten der zweiten Steuereinheit aufweist, wobei der erste Speicherbereich die erste Eingabespeichereinheit und die erste Ausgabespeichereinheit umfasst, und wobei der zweite Speicherbereich die zweite Eingabespeichereinheit und die zweite Ausgabespeichereinheit umfasst.

Hierdurch kann der technische Vorteil erreicht werden, dass durch den ersten Speicherbereich der ersten Steuereinheit und den zweiten Speicherbereich der zweiten Steuereinheit die Steuerdaten der Steuereinheiten voneinander getrennt gespeichert werden können, sodass die erste Steuereinheit und die zweite Steuereinheit als separate Einheiten betrieben werden können. Die erste Steuereinheit und die zweite Steuereinheit können insbesondere als individuelle Steuergeräte ausgebildet sein. Hierdurch kann erreicht werden, dass die erste Steuereinheit und die zweite Steuereinheit unabhängig voneinander betrieben werden können, sodass bei Fehlfunktion einer Steuereinheit die jeweils andere Steuereinheit die Steuerung des Automatisierungsprozesses unbeeinflusst übernehmen kann. Hierdurch kann eine redundante Steuerung des Automatisierungssystems erreicht werden. Eine Fehlfunktion einer Steuereinheit bleibt so ohne Einfluss auf eine Funktionsfähigkeit der jeweils anderen Steuereinheit.

Nach einer Ausführungsform sind die erste Steuereinheit und die zweite Steuereinheit über eine Datenverbindung miteinander verbunden und eingerichtet, mittels einer Datenkommunikation einen Datenaustausch auszuführen.

Hierdurch kann der technische Vorteil erreicht werden, dass eine Datenkommunikation zwischen der ersten Steuereinheit und der zweiten Steuereinheit ermöglicht ist. Über die Datenverbindung kann ein Datenaustausch zwischen der ersten Steuereinheit und der zweiten Steuereinheit bereitgestellt werden. Hierdurch kann eine Synchronisation der ersten Steuereinheit und der zweiten Steuereinheit bewirkt werden, die für eine Steuerredundanz benötigt wird. Über die Synchronisation der ersten Steuereinheit und der zweiten Steuereinheit kann gewährleistet werden, dass bei Fehlfunktion einer Steuereinheit die jeweils andere Steuereinheit ohne Unterbrechung des Automatisierungsprozesses die Steuerung des Automatisierungsprozesses fortsetzen kann. Hierdurch ist eine effiziente Steuerung des Automatisierungssystems gewährleistet.

Nach einer Ausführungsform umfasst das Automatisierungssystem ferner eine erste Verbindungseinheit und eine zweite Verbindungseinheit, wobei die erste Verbindungseinheit und die zweite Verbindungseinheit über den Datenbus mit den Feldgeräten und der ersten Steuereinheit und der zweiten Steuereinheit verbunden sind, und wobei die erste Verbindungseinheit und die zweite Verbindungseinheit eingerichtet sind, einen Datenfluss von Eingabedaten von Feldgeräten zu der ersten Steuereinheit und der zweiten Steuereinheit und/oder einen Datenfluss von Ausgabedaten von der ersten Steuereinheit und/oder von der zweiten Steuereinheit zu den Feldgeräten zu steuern.

Hierdurch kann der technische Vorteil erreicht werden, dass die Datensignale, die zwischen den Steuereinheiten und den Feldgeräten des Automatisierungssystems zum Steuern des Automatisierungsprozesses ausgetauscht werden, den jeweils adressierten Empfänger erreichen. Insbesondere bei Ermittlung einer Fehlfunktion einer der Steuereinheiten und bei Übernahme der Steuerung des Automatisierungsprozesses durch die jeweils andere Steuereinheit können die von den Feldgeräten ausgesendeten Datensignale an die jeweils die Steuerung des Automatisierungsprozesses übernommene Steuereinheit durch die erste Verbindungseinheit bzw. die zweite Verbindungseinheit übermittelt werden. Hierdurch kann eine reibungslose Steuerung des Automatisierungsprozesses durch die erste Steuereinheit und die zweite Steuereinheit erreicht werden, indem über die erste Verbindungseinheit bzw. die zweite Verbindungseinheit entsprechenden Ausgabedaten an die entsprechende Steuereinheit bzw. die Feldgeräte übermittelt werden.

Nach einer Ausführungsform umfasst die erste Steuereinheit eine weitere erste Bearbeitungseinheit zum Ausführen wenigstens einer weiteren Steuerungs-Task und zum Analysieren der empfangenen Eingabedaten und zum Erzeugen von weiteren Ausgabedaten gemäß der weiteren Steuerungs-Task, wobei die zweite Steuereinheit eine weitere zweite Bearbeitungseinheit zum Ausführen der wenigstens einen weiteren Steuerungs-Task und zum Analysieren der empfangenen Eingabedaten und zum Erzeugen von Ausgabedaten gemäß der weiteren Steuerungs-Task umfasst, und wobei die Steuerungs-Task durch die erste Bearbeitungseinheit und die weitere Steuerungs-Task durch die weitere erste Bearbeitungseinheit der ersten Steuereinheit und/oder die Steuerungs-Task durch die zweite Bearbeitungseinheit und die weitere Steuerungs-Task durch die weitere zweite Bearbeitungseinheit der zweiten Steuereinheit zeitgleich ausführbar sind.

Hierdurch kann der technische Vorteil erreicht werden, dass eine Multitaskingfunktion des Automatisierungssystems bereitgestellt werden kann. Indem die erste Steuereinheit eine weitere erste Bearbeitungseinheit und die zweite Steuereinheit eine weitere zweite Bearbeitungseinheit umfassen, die jeweils eingerichtet sind, eine weitere Steuerungs-Task auszuführen, kann erreicht werden, dass durch die jeweilige Steuereinheit mehrere Steuerungs-Tasks gegebenenfalls zeitgleich ausgeführt werden können. Hierdurch kann eine effiziente Steuerung des Automatisierungsprozesses gewährleistet werden, bei der durch zeitgleiche Ausführung einer Mehrzahl von Steuerungs-Tasks eine entsprechend beschleunigte Verarbeitung der aufgenommenen Eingabedaten ermöglicht ist. Hierdurch ist eine beschleunigte Abarbeitung des Steuerprogramms innerhalb eines Steuerzyklus bzw. einer Mehrzahl von Steuerzyklen erzielbar. Dies gewährleistet eine Bearbeitung eines größeren Datenvolumens von Eingabedaten innerhalb eines Steuerzyklus, wodurch eine beschleunigte und damit verbunden effizientere Steuerung des Automatisierungsprozesses ermöglicht ist. Verschiedene Steuerungs-Tasks können hierbei auf unterschiedlichen Prozessorkernen ausgeführt werden, sodass eine zeitgleiche Bearbeitung der verschiedenen Steuerungs-Tasks ermöglicht ist. Dies verringert die Bearbeitungszeit des Steuerprogramms, wodurch ein höheres Datenvolumen pro Steuerzyklus bearbeitet werden kann.

Nach einer Ausführungsform sind die erste Eingabespeichereinheit und die erste Ausgabespeichereinheit der ersten Steuereinheit und die zweite Eingabespeichereinheit und die zweite Ausgabespeichereinheit der zweiten Steuereinheit als First-In-First-Out-Speicher ausgebildet.

Hierdurch kann der technische Vorteil erreicht werden, dass eine möglichst einfache Ausgestaltung der Eingabespeichereinheiten und der Ausgabespeichereinheiten der ersten und zweiten Steuereinheit bereitgestellt werden kann. Durch Ausbildung der Eingabespeichereinheiten und der Ausgabespeichereinheiten als First-In-First-Out-Speicher ist eine möglichst einfache Handhabung der Speichereinheiten ermöglicht, in der problemlos Eingabedaten bzw. Ausgabedaten zu früheren Zeitpunkten gespeichert werden können, die in einem späteren Steuerzyklus weiterverarbeitet werden können. Durch die jeweilige Reihenfolge der einzelnen Sätze von Eingabedaten bzw. Ausgabedaten, in der diese in der jeweiligen Speichereinheit gespeichert sind, kann die Abarbeitung der einzelnen Sätze von Eingabedaten und Ausgabedaten zum jeweils richtigen Steuerzyklus geregelt werden, sodass jeder Satz von Eingabedaten bzw. Ausgabedaten in dem jeweils vorgesehenen Steuerzyklus bearbeitet werden kann. Hierdurch kann eine lückenlose Steuerung des Automatisierungsprozesses gewährleistet werden.

Die Erfindung wird anhand der beigefügten Zeichnungen näher erläutert. In den Figuren zeigen:
- Fig. 1: in schematischer Darstellung ein Automatisierungssystem gemäß einer Ausführungsform;
- Fig. 2: ein Flussdiagramm eines Verfahrens zum Steuern eines Automatisierungssystems gemäß einer Ausführungsform;
- Fig. 3: in schematischer Darstellung einen zeitlichen Ablauf des Verfahrens in Fig. 2;
- Fig. 4: ein weiteres Flussdiagramm des Verfahrens zum Steuern eines Automatisierungssystems gemäß einer weiteren Ausführungsform;
- Fig. 5: ein weiteres Flussdiagramm des Verfahrens zum Steuern eines Automatisierungssystems gemäß einer weiteren Ausführungsform;
- Fig. 6: ein weiteres Flussdiagramm des Verfahrens zum Steuern eines Automatisierungssystems gemäß einer weiteren Ausführungsform;
- Fig. 7: in schematischer Darstellung einen zeitlichen Ablauf des Verfahrens in Fig. 6; und
- Fig. 8: ein weiteres Flussdiagramm des Verfahrens zum Steuern eines Automatisierungssystems gemäß einer weiteren Ausführungsform.

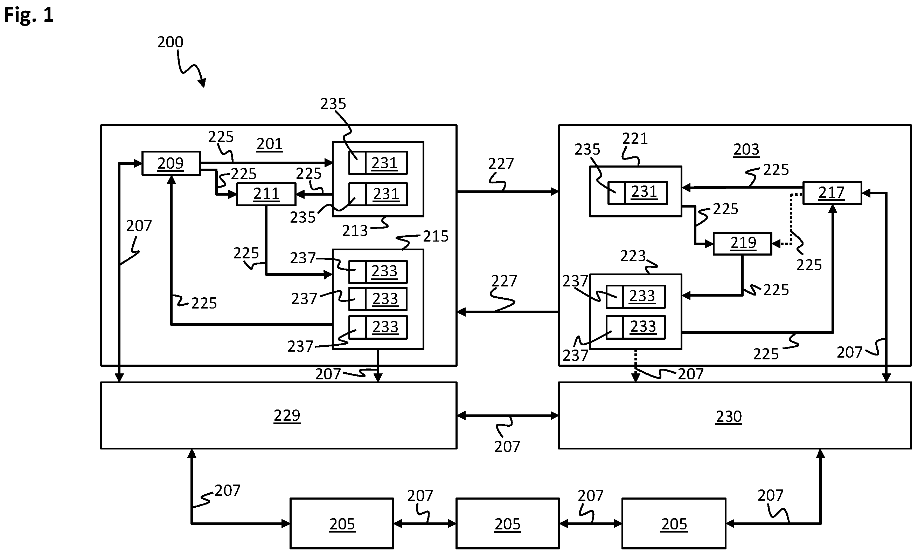

Fig. 1 zeigt in schematischer Darstellung ein Automatisierungssystem 200 gemäß einer Ausführungsform.

In der Ausführungsform in Fig. 1 umfasst das Automatisierungssystem 200 eine erste Steuereinheit 201, eine zweite Steuereinheit 203 und eine Mehrzahl von Feldgeräten 205. Die Feldgeräte 205 können als Sensoren bzw. Aktoren des Automatisierungssystems 200 ausgebildet sein. Die Feldgeräte 205 sind über einen Datenbus 207 mit der ersten Steuereinheit 201 und der zweiten Steuereinheit 203 verbunden. Ferner umfasst das Automatisierungssystem 200 eine erste Verbindungseinheit 229 und eine zweite Verbindungseinheit 230, die mit der ersten Steuereinheit 201 und der zweiten Steuereinheit 203 sowie mit den Feldgeräten 205 über den Datenbus 207 verbunden sind. Darüber hinaus sind die ersten und zweiten Verbindungseinheiten 229, 230 über den Datenbus 207 miteinander verbunden.

Die erste Steuereinheit 201 umfasst eine erste Eingabe-Ausgabe-Einheit 209 zum Empfangen von Eingabedaten und zum Aussenden von Ausgabedaten von und an die Feldgeräte 205. Darüber hinaus umfasst die erste Steuereinheit 201 eine erste Bearbeitungseinheit 211 zum Ausführen einer Steuerungs-Task und zum Analysieren von empfangenen Eingabedaten und zum Erzeugen von entsprechenden Ausgabedaten. Ferner umfasst die erste Steuereinheit 201 eine erste Eingabespeichereinheit 213 zum Speichern von Eingabedaten 231.

In der Ausführungsform in Fig. 1 sind in der ersten Eingabespeichereinheit 213 zwei Sätze von Eingabedaten 231 und darüber hinaus zwei Sätze von Kommunikationsdaten 235 gespeichert. Die Anzahl der in der ersten Eingabespeichereinheit 213 gespeicherten Eingabedaten 231 bzw. Kommunikationsdaten 235 ist lediglich beispielhaft und kann beliebig von der in der Fig. 1 gezeigten Anzahl abweichen, sodass eine Mehrzahl von Eingabedaten 231 bzw. Kommunikationsdaten 235 in der ersten Eingabespeichereinheit 213 speicherbar ist.

Zusätzlich umfasst die erste Steuereinheit 201 eine erste Ausgabespeichereinheit 215 zum Speichern entsprechender durch die erste Bearbeitungseinheit 211 erzeugter Ausgabedaten 233. In Fig. 1 sind in der ersten Ausgabespeichereinheit 215 ferner Antwortdaten 237 gespeichert.

Kommunikationsdaten 235 und Antwortdaten 237 sind im Sinne der Anmeldung Daten einer Datenkommunikation zwischen Modulen des Automatisierungssystems 200, beispielsweise zwischen der ersten Steuereinheit 201 beziehungsweise der zweiten Steuereinheit 203 und einer HMI Human-Machine-Interface. Kommunikationsdaten 235 umfassen hierbei Anfragen bzw. Aufforderungen zum Durchführen bestimmter Dienste oder zum Bereitstellen entsprechender Information während Antwortdaten 237 Antwortnachrichten bezüglich der jeweils empfangenen Kommunikationsdaten 235 umfassen. Kommunikationsdaten 235 und Antwortdaten 237 können über eine entsprechende Kommunikationsschnittstelle, in Fig. 1 nicht dargestellt, von der ersten Steuereinheit 201 beziehungsweise von der zweiten Steuereinheit 203 empfangen und/oder ausgesendet werden.

Die erste Eingabe-Ausgabe-Einheit 209, die erste Bearbeitungseinheit 211, die erste Eingabespeichereinheit 213 und die erste Ausgabespeichereinheit 215 sind innerhalb der ersten Steuereinheit 201 über eine interne Datenschnittstelle 225 miteinander verbunden. Über die interne Datenschnittstelle 225 ist eine Datenübertragung zwischen den einzelnen Einheiten innerhalb der ersten Steuereinheit 201 ermöglicht.

Analog umfasst die zweite Steuereinheit 203 eine zweite Eingabe-Ausgabe-Einheit 217 zum Empfangen von Eingabedaten 231 von den Feldgeräten 205 und zum Aussenden entsprechender Ausgabedaten 233 an die Feldgeräte 205. Ferner umfasst die zweite Steuereinheit 203 eine zweite Bearbeitungseinheit 219 zum Analysieren der empfangenen Eingabedaten 231 und zum Erzeugen entsprechender Ausgabedaten 233 durch Ausführen einer entsprechenden Steuerungs-Task. Darüber hinaus umfasst die zweite Steuereinheit 203 eine zweite Eingabespeichereinheit 221 zum Speichern von Eingabedaten 231 bzw. von Kommunikationsdaten 235. Ferner umfasst die zweite Steuereinheit 203 eine zweite Ausgabespeichereinheit 223 zum Speichern von Ausgabedaten 233 bzw. von Antwortdaten 237. Innerhalb der zweiten Steuereinheit 203 sind die einzelnen Einheiten über eine interne Datenschnittstelle 225 miteinander verbunden, die eine Datenübertragung innerhalb der zweiten Steuereinheit 203 ermöglicht.

Darüber hinaus sind die erste Steuereinheit 201 und die zweite Steuereinheit 203 über eine Datenverbindung 227 miteinander verbunden, die eine Datenübertragung zwischen der ersten Steuereinheit 201 und der zweiten Steuereinheit 203 ermöglicht.

Die erste Steuereinheit 201 und die zweite Steuereinheit 203 sind jeweils eingerichtet, einen Automatisierungsprozess des Automatisierungssystems 200 zyklisch zu steuern. Eine zyklische Steuerung des Automatisierungsprozesses durch eine der Steuereinheiten umfasst hierbei ein Empfangen entsprechender Eingabedaten 231 der Feldgeräte 205 und das Aussenden von Ausgabedaten 233 an die jeweiligen Feldgeräte 205 innerhalb eines Steuerzyklus. Zur zyklischen Steuerung des Automatisierungsprozesses wird somit eine Mehrzahl verschiedener Steuerzyklen nacheinander ausgeführt, sodass in zyklischer Abfolge Eingabedaten 231 der Feldgeräte 205 durch die erste Steuereinheit 201 bzw. die zweite Steuereinheit 203 empfangen und Ausgabedaten 233 von der ersten Steuereinheit 201 bzw. der zweiten Steuereinheit 203 an die Feldgeräte 205 zum Steuern des Automatisierungsprozesses ausgesendet werden.

Zum Steuern des Automatisierungsprozesses ist die erste Steuereinheit 201 eingerichtet, Eingabedaten 231 von den Feldgeräten 205 über die erste Eingabe-Ausgabe-Einheit 209 zu empfangen. Die empfangenen Eingabedaten 231 können hierbei zu einem Prozessabbild der Eingänge, wie für eine speicherprogrammierbare Steuerung SPS üblich, zusammengefasst sein. Über die interne Datenschnittstelle 225 können die empfangenen Eingabedaten 231 an die erste Bearbeitungseinheit 211 weitergeleitet werden. Die erste Bearbeitungseinheit 211 kann zur Analyse der empfangenen Eingabedaten 231 eine Steuerungs-Task ausführen und entsprechende Ausgabedaten 233 erzeugen. Die Steuerungs-Task kann hierbei ein Steuerprogramm des Automatisierungsprozesses umfassen. Alternativ kann eine Steuerungs-Task ein Teilprogramm eines Steuerprogramms umfassen, sodass zur Ausführung des Gesamtsteuerprogramms mehrere Steuerungs-Tasks nacheinander auszuführen sind. Die erzeugten Ausgabedaten 233 können darauffolgend über die interne Datenschnittstelle 225 an die erste Ausgabespeichereinheit 215 übertragen und in dieser gespeichert werden. Die Ausgabedaten 233 können wie für SPS üblich in ein Prozessabbild der Ausgänge zusammengefasst sein. Zu einem späteren Zeitpunkt können die in der ersten Ausgabespeichereinheit 215 gespeicherten Ausgabedaten 233 über die interne Datenschnittstelle 225 an die erste Eingabe-Ausgabe-Einheit 209 übermittelt und von der ersten Eingabe-Ausgabe-Einheit 209 über den Datenbus 207 an die erste Verbindungseinheit 229 und von da aus an die Feldgeräte 205 übertragen werden. Alternativ können die von der ersten Eingabe-Ausgabe-Einheit 209 empfangenen Eingabedaten 231 über die interne Datenschnittstelle 225 an die erste Eingabespeichereinheit 213 übertragen und in diese gespeichert werden. Zu einem späteren Zeitpunkt können die in der ersten Eingabespeichereinheit 213 gespeicherten Eingabedaten 231 über die Datenverbindung 227 an die zweite Steuereinheit 203 übertragen werden.

Die zweite Steuereinheit 203 ist ferner eingerichtet, die von der ersten Steuereinheit 201 übertragenen Eingabedaten 231 in der zweiten Eingabespeichereinheit 221 zu speichern. Die zweite Steuereinheit 203 ist ferner eingerichtet, die in der zweiten Eingabespeichereinheit 221 gespeicherten Eingabedaten 231 über die interne Datenschnittstelle 225 an die zweite Bearbeitungseinheit 219 zu übertragen. Durch die zweite Bearbeitungseinheit 219 können die übertragenen Eingabedaten 231 analysiert werden, indem analog zur ersten Bearbeitungseinheit 211 die Steuerungs-Task ausgeführt wird und entsprechende Ausgabedaten 233 erzeugt werden. Diese können über die interne Datenschnittstelle 225 an die zweite Ausgabespeichereinheit 223 übertragen und in dieser gespeichert werden. Darüber hinaus ist die zweite Steuereinheit 203 ausgebildet, über die zweite Eingabe-Ausgabe-Einheit 217 Eingabedaten 231 von den Feldgeräten 205 zu empfangen. Diese empfangenen Eingabedaten 231 können ebenfalls über die interne Datenschnittstelle 225 an die zweite Eingabespeichereinheit 221 übertragen und in dieser gespeichert werden. Alternativ können die empfangenen Eingabedaten 231 an die zweite Bearbeitungseinheit 219 übertragen, in dieser analysiert und entsprechende Ausgabedaten 233 erzeugt werden, die in der zweiten Ausgabespeichereinheit 223 gespeichert werden können.

Die erste Steuereinheit 201 und die zweite Steuereinheit 203 sind hierbei derart ausgebildet, dass zu jedem Zeitpunkt der Ausführung des Automatisierungsprozesses in der ersten Ausgabespeichereinheit 215 bzw. der zweiten Ausgabespeichereinheit 223 eine Mehrzahl von Ausgabedaten 233 gespeichert ist. Zur Steuerung des Automatisierungsprozesses ist erfindungsgemäß vorgesehen, dass die erste Steuereinheit 201 bzw. die zweite Steuereinheit 203 innerhalb eines Steuerzyklus Ausgabedaten 233, die in der ersten Ausgabespeichereinheit 215 bzw. der zweiten Ausgabespeichereinheit 223 gespeichert sind, an die Feldgeräte 205 aussenden, wobei die in einem Steuerzyklus ausgesendeten Ausgabedaten 233 zu einem früheren Zeitpunkt auf Basis empfangener Eingabedaten 231 erzeugt wurden.

Somit wird eine Totzeit generiert, die einen Zeitraum von mehreren aufeinanderfolgenden Steuerzyklen umfassen kann und eine Verzögerung beschreibt, die zwischen dem Empfang von Eingabedaten 231 und dem Aussenden entsprechender Ausgabedaten 233, die durch Ausführen der Steuerungs-Task auf Basis der empfangenen Eingabedaten 231 erzeugt wurden, liegt. Über die Mehrzahl von in der Ausgabespeichereinheit 215 bzw. der zweiten Ausgabespeichereinheit 223 gespeicherten Ausgabedaten 233 wird erreicht, dass zu einem beliebigen Steuerzyklus die erste Steuereinheit 201 bzw. die zweite Steuereinheit 203 über eine Mehrzahl von Ausgabedaten 233 verfügt, die zu einem zeitlich später auszuführenden Steuerzyklus zur Steuerung des Automatisierungsprozesses an die Feldgeräte 205 auszusenden sind.

Wird somit eine Fehlfunktion einer der Steuereinheiten ermittelt, ist die jeweils andere Steuereinheit jederzeit in der Lage, unmittelbar Ausgabedaten 233 in dem jeweils vorgesehenen Steuerzyklus auszusenden, ohne dass die jeweils zum Aussenden vorgesehenen Ausgabedaten 233 in dem jeweiligen Steuerzyklus zunächst erzeugt werden müssen.

Wird beispielsweise eine Fehlfunktion der ersten Steuereinheit 201 ermittelt, ist die zweite Steuereinheit 203 eingerichtet, die in der zweiten Ausgabespeichereinheit 223 gespeicherten Ausgabedaten 233 über die interne Datenschnittstelle 225 an die zweite Eingabe-Ausgabe-Einheit 217 zu übermitteln und diese Ausgabedaten 233 über den Datenbus 207 und die zweite Verbindungseinheit 230 an die Feldgeräte 205 zu übertragen, um den Automatisierungsprozess zu steuern. Solange keine Fehlfunktion der ersten Steuereinheit 201 auftritt wird der Automatisierungsprozess durch die erste Steuereinheit 201 gesteuert. Die zweite Steuereinheit 203 wird parallel als Redundanz betrieben und wird dem erfindungsgemäßen Verfahren 100 auf dem Stand beziehungsweise im Zustand der ersten Steuereinheit 201 gehalten und ist damit jederzeit in der Lage, die Steuerung des Automatisierungsprozesses an Stelle der ersten Steuereinheit 201 zu übernehmen.

Gemäß einer Ausführungsform sind die erste Steuereinheit 201 und die zweite Steuereinheit 203 baugleich und beliebig austauschbar, sodass sowohl die erste Steuereinheit 201 als auch die zweite Steuereinheit 203 die Steuerung des Automatisierungssystems 200 gleichwertig durchführen können.

Analog sind die erste Steuereinheit 201 und die zweite Steuereinheit 203 eingerichtet, Kommunikationsdaten 235 über eine entsprechende Kommunikationsschnittstelle (in Fig. 1 nicht dargestellt) zu empfangen und über die interne Datenschnittstelle 225 an die erste Eingabespeichereinheit 213 bzw. die zweite Eingabespeichereinheit 221 zu übertragen und in dieser zu speichern. Durch Ausführen der Steuerungs-Task bzw. gegebenenfalls einer anderen Steuerungstask durch die erste Bearbeitungseinheit 211 bzw. die zweite Bearbeitungseinheit 219 können entsprechende Antwortdaten 237 generiert werden, die in der ersten Ausgabespeichereinheit 215 bzw. der zweiten Ausgabespeichereinheit 223 gespeichert werden können. Über die Datenverbindung 227 bzw. den Datenbus 207 können diese an weitere Module des Automatisierungssystems 200, beispielsweise die jeweils andere Steuereinheit, zur Datenkommunikation ausgesendet werden.

Gemäß einer Ausführungsform sind die erste Eingabespeichereinheit 213, die zweite Eingabespeichereinheit 221, die erste Ausgabespeichereinheit 215 und die zweite Ausgabespeichereinheit 223 als First-In-First-Out-Speicher ausgebildet. Gemäß einer Ausführungsform umfasst die erste Steuereinheit 201 bzw. die zweite Steuereinheit 203 jeweils eine Mehrzahl von ersten Bearbeitungseinheiten 211 bzw. zweiten Bearbeitungseinheiten 219, in denen eine Mehrzahl von Steuerungs-Tasks ausgeführt werden können. Beispielsweise können die einzelnen Steuerungs-Tasks auf unterschiedlichen Prozessorkernen ausgeführt werden, sodass eine zeitgleiche Ausführung einer Mehrzahl von Steuerungs-Tasks ermöglicht ist.

Die erste Verbindungseinheit 229 und die zweite Verbindungseinheit 230 können ausgebildet sein, Datensignale zwischen der ersten Steuereinheit 201, der zweiten Steuereinheit 203 und den Feldgeräten 205 jeweils an die adressierten Empfänger weiterzuleiten. Insbesondere können die erste Verbindungseinheit 229 und die zweite Verbindungseinheit 230 ausgebildet sein, bei Fehlfunktion einer der Steuereinheiten die von den Feldgeräten 205 ausgesendeten Datensignale an die jeweils andere Steuereinheit zu übermitteln. Über die erste Verbindungseinheit 229 und die zweite Verbindungseinheit 230 kann somit eine Datenkommunikation zwischen den Steuereinheiten und den Feldgeräten 205 des Automatisierungssystems 200 geregelt werden. Die erste Verbindungseinheit 229 und die zweite Verbindungseinheit 230 können beispielsweise als entsprechend ausgebildete Switches ausgebildet sein.

Gemäß einer Ausführungsform kann das Automatisierungssystem 200 eine beliebige Anzahl von Steuereinheiten umfassen. Die Steuereinheiten des Automatisierungssystems 200 können hierbei jeweils identisch ausgebildet sein, sodass gemäß der oben beschriebenen Ausführungsform alle Steuereinheiten eingerichtet sein können, den Automatisierungsprozess zyklisch zu steuern und bei einer Fehlfunktion einer der Steuereinheiten die Steuerung des Automatisierungsprozesses nahtlos und ohne Verzögerung des Automatisierungsprozesses zu übernehmen.

**Gemäß einer** Ausführungsform umfassen die erste Steuereinheit 201 und die zweite Steuereinheit 203 jeweils einen ersten Speicherbereich und einen zweiten Speicherbereich (in Fig. 1 nicht dargestellt), die voneinander separiert sind und in denen jeweils die von der ersten Steuereinheit 201 empfangenen Eingabedaten 231 und erzeugten Ausgabedaten 233 bzw. die von der zweiten Steuereinheit 203 empfangenen Eingabedaten 231 und erzeugten Ausgabedaten 233 gespeichert werden können. Über die separierten Speicherbereiche ist eine Individualisierung der Steuereinheiten gewährleistet, die einen unabhängigen Betrieb der einzelnen Steuereinheiten ermöglicht.

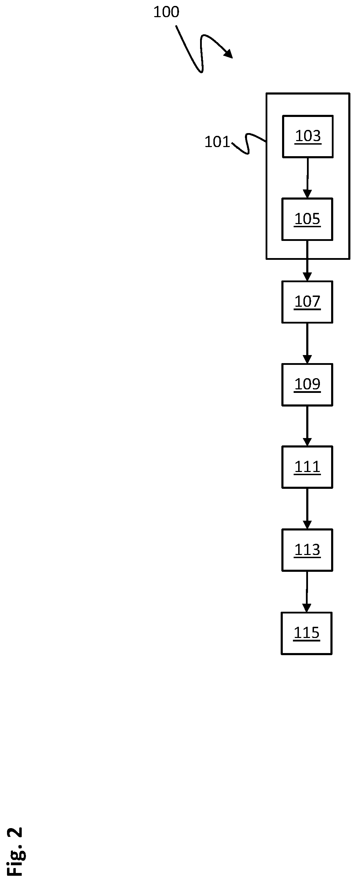

Fig. 2 zeigt ein Flussdiagramm eines Verfahrens 100 zum Steuern eines Automatisierungssystems 200 gemäß einer Ausführungsform.

Das erfindungsgemäße Verfahren 100 zum Steuern eines Automatisierungssystems 200 mit Steuerungsredundanz ist auf ein Automatisierungssystem 200 gemäß der in Fig. 1 dargestellten Ausführungsform anwendbar.

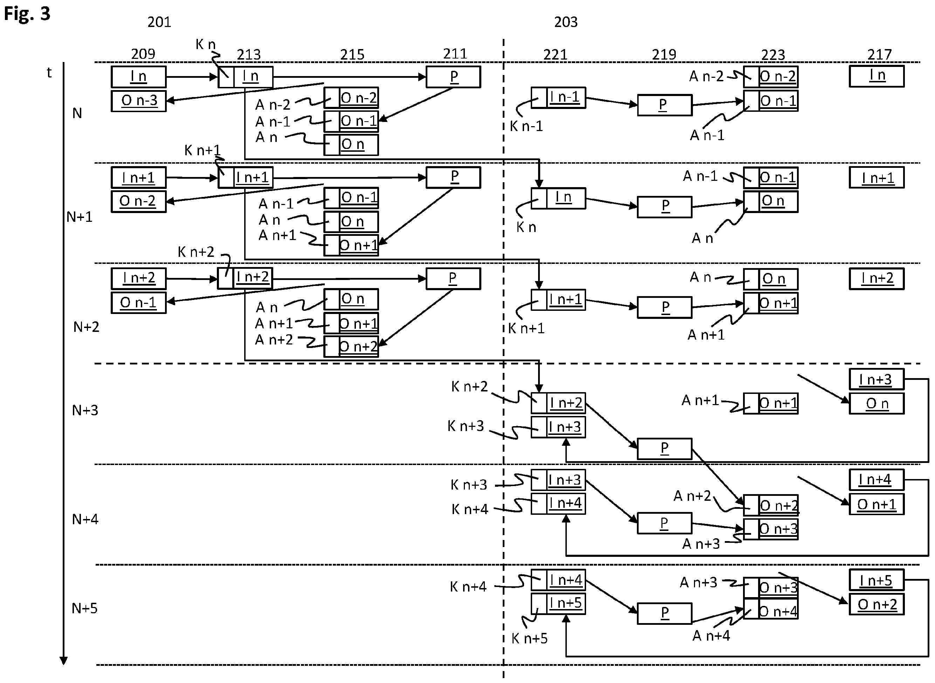

Die Beschreibung des Verfahrens 100 gemäß der Ausführungsform in Fig. 2 wird mit Bezug auf die Beschreibung zur Fig. 3 vorgenommen.

Zum Steuern des Automatisierungssystems 200 wird in einem ersten Steuerschritt 101 von der ersten Steuereinheit 201 der zu steuernde Automatisierungsprozess des Automatisierungssystems 200 zyklisch gesteuert. Das zyklische Steuern des Automatisierungsprozesses durch die erste Steuereinheit 201 umfasst hierbei das Empfangen entsprechender Eingabedaten 231 und das Aussenden von Ausgabedaten 233 in aufeinanderfolgenden Steuerzyklen durch die erste Steuereinheit 201.

Für einen beliebigen n-ten Steuerzyklus, wobei n eine natürliche Zahl >= 2 ist, und wobei durch den n-ten Steuerzyklus somit ein beliebiger Steuerzyklus des zyklischen Steuerns des Automatisierungsprozesses dargestellt ist, umfasst der erste Steuerschritt 101 einen ersten Eingabeempfangsschritt 103 und einen ersten Ausgabesendeschritt 105. Im ersten Eingabeempfangsschritt 103 empfängt die erste Eingabe-Ausgabe-Einheit 209 der ersten Steuereinheit 201 einen n-ten Satz von Eingabedaten In. Der n-te Satz von Eingabedaten In umfasst Eingabedaten 231, die von den Feldgeräten 205 an die erste Steuereinheit 201 ausgesendet wurden. Die Eingabedaten 231 umfassen insbesondere Sensordaten von Sensoren des Automatisierungssystems 200.

Der n-te Satz von Eingabedaten In kann insbesondere als ein Prozessabbild der Eingänge ausgebildet sein und beschreibt die Mehrzahl von Eingabedaten 231, die während des n-ten Steuerzyklus durch die erste Eingabe-Ausgabe-Einheit 209 der ersten Steuereinheit 201 empfangen wurden.

Im ersten Ausgabesendeschritt 105 wird ferner ein (n-x)-ter Satz von Ausgabedaten 233 durch die erste Eingabe-Ausgabe-Einheit 209 der ersten Steuereinheit 201 an die Feldgeräte 205 ausgesendet. Der (n-x)-te Satz von Ausgabedaten beschreibt hierbei Ausgabedaten, die durch Ausführen der Steuerungs-Task in der ersten Bearbeitungseinheit 211 auf Basis eines (n-x)-ten Satzes von Eingabedaten erzeugt wurden. Der (n-x)-te Satz von Eingabedaten beschreibt hierbei Eingabedaten 231, die von der ersten Eingabe-Ausgabe-Einheit 209 der ersten Steuereinheit 201 in einem (n-x)-ten Steuerzyklus empfangen wurden. Die Variable x ist hierbei eine natürliche Zahl >= 1 und beschreibt die Totzeit, sprich: die zeitliche Verzögerung, mit der Ausgabedaten 233 relativ zum Empfang entsprechender Eingabedaten 231, auf deren Basis die Ausgabedaten 233 generiert wurden, ausgesendet werden. Die Totzeit kann hierbei einen Zeitraum von mehreren Steuerzyklen umfassen. Der im ersten Ausgabesendeschritt 105 ausgesendete (n-x)-te Satz von Ausgabedaten basiert somit auf einem (n-x)-ten Satz von Eingabedaten, der in einem zeitlich früher ausgeführten (n-x)-ten Steuerzyklus durch die erste Eingabe-Ausgabe-Einheit 209 der ersten Steuereinheit 201 empfangen wurde.

Erfindungsgemäß sieht die zyklische Steuerung des Automatisierungsprozesses durch die erste Steuereinheit 201 somit vor, dass in einem beliebigen n-ten Steuerzyklus aktuelle Eingabedaten in Form eines n-ten Satzes von Eingabedaten In empfangen werden und Ausgabedaten in Form eines (n-x)-ten Satzes von Ausgabedaten an die Feldgeräte 205 ausgesendet werden, wobei der ausgesendete (n-x)-te Satz von Ausgabedaten auf einem (n-x)-ten Satz von Eingabedaten basiert, der zu einem zeitlich früher durchgeführten (n-x)-ten Steuerzyklus von der ersten Eingabe-Ausgabe-Einheit 209 der ersten Steuereinheit 201 empfangen wurde. Der (n-x)-te Steuerzyklus wird hierbei zeitlich um x Steuerzyklen früher ausgeführt als der n-te Steuerzyklus.

In einem ersten Datenübermittlungsschritt 107 wird der n-te Satz von Eingabedaten In von der ersten Steuereinheit 201 an die zweite Steuereinheit 203 übermittelt. Die Übermittlung des n-ten Satzes von Eingabedaten In kann während des n-ten Steuerzyklus oder aber in einem beliebigen Steuerzyklus durchgeführt werden, der zeitlich zwischen dem n-ten Steuerzyklus und einem (n+x)-ten Steuerzyklus durchgeführt wird. Der (n+x)-te Steuerzyklus wird um die Totzeit x später als der n-te Steuerzyklus ausgeführt.

In einem ersten Bearbeitungsschritt 109 wird der n-te Satz von Eingabedaten In durch die zweite Bearbeitungseinheit 219 der zweiten Steuereinheit 203 bearbeitet und es wird ein n-ter Satz von Ausgabedaten On erzeugt. Der erste Bearbeitungsschritt 109 kann wiederum ebenfalls im n-ten Steuerzyklus oder aber in einem beliebigen Steuerzyklus durchgeführt werden, der zeitlich zwischen dem n-ten Steuerzyklus und dem (n+x)-ten Steuerzyklus ausgeführt wird.

In einem ersten Ausgabespeicherschritt 111 wird der n-te Satz von Ausgabedaten On in der zweiten Ausgabespeichereinheit 223 der zweiten Steuereinheit 203 gespeichert. Wiederum kann der erste Ausgabespeicherschritt 111 im n-ten Steuerzyklus oder aber in einem beliebigen Steuerzyklus ausgeführt werden, der zeitlich zwischen dem n-ten Steuerzyklus und dem (n+x)-ten Steuerzyklus ausgeführt wird.

Während der ersten n+x Steuerzyklen wird der Automatisierungsprozess gemäß den oben beschriebenen Verfahrensschritten zyklisch durch die erste Steuereinheit 201 gesteuert. Die zweite Steuereinheit 203 wird während dieser Zeit als Redundanz betrieben und wird durch Generierung entsprechender Sätze von Ausgabedaten 233 auf den Stand der ersten Steuereinheit 201 gebracht, in dem beide Steuereinheiten 201, 203 während jedes Steuerzyklus die Sätze von Ausgabedaten 233 aufweisen, die in einem zeitlich folgenden Steuerzyklus zum Steuern des Automatisierungsprozesses an die Feldgeräte 205 auszusenden sind.

In einem Fehlerermittlungsschritt 113 wird während des (n+x)-ten Steuerzyklus eine Fehlfunktion der ersten Steuereinheit 201 ermittelt. Eine Fehlfunktion der ersten Steuereinheit 201 kann hierbei einen beliebigen Fehler der ersten Steuereinheit 201 umfassen, der ein verlässliches zyklisches Steuern des Automatisierungsprozesses durch die erste Steuereinheit 201 verhindert.

Die Fehlfunktion der ersten Steuereinheit 201 kann beispielsweise über ein Kontrollmodul des Automatisierungssystems 200 ermittelt werden, das eingerichtet ist, eine Funktionsfähigkeit der ersten Steuereinheit 201 bzw. der zweiten Steuereinheit 203 zu überwachen.

Nach Ermittlung der Fehlfunktion der ersten Steuereinheit 201 im (n+x)-ten Steuerzyklus wird in einem weiteren Ausgabesendeschritt 115 der n-te Satz von Ausgabedaten On, der in der zweiten Ausgabespeichereinheit 223 der zweiten Steuereinheit 203 gespeichert ist, durch die zweite Eingabe-Ausgabe-Einheit 217 der zweiten Steuereinheit 203 an die Feldgeräte 205 des Automatisierungssystems 200 ausgesendet. Hierdurch kann eine Steuerung des Automatisierungsprozesses durch die zweite Steuereinheit 203 bei Fehlfunktion der ersten Steuereinheit 201 fortgesetzt werden. Dadurch dass zum Zeitpunkt der Ermittlung der Fehlfunktion der ersten Steuereinheit 201, in der vorliegenden Ausführungsform während des (n+x)-ten Steuerzyklus, der n-te Satz von Ausgabedaten On bereits in der zweiten Ausgabespeichereinheit 223 der zweiten Steuereinheit 203 vorliegend gespeichert ist, kann dieser unmittelbar nach Ermittlung der Fehlfunktion innerhalb des (n+x)-ten Steuerzyklus durch die zweite Steuereinheit 203 zum Steuern des Automatisierungsprozesses an die Feldgeräte 205 ausgesendet werden. Die Steuerung des Automatisierungsprozesses kann somit nahtlos fortgesetzt werden und eine Unterbrechung des Automatisierungsprozesses, die beispielsweise für eine Erzeugung entsprechender Ausgabedaten nach Ermittlung der Fehlfunktion benötigt würde, kann vermieden werden.

Nach einer Ausführungsform des Verfahrens 100 ist vorgesehen, dass zu jedem Zeitpunkt eine Mehrzahl von Sätzen von Ausgabedaten in der zweiten Ausgabespeichereinheit 223 gespeichert ist. Hierdurch kann erreicht werden, dass zu jedem Zeitpunkt die zweite Steuereinheit 203 die für den jeweiligen Steuerzyklus vorgesehenen Ausgabedaten vorrätig in der zweiten Ausgabespeichereinheit 223 gespeichert hat, sodass unmittelbar die benötigten Ausgabedaten in dem jeweiligen Steuerzyklus ausgesendet und der Automatisierungsprozess somit fortgesetzt gesteuert werden kann.

Fig. 3 zeigt in schematischer Darstellung einen zeitlichen Ablauf des Verfahrens 100 in Fig. 2.

In Fig. 3 ist ein zeitlicher Ablauf des Verfahrens 100 in der Ausführungsform in Fig. 2 dargestellt. Hierzu ist in Fig. 3 eine beispielhafte Ausführungsform dargestellt, in der die Totzeit x mit der Zeitspanne von drei aufeinanderfolgenden Steuerzyklen gleichgesetzt ist. Somit entspricht in der Fig. 3 dem (n+x)-ten Steuerzyklus der in Fig. 3 dargestellte (n+3)-te Steuerzyklus.

In Fig. 3 sind die erste Steuereinheit 201 und die zweite Steuereinheit 203, insbesondere die erste Eingabe-Ausgabe-Einheit 209, die erste Eingabespeichereinheit 213, die erste Ausgabespeichereinheit 215 und die erste Bearbeitungseinheit 211, wie die zweite Eingabespeichereinheit 221, die zweite Bearbeitungseinheit 219, die zweite Ausgabespeichereinheit 223 und die zweite Eingabe-Ausgabe-Einheit 217 dargestellt.

Ferner sind sechs aufeinanderfolgende Steuerzyklen dargestellt, die entlang einer Zeitachse t nacheinander angeordnet sind. Die innerhalb eines Steuerzyklus dargestellten Aktionen der ersten Steuereinheit 201 bzw. der zweiten Steuereinheit 203 finden zeitgleich, bzw. innerhalb des jeweiligen Steuerzyklus, statt, während die entlang der Zeitachse t nacheinander dargestellten Aktionen zeitlich nacheinander stattfinden.

In einem beliebigen n-ten Steuerzyklus empfängt die erste Steuereinheit 201 durch die erste Eingabe-Ausgabe-Einheit 209 einen n-ten Satz von Eingabedaten In und sendet einen (n-3)-ten Satz von Ausgabedaten On-3 an die Feldgeräte 205 des Automatisierungssystems 200 aus. Der (n-3)-te Satz von Ausgabedaten On-3 wurde zu einem früheren Zeitpunkt auf Basis eines (n-3)-ten Satzes von Eingabedaten, die in einem (n-3)-ten Steuerzyklus (in Fig. 3 nicht gezeigt) empfangen wurden, erzeugt. In der Ausführungsform in Fig. 3 wird der empfangene n-te Satz von Eingabedaten In in der ersten Eingabespeichereinheit 213 gespeichert und an die erste Bearbeitungseinheit 211 weitergeleitet. Die erste Bearbeitungseinheit 211 führt die SteuerungsTask P aus und erzeugt einen n-ten Satz von Ausgabedaten On, der in der ersten Ausgabespeichereinheit 215 gespeichert wird.

Alternativ kann das Erzeugen des n-ten Satzes von Ausgabedaten On auch zu einem späteren Steuerzyklus, beispielsweise dem (n+1)-ten Steuerzyklus oder dem (n+2)-ten Steuerzyklus ausgeführt werden. Im n-ten Steuerzyklus umfasst die erste Ausgabespeichereinheit 215 neben dem n-ten Satz von Ausgabedaten On einen (n-1)-ten Satz von Ausgabedaten On-1 und einen (n-2)-ten Satz von Ausgabedaten On-2, die jeweils auf einem (n-1)-ten Satz von Eingabedaten und einem (n-2)-ten Satz von Eingabedaten basieren beziehungsweise durch Ausführen der Steuerungs-Task P auf die jeweiligen Sätze von Eingabedaten 231 generiert wurden, die jeweils zu einem (n-1)-ten Steuerzyklus bzw. zu einem (n-2)-ten Steuerzyklus von der ersten Eingabe-Ausgabe-Einheit 209 empfangen wurden.

In der Ausführungsform in Fig. 3 ist in der zweiten Eingabespeichereinheit 221 der zweiten Steuereinheit 203 ferner ein (n-1)-ter Satz von Eingabedaten In-1 gespeichert. Dieser wird im n-ten Steuerzyklus an die zweite Bearbeitungseinheit 219 übermittelt, die auf Basis der Steuerungs-Task P einen entsprechenden (n-1)-ten Satz von Ausgabedaten On-1 erzeugt, der in der zweiten Ausgabespeichereinheit 223 gespeichert wird. Zum n-ten Steuerzyklus umfasst die zweite Ausgabespeichereinheit 223 ferner einen (n-2)-ten Satz von Ausgabedaten On-2, der auf einem (n-2)-ten Satz von Eingabedaten basiert beziehungsweise durch Ausführen der Steuerungs-Task P durch die zweite Bearbeitungseinheit 219 auf den (n-2)-ten Satz von Eingabedaten In-2 generiert wurde, der zu einem (n-2)-ten Steuerzyklus von der ersten Eingabe-Ausgabe-Einheit 209 empfangen und an die zweite Steuereinheit 203 übertragen wurde. Ferner empfängt die zweite Steuereinheit 203 über die zweite Eingabe-Ausgabe-Einheit 217 einen n-ten Satz von Eingabedaten In, der im Folgenden jedoch nicht weiter bearbeitet wird. Analog empfängt die zweite Steuereinheit 203 über die Kommunikationsschnittstelle der zweiten Steuereinheit 203 einen n-ten Satz von Kommunikationsdaten Kn, der im Folgenden jedoch ebenfalls nicht weiterbehandelt wird.

Darüber hinaus sendet die erste Steuereinheit 201 im n-ten Steuerzyklus den in der ersten Eingabespeichereinheit 213 gespeicherten n-ten Satz von Eingabedaten In an die zweite Steuereinheit 203 aus. In der Ausführungsform in Fig. 3 empfängt die zweite Steuereinheit 203 den übertragenen n-ten Satz von Eingabedaten In in dem zeitlich folgenden (n+1)-ten Steuerzyklus. Die Verzögerung zwischen dem Aussenden und dem Empfangen des n-ten Satzes von Eingabedaten In basiert auf der Übertragungszeit der Datensignale zwischen der ersten Steuereinheit 201 und der zweiten Steuereinheit 203. Diese kann variieren und ist in Fig. 3 lediglich beispielhaft dargestellt.

Neben dem n-ten Satz von Eingabedaten In empfängt die erste Steuereinheit 201 über eine entsprechende Kommunikationsschnittelle im n-ten Steuerzyklus einen n-ten Satz von Kommunikationsdaten Kn, der in der ersten Eingabespeichereinheit 213 mit dem n-ten Satz von Eingabedaten In gespeichert wird. Durch Bearbeitung in der ersten Bearbeitungseinheit 211 wird ein entsprechender n-ter Satz von Antwortdaten An erzeugt, der gemeinsam mit dem n-ten Satz von Ausgabedaten On in der ersten Ausgabespeichereinheit 215 gespeichert wird. Analog umfasst die erste Ausgabespeichereinheit 215 ferner einen (n-1)-ten Satz von Antwortdaten An-1 und einen (n-2)-ten Satz von Antwortdaten An-2. Analog umfasst im n-ten Steuerzyklus die zweite Eingabespeichereinheit 221 einen (n-1)-ten Satz von Kommunikationsdaten Kn-1, der zusammen mit dem (n-1)-ten Satz von Eingabedaten In-1 gespeichert ist. Durch Ausführen der zweiten Bearbeitungseinheit 219 wird daraus ein (n-1)-ter Satz von Antwortdaten An-1 erzeugt, der zusammen mit dem (n-1)-ten Satz von Ausgabedaten On-1 in der zweiten Ausgabespeichereinheit 223 gespeichert ist. Analog ist zusammen mit dem (n-2)-ten Satz von Ausgabedaten On-2 ein (n-2)-ter Satz von Antwortdaten An-2 in der zweiten Ausgabespeichereinheit 223 gespeichert. Im n-ten Steuerzyklus kann ebenfalls, nicht dargestellt, ein (n-3)-ter Satz von Antwortdaten durch die erste Steuereinheit 201 über die Kommunikationsschnittstelle ausgesendet werden.

Im darauffolgenden (n+1)-ten Steuerzyklus empfängt die erste Steuereinheit 201 über die erste Eingabe-Ausgabe-Einheit 209 einen entsprechenden (n+1)-ten Satz von Eingabedaten In+1, der in der Ausführungsform in Fig. 3 in der ersten Eingabespeichereinheit 213 gespeichert, in der ersten Bearbeitungseinheit 211 durch Ausführen der Steuerungs-Task P bearbeitet und ein entsprechender (n+1)-ter Satz von Ausgabedaten On+1 erzeugt wird, der in der ersten Ausgabespeichereinheit 215 gespeichert wird. Analog wird ein (n+1)-ter Satz von Kommunikationsdaten Kn+1 über die Kommunikationsschnittstelle empfangen, der in der ersten Eingabespeichereinheit 213 gespeichert, durch die erste Bearbeitungseinheit 211 bearbeitet und ein entsprechender (n+1)-ter Satz von Antwortdaten An+1 erzeugt wird, der in der ersten Ausgabespeichereinheit 215 gespeichert wird.

Ferner wird der in der ersten Ausgabespeichereinheit 215 gespeicherte (n-2)-te Satz von Ausgabedaten On-2 im (n+1)-ten Steuerzyklus durch die erste Eingabe-Ausgabe-Einheit 209 ausgesendet. Analog wird der (n-2)-te Satz von Antwortdaten An-2 über die Kommunikationsschnittstelle ausgesendet. Darüber hinaus empfängt die zweite Steuereinheit 203 den im n-ten Steuerzyklus von der ersten Steuereinheit 201 übermittelten n-ten Satz von Eingabedaten In und speichert diesen in der zweiten Eingabespeichereinheit 221. Darüber hinaus wird über das Ausführen der Steuerungs-Task P auf den n-ten Satz von Eingabedaten In durch die zweite Bearbeitungseinheit 219 ein n-ter Satz von Ausgabedaten On erzeugt, der in der zweiten Ausgabespeichereinheit 223 gespeichert wird. Analog wird ein n-ter Satz von Kommunikationsdaten Kn empfangen und ein n-ter Satz von Antwortdaten An erzeugt und in der zweiten Ausgabespeichereinheit 223 gespeichert. Ferner empfängt die zweite Steuereinheit 203 über die zweite Eingabe-Ausgabe-Einheit 217 einen (n+1)-ten Satz von Eingabedaten In+1, der in der gezeigten Ausführungsform jedoch nicht weiterbehandelt wird. Analog empfängt die zweite Steuereinheit 203 über die Kommunikationsschnittstelle der zweiten Steuereinheit 203 einen (n+1)-ten Satz von Kommunikationsdaten Kn+1, der im Folgenden jedoch ebenfalls nicht weiterbehandelt wird.

Im darauffolgenden (n+2)-ten Steuerzyklus empfängt die erste Steuereinheit 201 einen (n+2)-ten Satz von Eingabedaten In+2, speichert diesen in der ersten Eingabespeichereinheit 213 und erzeugt über Ausführen der Steuerungs-Task P auf den (n+2)-ten Satz von Eingabedaten In+2 einen entsprechenden (n+2)-ten Satz von Ausgabedaten On+2, der in der ersten Ausgabespeichereinheit 215 gespeichert wird. Analog wird ein (n+2)-ter Satz von Kommunikationsdaten Kn+2 empfangen und ein (n+2)-ter Satz von Antwortdaten An+2 erzeugt und gespeichert. Im (n+2)-ten Steuerzyklus empfängt die zweite Steuereinheit 203 den im (n+1)-ten Steuerzyklus von der ersten Steuereinheit 201 übermittelten (n+1)-ten Satz von Eingabedaten In+1 und speichert diesen in der zweiten Eingabespeichereinheit 221. Analog zu dem oben Beschriebenen wird aus dem (n+1)-ten Satz von Eingabedaten In+1 durch Ausführen der Steuerungs-Task P ein (n+1)-ter Satz von Ausgabedaten On+1 erzeugt und gespeichert. Analog wird ein (n+1)-ter Satz von Kommunikationsdaten Kn+1 empfangen, ein entsprechender (n+1)-ter Satz von Antwortdaten An+1 erzeugt und in der zweiten Ausgabespeichereinheit 223 gespeichert. Ferner empfängt die zweite Steuereinheit 203 über die zweite Eingabe-Ausgabe-Einheit 217 einen (n+2)-ten Satz von Eingabedaten In+2, der in der gezeigten Ausführungsform jedoch nicht weiterbehandelt wird. Analog empfängt die zweite Steuereinheit 203 über die Kommunikationsschnittstelle der zweiten Steuereinheit 203 einen (n+2)-ten Satz von Kommunikationsdaten Kn+2, der im Folgenden jedoch ebenfalls nicht weiterbehandelt wird.

Im (n+2)-ten Steuerzyklus wird ferner der durch die erste Steuereinheit 201 in der ersten Ausgabespeichereinheit 215 gespeicherte (n-1)-te Satz von Ausgabedaten On-1 über die erste Eingabe-Ausgabe-Einheit 209 ausgesendet. Analog wird der (n-1)-te Satz von Antwortdaten An-1 über die Kommunikationsschnittstelle ausgesendet.

Im darauffolgenden (n+3)-ten Steuerzyklus wird eine Fehlfunktion der ersten Steuereinheit 201 ermittelt, die bewirkt, dass ein zyklisches Steuern des Automatisierungsprozesses durch die erste Steuereinheit 201 nicht mehr möglich ist. Hierauf wird von der zweiten Steuereinheit 203 der n-te Satz von Ausgabedaten On, der zum Zeitpunkt des (n+3)-ten Steuerzyklus in der zweiten Ausgabespeichereinheit 223 gespeichert ist, über die zweite Eingabe-Ausgabe-Einheit 217 an die Feldgeräte 205 des Automatisierungssystems 200 zum Steuern des Automatisierungsprozesses ausgesendet. Hierdurch ist durch die zweite Steuereinheit 203 gewährleistet, dass im (n+3)-ten Steuerzyklus, in dem eine Steuerung durch die erste Steuereinheit 201 nicht mehr möglich ist, der für diesen Steuerzyklus vorgesehene n-te Satz von Ausgabedaten On an die Feldgeräte 205 des Automatisierungssystems 200 ausgesendet wird. Somit kann bei Fehlfunktion der ersten Steuereinheit 201 eine unverzögerte Steuerung des Automatisierungsprozesses durch die zweite Steuereinheit 203 gewährleistet werden.

Darüber hinaus empfängt im (n+3)-ten Steuerzyklus die zweite Steuereinheit 203 den von der ersten Steuereinheit 201 im (n+2)-ten Steuerzyklus übermittelten (n+2)-ten Satz von Eingabedaten In+2 und den (n+2)-ten Satz von Kommunikationsdaten Kn+2, speichert diese in der zweiten Eingabespeichereinheit 221 und erzeugt einen entsprechenden (n+2)-ten Satz von Ausgabedaten On+2 und einen (n+2)-ten Satz von Antwortdaten An+2 durch Ausführung der Steuerungs-Task P. In der Ausführungsform in Fig. 3 wird das Speichern des (n+2)-ten Satzes von Ausgabedaten On+2 und des (n+2)-ten Satzes von Antwortdaten An+2 in der zweiten Ausgabespeichereinheit 223 jedoch erst in dem darauffolgenden (n+4)-ten Steuerzyklus durchgeführt. Gemäß einer Ausführungsform kann die Bearbeitung der in der zweiten Eingabespeichereinheit 221 gespeicherten Sätze von Eingabedaten zu einem beliebigen Zeitpunkt durchgeführt werden.

Ferner empfängt im (n+3)-ten Steuerzyklus die zweite Steuereinheit 203 über die zweite Eingabe-Ausgabe-Einheit 217 einen (n+3)-ten Satz von Eingabedaten In+3 und über die Kommunikationsschnittstelle einen (n+3)-ten Satz von Kommunikationsdaten Kn+3. Diese speichert die zweite Steuereinheit 203 im (n+3)-ten Steuerzyklus in der zweiten Eingabespeichereinheit 221.

Nach Fehlfunktion der ersten Steuereinheit 201 im (n+3)-ten Steuerzyklus übernimmt die zweite Steuereinheit 203 für die darauffolgenden Steuerzyklen die zyklische Steuerung des Automatisierungsprozesses, sodass im folgenden (n+4)-ten Steuerzyklus die zweite Steuereinheit 203 einen entsprechenden (n+4)-ten Satz von Eingabedaten In+4 über die zweite Eingabe-Ausgabe-Einheit 217 und einen (n+4)-ten Satz von Kommunikationsdaten Kn+4 über die Kommunikationsschnittstelle empfängt und diese in der zweiten Eingabespeichereinheit 221 speichert. Ferner sendet die zweite Steuereinheit 203 zum Steuern des Automatisierungsprozesses im (n+4)-ten Steuerzyklus den in der zweiten Ausgabespeichereinheit 223 gespeicherten (n+1)-ten Satz von Ausgabedaten On+1 aus, der auf dem im (n+1)-ten Steuerzyklus empfangenen Satz von Eingabedaten In+1 basiert. Zur Kommunikation wird der (n+1)-te Satz von Antwortdaten An+1 über die Kommunikationsschnittstelle ausgesendet. In der Ausführungsform in Fig. 3 werden im (n+4)-ten Steuerzyklus ferner ein (n+3)-ter Satz von Ausgabedaten On+3 und ein (n+3)-ter Satz von Antwortdaten An+3 basierend auf dem in der zweiten Eingabespeichereinheit 221 gespeicherten (n+3)-ten Satz von Eingabedaten In+3 und dem (n+3)-ten Satz von Kommunikationsdaten Kn+3 erzeugt und in der zweiten Ausgabespeichereinheit 223 gespeichert.

Analog wird im darauffolgenden (n+5)-ten Steuerzyklus vorgegangen, in dem durch die zweite Steuereinheit 203 wiederum ein (n+5)-ter Satz von Eingabedaten In+5 über die zweite Eingabe-Ausgabe-Einheit 217 und ein (n+5)-ter Satz von Kommunikationsdaten Kn+5 über die Kommunikationsschnittstelle empfangen und in der zweiten Eingabespeichereinheit 221 gespeichert wird. Ferner wird der zum Zeitpunkt des (n+5)-ten Steuerzyklus in der zweiten Ausgabespeichereinheit 223 gespeicherte (n+2)-te Satz von Ausgabedaten On+2 an die Feldgeräte 205 zum Steuern des Automatisierungsprozesses ausgesendet. Ferner wird der (n+2)-te Satz von Kommunikationsdaten Kn+2 über die Kommunikationsschnittstelle ausgesendet. Analog zum (n+4)-ten Steuerzyklus werden ferner im (n+5)-ten Steuerzyklus der in der zweiten Eingabespeichereinheit 221 gespeicherte (n+4)-te Satz von Eingabedaten In+4 und der (n+4)-te Satz von Kommunikationsdaten Kn+4 verarbeitet und ein entsprechender (n+4)-ter Satz von Ausgabedaten On+4 und ein (n+4)-ter Satz von Antwortdaten An+4 erzeugt und in der zweiten Ausgabespeichereinheit 223 gespeichert.

Die in Fig. 3 gezeigte Ausführungsform, insbesondere die dort dargestellten Zahlenbeispiele sind lediglich Beispiele einer möglichen Ausführung des Verfahrens 100 und sollen dieses nicht beschränken. Insbesondere kann die Totzeit x, die in der Ausführungsform in Fig. 3 dem Zeitraum von drei aufeinanderfolgenden Steuerzyklen entspricht, sich auf einen beliebigen Zeitraum erstrecken. Darüber hinaus kann beispielsweise in einem Steuerzyklus eine Mehrzahl verschiedener Steuerungs-Tasks P ausgeführt werden, sodass in einem Steuerzyklus eine Mehrzahl verschiedener Sätze von Ausgabedaten 233 erzeugt werden kann. Darüber hinaus kann das Bearbeiten der empfangenen Sätze von Eingabedaten durch die Bearbeitungseinheiten bzw. das Speichern der erzeugten Sätze von Ausgabedaten in den Ausgabespeichereinheiten jeweils in dem Steuerzyklus durchgeführt werden, in dem die jeweiligen Sätze von Eingabedaten 231 empfangen wurden. Alternativ können die genannten Vorgänge zu einem späteren Steuerzyklus durchgeführt werden. Alternativ kann die Bearbeitung empfangener Sätze von Eingabedaten durch die Bearbeitungseinheit und das Speichern der erzeugten Sätze von Ausgabedaten in den jeweiligen Ausgabespeichereinheiten in einem Zeitraum durchgeführt werden, der eine Mehrzahl von aufeinanderfolgenden Steuerzyklen umfasst.

In Fig. 3 nicht dargestellt, können die in den durch die erste Eingabe-Ausgabe-Einheit 209 der ersten Steuereinheit 201 beziehungsweise durch die zweite Eingabe-Ausgabe-Einheit 217 der zweiten Steuereinheit 203 aufgenommenen n-ten bis (n+2)-ten Sätze von Eingabedaten In, In+1, In+2 miteinander verglichen werden. Hierdurch kann überprüft werden, ob beide Steuereinheiten auf identischen Eingabedaten arbeiten. Analog können die in den n-ten bis (n+2)-ten Steuerzyklen durch die erste Bearbeitungseinheit 211 der ersten Steuereinheit 201 beziehungsweise durch die zweite Bearbeitungseinheit 219 der zweiten Steuereinheit 203 erzeigten n-ten bis (n+2)-ten Ausgabedaten On, On+1, On+2 miteinander verglichen werden. Hierdurch können Fehler in der Verarbeitung der Eingabedaten durch die erste Steuereinheit 201 oder die zweite Steuereinheit 203 ermittelt werden. Die genannten Vergleiche der Eingabedaten beziehungsweise der Ausgabedaten kann durch eine externe Kontrolleinheit (in Fig. 3 nicht dargestellt) ausgeführt werden.

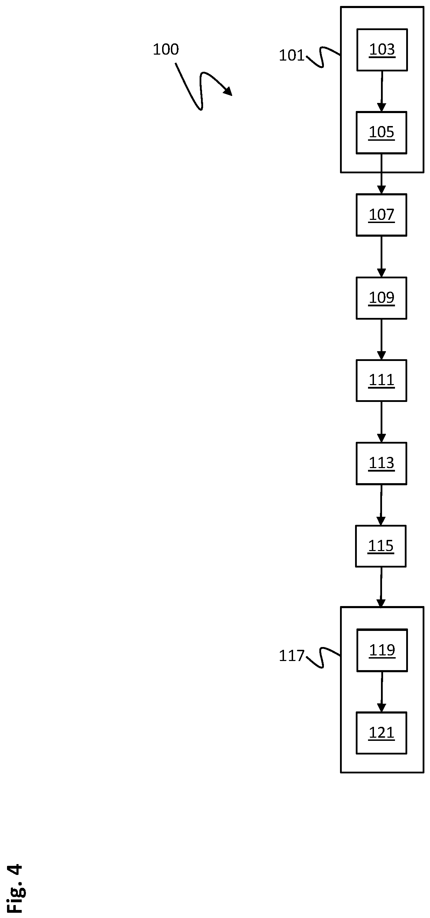

Fig. 4 zeigt ein weiteres Flussdiagramm des Verfahrens 100 zum Steuern eines Automatisierungssystems 200 gemäß einer weiteren Ausführungsform.

Die Ausführungsform in Fig. 4 basiert auf der Ausführungsform in Fig. 2 und umfasst alle dort beschriebenen Verfahrensschritte. Sofern diese in der Ausführungsform in Fig. 4 unverändert bleiben, wird von einer erneuten detaillierten Beschreibung abgesehen.

Abweichend zu der Ausführungsform in Fig. 2 umfasst das Verfahren 100 in der Ausführungsform in Fig. 4 einen zweiten Steuerschritt 117, in dem eine zyklische Steuerung des Automatisierungsprozesses durch die zweite Steuereinheit 203, vergleichbar mit dem (n+4)-ten Steuerzyklus bzw. (n+5)-ten Steuerzyklus in Fig. 3, durchgeführt wird.

Für einen beliebigen (n+m+x)-ten Steuerzyklus, wobei m eine natürliche Zahl >= 1 ist, und wobei der (n+m+x)-te Steuerzyklus um m Steuerzyklen zeitlich später als der (n+x)-te Steuerzyklus ausgeführt wird, umfasst der zweite Steuerschritt 117 einen zweiten Eingabeempfangsschritt 119 und einen zweiten Ausgabesendeschritt 121.

Im zweiten Eingabeempfangsschritt 119 empfängt die zweite Steuereinheit 203 über die zweite Eingabe-Ausgabe-Einheit 217 einen (n+m+x)-ten Satz von Eingabedaten.

Im zweiten Ausgabesendeschritt 121 sendet die zweite Steuereinheit 203 über die zweite Eingabe-Ausgabe-Einheit 217 einen (n+m)-ten Satz von Ausgabedaten an die Feldgeräte 205 des Automatisierungssystems 200 aus. Der (n+m)-te Satz von Ausgabedaten basiert hierbei auf einem (n+m)-ten Satz von Eingabedaten, der in einem (n+m)-ten Steuerzyklus empfangen wurde.

Dem in Fig. 3 dargestellten Zahlenbeispiel folgend entspricht der beliebige (n+m+x)-te Steuerzyklus beispielsweise für m = 2 und x = 3 dem (n+5)-ten Steuerzyklus. Der (n+m)-te Satz von Ausgabedaten entspricht hierbei dem (n+2)-ten Satz von Ausgabedaten On+2, wobei der (n+m+x)-te Satz von Eingabedaten dem (n+5)-ten Satz von Eingabedaten In+5 entspricht.

Die genannten Zahlenbeispiele sind wiederum lediglich beispielhafter Natur und sollen die Erfindung nicht beschränken.

Durch den zweiten Steuerschritt 117 ist somit eine zyklische Steuerung des Automatisierungsprozesses durch die zweite Steuereinheit 203 bei Fehlfunktion der ersten Steuereinheit 201 ermöglicht.

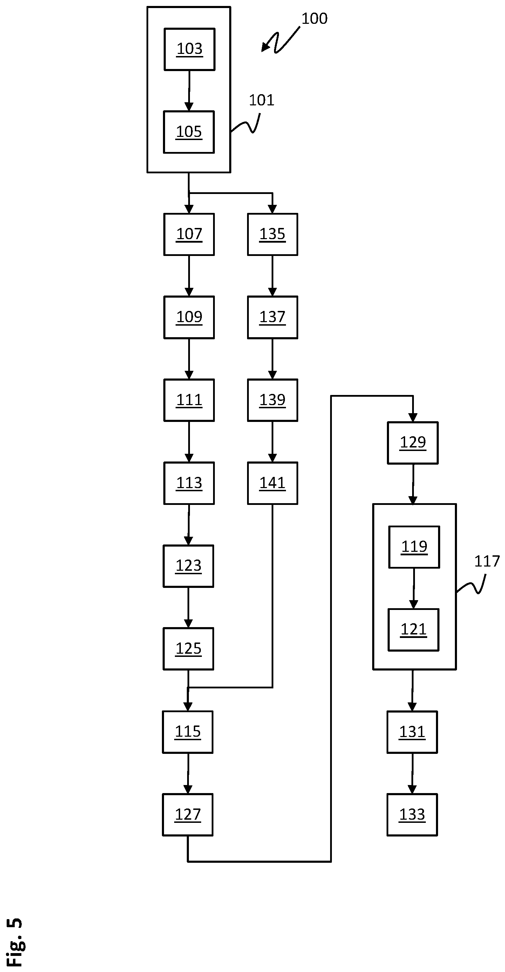

Fig. 5 zeigt ein weiteres Flussdiagramm des Verfahrens 100 zum Steuern eines Automatisierungssystems 200 gemäß einer weiteren Ausführungsform.

Die in Fig. 5 dargestellte Ausführungsform basiert auf der in Fig. 4 dargestellten Ausführungsform und umfasst alle dort beschriebenen Verfahrensschritte. Sollten diese in der Ausführungsform in Fig. 5 unverändert bleiben, wird von einer erneuten detaillierten Beschreibung abgesehen.

Abweichend zu der Ausführungsform in Fig. 4 umfasst das Verfahren 100 in der Ausführungsform in Fig. 5 einen zweiten Bearbeitungsschritt 123 und einen zweiten Ausgabespeicherschritt 125. Im zweiten Bearbeitungsschritt 123 wird durch die erste Bearbeitungseinheit 211 der ersten Steuereinheit 201 der n-te Satz von Eingabedaten In bearbeitet und ein entsprechender n-ter Satz von Ausgabedaten On erzeugt. Im zweiten Ausgabespeicherschritt 125 wird der erzeugte n-te Satz von Ausgabedaten On in der ersten Ausgabespeichereinheit 215 der ersten Steuereinheit 201 gespeichert. Gemäß der Ausführungsform in Fig. 3 kann der zweite Bearbeitungsschritt 123 und der zweite Ausgabespeicherschritt 125 im n-ten Steuerzyklus durchgeführt werden. Alternativ können der zweite Bearbeitungsschritt 123 und der zweite Ausgabespeicherschritt 125 in einem beliebigen Steuerzyklus ausgeführt werden, der zeitlich zwischen dem n-ten Steuerzyklus und dem (n+x)-ten Steuerzyklus durchgeführt wird.

Ferner umfasst in der Ausführungsform in Fig. 5 das Verfahren 100 einen dritten Bearbeitungsschritt 127 und einen dritten Ausgabespeicherschritt 129. Im dritten Bearbeitungsschritt 127 wird der (n+m)-te Satz von Eingabedaten bearbeitet und ein entsprechender (n+m)-ter Satz von Ausgabedaten durch die zweite Bearbeitungseinheit 219 der zweiten Steuereinheit 203 erzeugt. Im dritten Ausgabespeicherschritt 129 wird der erzeugte (n+m)-te Satz von Ausgabedaten in der zweiten Ausgabespeichereinheit 223 der zweiten Steuereinheit 203 gespeichert. Gemäß der Ausführungsform in Fig. 3 können der dritte Bearbeitungsschritt 127 und der dritte Ausgabespeicherschritt 129 im (n+m)-ten Steuerzyklus durchgeführt werden. Alternativ können der dritte Bearbeitungsschritt 127 und der dritte Ausgabespeicherschritt 129 in einem beliebigen Steuerzyklus durchgeführt werden, der zeitlich zwischen dem (n+m)-ten Steuerzyklus und dem (n+m+x)-ten Steuerzyklus durchgeführt wird.

Der dritte Bearbeitungsschritt 127 und der dritte Ausgabespeicherschritt 129 können im (n+m)-ten Steuerzyklus ausgeführt werden. Alternativ können der dritte Bearbeitungsschritt 127 und der dritte Ausgabespeicherschritt 129 analog zu der Ausführungsform in Fig. 3 in einem beliebigen Steuerzyklus ausgeführt werden, der zeitlich zwischen dem (n+m)-ten Steuerzyklus und dem (n+m+x)-ten Steuerzyklus angeordnet ist. Für das Zahlenbeispiel mit m = 1 und x = 3 in der Ausführungsform in Fig. 3 wird der dritte Bearbeitungsschritt 127 und der dritte Ausgabespeicherschritt 129, sprich: das Bearbeiten des (n+2)-ten Satzes von Eingabedaten In+2 und das Erzeugen des entsprechenden (n+2)-ten Satzes von Ausgabedaten On+2, im (n+3)-ten Steuerzyklus ausgeführt. Das Speichern des (n+2)-ten Satzes von Ausgabedaten On+2 in der zweiten Ausgabespeichereinheit 223 wird hingegen im (n+4)-ten Steuerzyklus durchgeführt.

Ferner umfasst das Verfahren 100 in der Ausführungsform in Fig. 5 einen vierten Bearbeitungsschritt 131 und einen vierten Ausgabespeicherschritt 133. Im vierten Bearbeitungsschritt 131 wird der (n+m+x)-te Satz von Eingabedaten bearbeitet und ein entsprechender (n+m+x)-ter Satz von Ausgabedaten durch die zweite Bearbeitungseinheit 219 der zweiten Steuereinheit 203 erzeugt. Im vierten Ausgabespeicherschritt 133 wird der erzeugte (n+m+x)-te Satz von Ausgabedaten in der zweiten Ausgabespeichereinheit 223 der zweiten Steuereinheit 203 gespeichert. Der vierte Bearbeitungsschritt 131 und der vierte Ausgabespeicherschritt 133 können beispielsweise im (n+m+x)-ten Steuerzyklus ausgeführt werden. Analog können der vierte Bearbeitungsschritt 131 und der vierte Ausgabespeicherschritt 133 in einem beliebigen Steuerzyklus durchgeführt werden, der zeitlich zwischen dem (n+m+x)-ten Steuerzyklus und einem (n+m+2x)-ten Steuerzyklus ausgeführt wird.

Ferner umfasst die Ausführungsform in Fig. 5 einen dritten Eingabeempfangsschritt 135, in dem durch die zweite Eingabe-Ausgabe-Einheit 217 der zweiten Steuereinheit 203 im n-ten Steuerzyklus ein n-ter Satz von Eingabedaten In empfangen wird.

In einem Vergleichsschritt 137 wird der n-te Satz von Eingabedaten In der ersten Steuereinheit 201 mit dem weiteren n-ten Satz von Eingabedaten In der zweiten Steuereinheit 203 verglichen.

In einem Abweichungsermittlungsschritt 139 wird eine Abweichung zwischen dem n-ten Satz von Eingabedaten In der ersten Steuereinheit 201 und dem weiteren n-ten Satz von Eingabedaten In der zweiten Steuereinheit 203 ermittelt.

Auf Basis der Abweichung zwischen den beiden n-ten Sätzen von Eingabedaten der ersten Steuereinheit 201 und der zweiten Steuereinheit 203 wird in einem Übertragungsfehlerermittlungsschritt 141 ein Fehler in einer Datenübertragung zwischen den Feldgeräten 205 und der ersten Steuereinheit 201 ermittelt. Dies entspricht einer Fehlfunktion der ersten Steuereinheit 201, sodass nach Ermittlung der fehlerhaften Datenübertragung im weiteren Ausgabesendeschritt 115 die Steuerung des Automatisierungsprozesses durch die zweite Steuereinheit 203 übernommen wird.

In der Ausführungsform in Fig. 3 ist der Vergleichsschritt 137 nicht explizit dargestellt. Wie in Fig. 3 dargestellt nehmen beide Steuereinheiten 201, 203 zu jedem Steuerzyklus entsprechende Sätze von Eingabedaten auf. Ein Vergleich der jeweils durch die erste Steuereinheit 201 bzw. durch die zweite Steuereinheit 203 aufgenommenen Sätze von Eingabedaten kann somit für jeden Steuerzyklus durchgeführt werden, sodass in jedem Steuerzyklus eine Funktionsfähigkeit der Datenübertragung zwischen den Feldgeräten 205 und der ersten Steuereinheit 201 bzw. der zweiten Steuereinheit 203 durchgeführt werden kann.

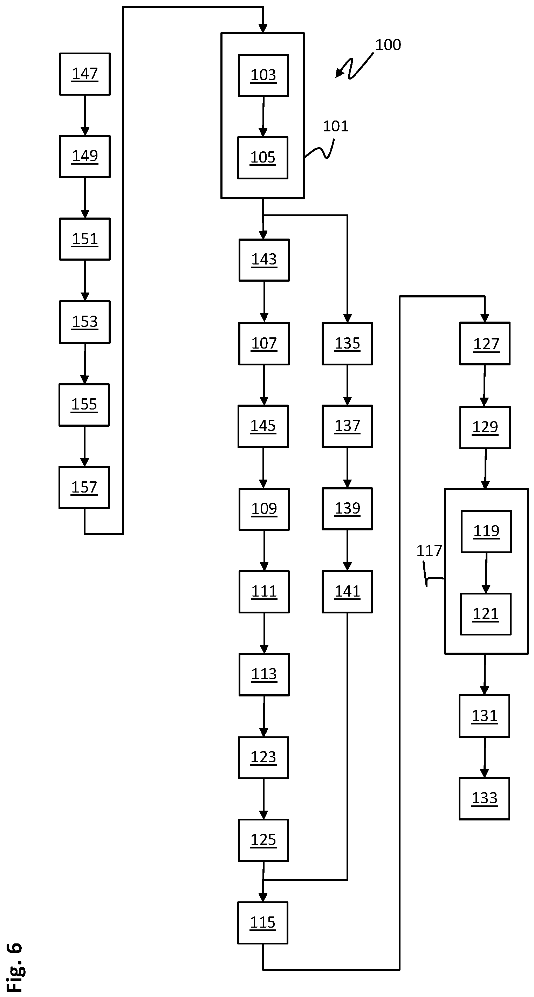

Fig. 6 zeigt ein weiteres Flussdiagramm des Verfahrens 100 zum Steuern eines Automatisierungssystems 200 gemäß einer weiteren Ausführungsform.

Die Ausführungsform des Verfahrens 100 in Fig. 6 basiert auf der Ausführungsform des Verfahrens 100 in Fig. 5 und umfasst alle dort beschriebenen Verfahrensschritte. Sollten diese in der Ausführungsform in Fig. 6 unverändert bleiben, wird von einer erneuten detaillierten Beschreibung abgesehen.

Abweichend von der Ausführungsform in Fig. 5 umfasst das Verfahren 100 in der Ausführungsform in Fig. 6 einen Speicherkopierschritt 147. Im Speicherkopierschritt 147 wird eine Speicherkopie des ersten Speicherbereichs der ersten Steuereinheit 201 vorgenommen. Die Speicherkopie umfasst hierbei die in dem ersten Speicherbereich der ersten Steuereinheit 201 gespeicherten Sätze von Eingabedaten bzw. Ausgabedaten, die zeitlich vor einem beliebigen n-ten Steuerzyklus in der ersten Eingabespeichereinheit 213 bzw. der ersten Ausgabespeichereinheit 215 gespeichert sind.

In einem Kopieübermittlungsschritt 149 wird die Speicherkopie an die zweite Steuereinheit 203 übermittelt.

In einem ersten Kopiespeicherschritt 151 werden die Sätze von Eingabedaten der Speicherkopie in der zweiten Eingabespeichereinheit 221 der zweiten Steuereinheit 203 gespeichert.

In einem zweiten Kopiespeicherschritt 153 werden die Sätze von Ausgabedaten der Speicherkopie in der zweiten Ausgabespeichereinheit 223 der zweiten Steuereinheit 203 gespeichert.

In einem fünften Bearbeitungsschritt 155 werden die Sätze von Eingabedaten der Speicherkopie durch die zweite Bearbeitungseinheit 219 auf Basis der Steuerungs-Task P bearbeitet und entsprechende Sätze von Ausgabedaten erzeugt.

In einem fünften Ausgabespeicherschritt 157 werden die erzeugten Sätze von Ausgabedaten in der zweiten Ausgabespeichereinheit 223 der zweiten Steuereinheit 203 gespeichert.

Hierdurch wird erreicht, dass insbesondere beim Auffahren des Systems die zweite Steuereinheit 203 auf den Prozesszustand der ersten Steuereinheit 201 gebracht wird, sodass nach Speicherung der entsprechenden Sätze von Eingabedaten und Ausgabedaten der Speicherkopie die erste Steuereinheit 201 und die zweite Steuereinheit 203 auf identischen Sätzen von Eingabedaten und identischen Sätzen von Ausgabedaten ausgeführt werden können. Hierdurch wird erreicht, dass die erste Steuereinheit 201 und die zweite Steuereinheit 203 zu jeder Zeit der zyklischen Steuerung des Automatisierungsprozesses austauschbar sind und Steuerungsaufgaben der einen Steuereinheit unmittelbar durch die andere Steuereinheit übernommen werden können.

Neben den Sätzen von Eingabedaten und Ausgabedaten kann die Speicherkopie ferner sämtliche Information eines Programmzustands des Steuerprogramms des Automatisierungssystems umfassen. Im Programmzustand kann sämtliche zur Steuerung des Automatisierungsprozesses benötigte Information gespeichert sein. Insbesondere können im Programmzustand alle Variablen und Programmobjekte des Steuerprogramms mit entsprechenden Werten gespeichert sein. Der Programmzustand beschreibt somit den Zustand des Automatisierungssystems zu einem Zeitpunkt der Speicherung des Programmzustands.

Die Übertragung der Speicherkopie an die zweite Steuereinheit 203 sowie die Speicherung der in der Speicherkopie enthaltenen Sätze von Eingabedaten in der zweiten Eingabespeichereinheit 221 wie der Speicherung der in der Speicherkopie enthaltenen Sätze von Ausgabedaten in der zweiten Ausgabespeichereinheit 223 wie auch der Bearbeitung der Sätze von Eingabedaten und der Erzeugung entsprechender Sätze von Ausgabedaten durch die zweite Bearbeitungseinheit 219 der zweiten Steuereinheit 203 können in einem Steuerzyklus durchgeführt werden. Alternativ, insbesondere in Abhängigkeit des Datenumfangs der Speicherkopie, können die die Übertragung und die Speicherung der Sätze der Eingabedaten in der zweiten Eingabespeichereinheit 221 bzw. die Speicherung der Sätze von Ausgabedaten in der zweiten Ausgabespeichereinheit 223 sowie die Bearbeitung der Sätze von Eingabedaten und die Erzeugung entsprechender Sätze von Ausgabedaten durch die zweite Bearbeitungseinheit 219 und das entsprechende Speichern der erzeugten Sätze von Ausgabedaten in der zweiten Ausgabespeichereinheit 223 über einen Zeitraum durchgeführt werden, der eine Mehrzahl von aufeinanderfolgenden Steuerzyklen umfasst. Insbesondere wenn die Speicherkopie den Programmzustand des Steuerprogramms umfasst und somit, in Abhängigkeit der Komplexität des jeweils zu steuernden Automatisierungsprozesses beziehungsweise des Automatisierungssystems, kann die Speicherkopie einen substantiellen Datenumfang aufweisen.

In diesem Fall können die Übertragung und die Speicherung der in der Speicherkopie enthaltenen Daten durch die zweite Steuereinheit 203 einen Zeitraum in Anspruch nehmen, der eine Mehrzahl von aufeinander folgenden Steuerzyklen umfasst. Nach Beendigung des Übertragungs- und Speichervorgangs der Speicherkopie in dem Speicherbereich der zweiten Steuereinheit 203 und des Einlesens der Daten des Speicherkopie durch die zweite Steuereinheit 203 kann die zweite Speichereinheit 203, wie oben beschrieben, über die zweite Bearbeitungseinheit 219 Sätze von Ausgabedaten generieren und diese, in der zweiten Ausgabespeichereinheit 223 speichern. Die zweite Steuereinheit 203 kann hiermit solange fortfahren, bis die zweite Steuereinheit 203 auf dem gleichen Stand ist wie die erste Steuereinheit 203, sprich die zweite Steuereinheit 203 eine Satz von Ausgabedaten generiert und in der zweiten Ausgabespeichereinheit 223 gespeichert hat, der gemäß der vorbestimmten Totzeit in einem folgenden Steuerzyklus auszusenden wäre.

In der gezeigten Ausführungsform umfasst das Verfahren 100 ferner einen Eingabespeicherschritt 143 und einen zweiten Eingabespeicherschritt 145. Im ersten Eingabespeicherschritt 143 speichern die erste Steuereinheit 201 den im n-ten Steuerzyklus empfangen n-ten Satz von Eingabedaten In in der ersten Eingabespeichereinheit 213 n-ten Steuerzyklus. Im zweiten Eingabespeicherschritt 145 speichert die zweite Steuereinheit 203 den von der ersten Steuereinheit 201 an die zweite Steuereinheit 203 übertragenen n-ten Satz von Eingabedaten In in der zweiten Eingabespeichereinheit 221 der zweiten Steuereinheit 203. Durch das Speichern des n-ten Satzes von Eingabedaten In in der ersten Eingabespeichereinheit 213 kann erreicht werden, dass die empfangenen Eingabedaten 231 in Form des n-ten Satzes von Eingabedaten In nicht direkt in dem Steuerzyklus durch die Bearbeitungseinheit durch Ausführen der Steuerungstask P verarbeitet werden müssen, in dem die Eingabedaten 231 empfangen werden. Stattdessen kann eine beliebige spätere Verarbeitung vorgenommen werden, beispielsweise zu einem Zeitpunkt, zu dem eine Rechenkapazität vorteilhaft ist und durch die Verarbeitung der Eingabedaten 231 keine anderen Anwendungen verzögert werden. Gleiches gilt für das Speicher der Eingabedaten in der zweiten Eingabespeichereinheit 221 durch die zweite Steuereinheit 203. Hierdurch ist auch die zweite Steuereinheit 203 zur Verarbeitung der Eingabedaten nicht an den jeweiligen Steuerzyklus gebunden, in die von der ersten Steuereinheit 201 an die zweite Steuereinheit 203 ausgesendeten Eingabedaten 231 von der zweiten Steuereinheit 203 empfangen werden.

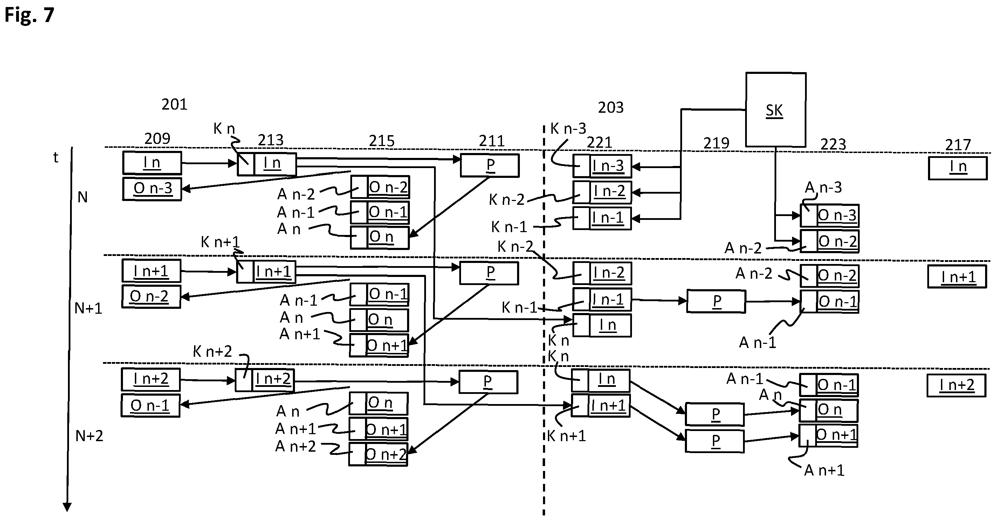

Fig. 7 zeigt in schematischer Darstellung einen zeitlichen Ablauf des Verfahrens 100 in Fig. 6.

Die Darstellung in Fig. 7 des zeitlichen Ablaufs des Verfahrens 100 erfolgt analog zu der Darstellung in Fig. 3. Der Fokus der Darstellung in Fig. 7 liegt auf der Speicherung der Speicherkopie SK und der Implementierung der Information der Speicherkopie SK durch die zweite Steuereinheit 203.

Die Fig. 7 zeigt den Fall, dass der Automatisierungsprozess ausschließlich durch die erste Steuereinheit 201 zyklisch gesteuert wird. Hierzu empfängt die erste Steuereinheit in jedem Steuerzyklus einen entsprechenden Satz von Eingabedaten und sendet einen Satz von Ausgabedaten an die Feldgeräte aus. Die Vorgänge der ersten Steuereinheit 201 zum Steuern des Automatisierungsprozesses erfolgen analog zum dem in Fig. 3 dargestellten Mechanismus und soll im Folgenden nicht erneut beschrieben werden.

In einem beliebigen n-ten Steuerzyklus empfängt die zweite Steuereinheit 203 die Speicherkopie SK des Programmzustands des Automatisierungssystems 200, in dem die umfassende zum Steuern des Automatisierungsprozesses benötigte Information, inklusive der Zustände der einzelnen Komponenten, sprich Geräten, des Automatisierungssystems 200, die in den Automatisierungsprozess involviert sind, und speichert die Speicherkopie SK im Speicherbereich der zweiten Steuereinheit 203.

Abweichend zu dem in Fig. 7 dargestellten, kann das Empfangen und Speichern der Speicherkopie SK durch die zweite Steuereinheit 203 eine Mehrzahl von aufeinander folgenden Steuerzyklen umfassen.

In der Ausführungsform in Fig. 7 speichert die zweite Steuereinheit 203 aus der Speicherkopie SK im n-ten Steuerzyklus einen n-3-ten Satz von Eingabedaten In-3 und Kommunikationsdaten Kn-3, einen n-2-ten Satz von Eingabedaten In-2 und Kommunikationsdaten Kn-2 und einen n-1-ten Satz von Eingabedaten In-1 und Kommunikationsdaten Kn-1 in der zweiten Eingabespeichereinheit 221. Darüber hinaus speichert die zweite Steuereinheit 203 aus der Speicherkopie SK einen n-3-ten Satz von Ausgabedaten On-3 und Antwortdaten An-3 und einen n-2-ten Satz von Ausgabedaten On-2 und Antwortdaten An-2 in der zweiten Ausgabespeichereinheit 223. Die dargestellte Anzahl von Sätzen von Eingabedaten und Ausgabedaten, die aus der Speicherkopie SK in den jeweiligen Speichereinheiten gespeichert werden, sind lediglich beispielhafter Natur und können beliebig variieren.

In einem folgenden n+1-ten Steuerzyklus empfängt die zweite Steuereinheit 203 von der ersten Steuereinheit 201 den von der ersten Steuereinheit 201 im n-ten Steuerzyklus empfangene n-ten Satz von Eingabedaten In inklusive der Kommunikationsdaten Kn und speichert diesen in der zweiten Eingabespeichereinheit 221. Die Bearbeitung der n-ten Sätze von Eingabedaten In und Kommunikationsdaten Kn durch Ausführen der Steuerungs-Task P wird jedoch nicht im n+1-ten Steuerzyklus sondern zu einem späteren Steuerzyklus, in der gezeigten Ausführungsform im darauffolgenden n+2-ten Steuerzyklus ausgeführt. Diese Verzögerung der Bearbeitung ist beispielhaft und soll lediglich illustrieren, dass das Empfangen und das Bearbeiten von Eingabedaten 231 und Kommunikationsdaten zu unterschiedlichen Zeitpunkten und in unterschiedlichen Steuerzyklen durchgeführt werden können. Ferner wird im n-ten Steuerzyklus der (n-1)-te Satz von Eingabedaten In-1 durch die zweite Bearbeitungseinheit 219 bearbeitet und ein entsprechender (n-1)-ter Satz von Ausgabedaten On-1 erzeugt und dieser in der zweiten Ausgabespeichereinheit 223 gespeichert. Analog wird der (n-1)-te Satz von Kommunikationsdaten Kn-1 durch Ausführen des Steuerungs-Task P verarbeitet und ein entsprechender (n-1)-ter Satz von Antwortdaten An-1 generiert und dieser in der Ausgabespeichereinheit 223 gespeichert.

In einem n+2-ten Steuerzyklus wird ein von der ersten Steuereinheit 201 ausgesendeter n+1-ter Satz von Eingabedaten In+1 inklusive der Kommunikationsdaten Kn+1 empfangen und in der zweiten Eingabespeichereinheit 221 gespeichert. Darüber hinaus werden der n-te Satz von Eingabedaten In und der (n+1)-te Satz von Eingabedaten In+1 von der zweiten Bearbeitungseinheit 219 inklusive der jeweiligen Kommunikationsdaten verarbeitet und entsprechend ein n-ter Satz von Ausgabedaten On, ein n-ter Satz von Antwortdaten An, ein (n+1)-ter Satz von Ausgabedaten On+1 und ein (n+1)-ter Satz von Antwortdaten An+1 generiert und in der zweiten Ausgabespeichereinheit 223 gespeichert. Wie oben bereits erwähnt, kann das Ausführen der Steuerungs-Task P auf entsprechenden Eingabedaten durch die erste Bearbeitungseinheit 213 oder die zweite Bearbeitungseinheit 219 zu beliebigen Zeiten durchgeführt werden, sodass auch mehrere Sätze von Eingabedaten gegebenenfalls innerhalb eines Steuerzyklus verarbeitet werden können.

In der Ausführungsform in Fig. 7 ist im n+2-ten Steuerzyklus, insbesondere nach Beendigung des n+1-ten Steuerzyklus, die Aufnahme der Information der Speicherkopie SK durch die zweite Steuereinheit 203 abgeschlossen. Ab dem n+2-ten Steuerzyklus verarbeitet die zweite Steuereinheit 203 ausschließ Eingabedaten, von der ersten Steuereinheit 201 in einem unmittelbar zuvor durchgeführten Steuerzyklus empfangen wurden. In der zweiten Ausgabespeichereinheit 223 sind ferner die aktuellen Sätze von Ausgabedaten, sprich die Sätze von Ausgabedaten On, die in einem unmittelbar nachfolgenden Steuerzyklus gemäß der vorbestimmten Totzeit x auszusenden sind. Die zweite Steuereinheit 203 ist somit nach Beendigung der Speicherung der Speicherkopie SK zu Beginn des n+2-ten Steuerzyklus auf dem Stand der ersten Steuereinheit 201, umfasst die Sätze von Ausgabedaten und Antwortdaten, die im direkt folgenden Steuerzyklus oder den folgenden Steuerzyklen auszusenden wären und ist somit in der Lage, die Steuerung des Automatisierungsprozesses nahtlos von der ersten Steuereinheit 201 zu übernehmen und fortzusetzen.

Während der n-ten bis (n+2)-ten Steuerzyklen empfängt die zweite Steuereinheit 203 ferner n-te bis (n+2)-te Sätze von Kommunikationsdaten Kn, Kn+1, Kn+2, die im Verlauf der Steuerzyklen jedoch nicht weiter berücksichtigt werden, solange die Steuerung des Automatisierungsprozesses und die Datenkommunikation durch die erste Steuereinheit 201 gesteuert wird.

In Fig. 3 und Fig. 7 werden die von der ersten Steuereinheit 201 in einem Steuerzyklus ausgesendeten Eingabedaten von der zweiten Steuereinheit 203 in dem unmittelbar folgenden Steuerzyklus empfangen. Aufgrund der Zeit, die für die Datenübertragung benötigt wird, kann dies in der Realität einen größeren Zeitraum beanspruchen, sodass ein Empfang durch die zweite Steuereinheit 203 zu einem späteren Steuerzyklus erfolgen kann.

Die in Fig. 3 und Fig. 7 in den verschiedenen Steuerzyklen zum Generieren von Ausgabedaten ausgeführten Steuerungs-Tasks P können eine identische Steuerungs-Task P sein, die in im zyklischen Steuern des Automatisierungsprozesses widerholt in aufeinander folgenden Steuerzyklen ausgeführt wird. Die Steuerungs-Task P kann beispielsweise ein vollständiges Steuerprogramm des Automatisierungsprozesses darstellen. Alternativ kann die Steuerungs-Task P unterschiedliche Teile des Steuerprogramms darstellen, die in unterschiedlichen Steuerzyklen ausgeführt werden. Dies ist in den Fig. 3 und Fig 7 nicht explizit dargestellt.

Die in den Fig. 3 und Fig. 7 durch die zweite Steuereinheit 203 erzeugten Ausgabedaten, die in den dafür vorgesehenen Steuerzyklen nicht durch die zweite Steuereinheit 203 sondern durch die erste Steuereinheit 201 ausgesendet werden, da eine Fehlfunktion der ersten Steuereinheit 201 nicht vorliegt, werden in folgenden Steuerzyklen aus der zweiten Eingabe-Ausgabe-Einheit 217 der zweiten Steuereinheit 203 entfernt. Ausgabedaten und auch Kommunikationsdaten werden durch die zweite Steuereinheit 203, insbesondere durch die zweite Eingabe-Ausgabe-Einheit 217, nur ausgesendet, wenn eine Fehlfunktion der ersten Steuereinheit vorliegt und die Steuerung des Automatisierungsprozesses von der zweiten Steuereinheit 203 übernommen wird.

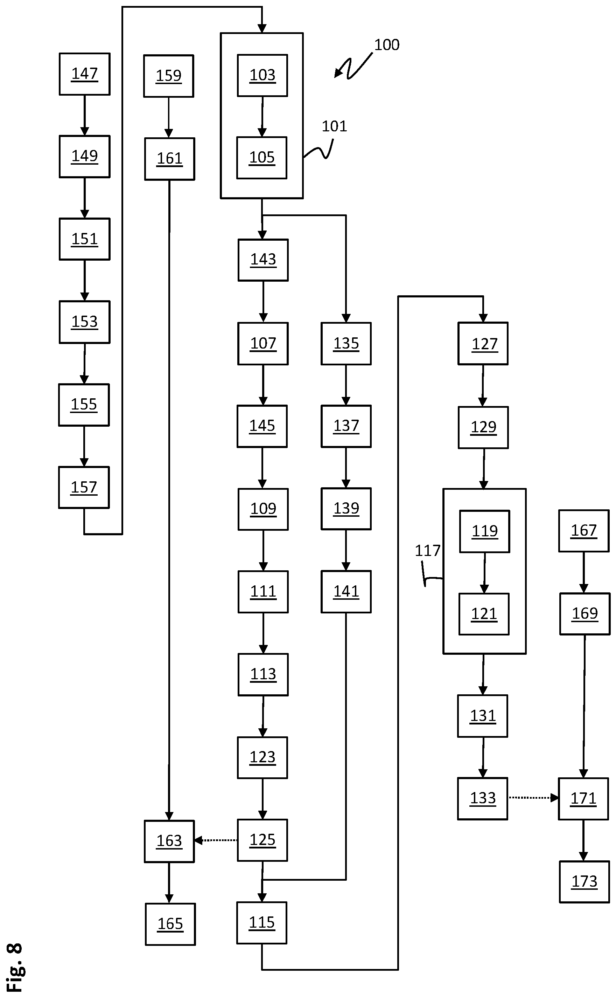

Fig. 8 zeigt ein weiteres Flussdiagramm des Verfahrens 100 zum Steuern eines Automatisierungssystems 200 gemäß einer weiteren Ausführungsform.

Die Ausführungsform des Verfahrens 100 in Fig. 8 basiert auf der Ausführungsform des Verfahrens 100 in Fig. 6 und umfasst alle dort beschriebenen Verfahrensschritte. Sollten diese in der Ausführungsform in Fig. 8 unverändert bleiben, wird von einer erneuten detaillierten Beschreibung abgesehen.

Abweichend zu der Ausführungsform in Fig. 6 umfasst das Verfahren 100 in Fig. 8 einen ersten Nachrichtenempfangsschritt 159, in dem durch die erste Kommunikationseinheit der ersten Steuereinheit 201 im n-ten Steuerzyklus ein n-ter Satz von Kommunikationsdaten Kn empfangen wird.

In einem ersten Antworterzeugungsschritt 161 wird darauffolgend basierend auf dem empfangenen n-ten Satz von Kommunikationsdaten Kn ein n-ter Satz von Antwortdaten An bestimmt.

In einem ersten Antwortspeicherschritt 163 wird der n-te Satz von Antwortdaten An in der ersten Ausgabespeichereinheit 215 der Steuereinheit 201 gespeichert.

In einem ersten Antwortsendeschritt 165 wird der in der ersten Ausgabespeichereinheit 215 gespeicherte n-te Satz von Antwortdaten An über die erste Kommunikationsschnittstelle der ersten Steuereinheit 201 im (n+x)-ten Steuerzyklus ausgesendet.

Gemäß der Ausführungsform in Fig. 3 wird der empfangene n-te Satz von Kommunikationsdaten Kn zusammen mit dem n-ten Satz von Eingabedaten In in der ersten Eingabespeichereinheit 213 der ersten Steuereinheit 201 gespeichert. Analog wird der n-te Satz von Antwortdaten An gemeinsam mit dem n-ten Satz von Ausgabedaten On in der ersten Ausgabespeichereinheit 215 gespeichert. Analog zu der Ausführungsform in Fig. 3 können die Sätze von Antwortdaten zusammen mit den Sätzen von Ausgabedaten von der ersten Steuereinheit 201 an die zweite Steuereinheit 203 zur Datenkommunikation übertragen werden.

Ferner werden einem zweiten Nachrichtenempfangsschritt 167 (n+m+x)-te Kommunikationsdaten durch die zweite Kommunikationseinheit der zweiten Steuereinheit 203 im (n+m+x)-ten Steuerzyklus empfangen.

In einem zweiten Antworterzeugungsschritt 169 werden auf die empfangenen (n+m+x)-ten Kommunikationsdaten (n+m+x)-te Antwortdaten erzeugt.

In einem zweiten Antwortspeicherschritt 171 werden die (n+m+x)-ten Antwortdaten in der zweiten Ausgabespeichereinheit 223 der zweiten Steuereinheit 203 gespeichert.

In einem zweiten Antwortsendeschritt 173 werden die (n+m+x)-ten Antwortdaten über die zweite Kommunikationsschnittstelle der zweiten Steuereinheit 203 in einem (n+m+2x)-ten Steuerzyklus ausgesendet. Über die Datenübertragung der Kommunikationsdaten bzw. der Antwortdaten ist eine Datenkommunikation zwischen Modulen des Automatisierungssystems 200 insbesondere zwischen der ersten Steuereinheit 201 und der zweiten Steuereinheit 203 ermöglicht.

### Bezugszeichenliste

- 100: Verfahren
- 101: erster Steuerschritt
- 103: erster Eingabeempfangsschritt
- 105: erster Ausgabesendeschritt
- 107: erster Datenübermittlungsschritt
- 109: erster Bearbeitungsschritt
- 111: erster Ausgabespeicherschritt
- 113: Fehlerermittlungsschritt
- 115: weiterer Ausgabesendeschritt
- 117: zweiter Steuerschritt
- 119: zweiter Eingabeempfangsschritt
- 121: zweiter Ausgabesendeschritt
- 123: zweiter Bearbeitungsschritt
- 125: zweiter Ausgabespeicherschritt
- 127: dritter Bearbeitungsschritt
- 129: dritter Ausgabespeicherschritt
- 131: vierter Bearbeitungsschritt
- 133: vierter Ausgabespeicherschritt
- 135: dritter Eingabeempfangsschritt
- 137: Vergleichsschritt
- 139: Abweichungsermittlungsschritt
- 141: Übertragungsfehlerermittlungsschritt
- 143: erster Eingabespeicherschritt
- 145: zweiter Eingabespeicherschritt
- 147: Speicherkopierschritt
- 149: Kopieübermittlungsschritt
- 151: erster Kopiespeicherschritt
- 153: zweiter Kopiespeicherschritt
- 155: fünfter Bearbeitungsschritt
- 157: fünfter Ausgabespeicherschritt
- 159: erster Nachrichtempfangsschritt
- 161: erster Antworterzeugungsschritt
- 163: erster Antwortspeicherschritt
- 165: erster Antwortsendeschritt
- 167: zweiter Nachrichtempfangsschritt
- 169: zweiter Antworterzeugungsschritt
- 171: zweiter Antwortspeicherschritt
- 173: zweiter Antwortsendeschritt

- 200: Automatisierungssystem
- 201: erste Steuereinheit
- 203: zweite Steuereinheit
- 205: Feldgerät
- 207: Datenbus
- 209: erste Eingabe-Ausgabe-Einheit
- 211: erste Bearbeitungseinheit
- 213: erste Eingabespeichereinheit
- 215: erste Ausgabespeichereinheit
- 217: zweite Eingabe-Ausgabe-Einheit
- 219: zweite Bearbeitungseinheit
- 221: zweite Eingabespeichereinheit
- 223: zweite Ausgabespeichereinheit
- 225: interne Datenschnittstelle
- 227: Datenverbindung
- 229: erste Verbindungseinheit
- 230: zweite Verbindungseinheit
- 231: Satz von Eingabedaten
- 233: Satz von Ausgabedaten
- 235: Kommunikationsdaten
- 237: Antwortdaten

- P: Steuerungs-Task

- In: n-ter Satz von Eingabedaten
- In+1: (n+1)-ter Satz von Eingabedaten
- In+2: (n+2)-ter Satz von Eingabedaten
- In+3: (n+3)-ter Satz von Eingabedaten
- In+4: (n+4)-ter Satz von Eingabedaten
- In+5: (n+5)-ter Satz von Eingabedaten
- In-1: (n-1)-ter Satz von Eingabedaten
- In-2: (n-2)-ter Satz von Eingabedaten
- In-3: (n-3)-ter Satz von Eingabedaten
- On: n-ter Satz von Ausgabedaten
- On+1: (n+1)-ter Satz von Ausgabedaten
- On+2: (n+2)-ter Satz von Ausgabedaten
- On+3: (n+3)-ter Satz von Ausgabedaten
- On+4: (n+4)-ter Satz von Ausgabedaten
- On-1: (n-1)-ter Satz von Ausgabedaten
- On-2: (n-2)-ter Satz von Ausgabedaten
- On-3: (n-3)-ter Satz von Ausgabedaten

- Kn: n-te Kommunikationsdaten
- Kn+1: (n+1)-te Kommunikationsdaten
- Kn+2: (n+2)-te Kommunikationsdaten
- Kn+3: (n+3)-te Kommunikationsdaten
- Kn+4: (n+4)-te Kommunikationsdaten
- Kn+5: (n+5)-te Kommunikationsdaten
- Kn-1: (n-1)-te Kommunikationsdaten
- Kn-2: (n-2)-te Kommunikationsdaten
- Kn-3: (n-3)-te Kommunikationsdaten

- An: n-te Antwortdaten
- An+1: (n+1)-te Antwortdaten
- An+2: (n+2)-te Antwortdaten
- An+3: (n+3)-te Antwortdaten
- An+4: (n+4)-te Antwortdaten
- An-1: (n-1)-te Antwortdaten
- An-2: (n-2)-te Antwortdaten
- An-3: (n-3)-te Antwortdaten

## Patentansprüche

1. Verfahren (100) zum Steuern eines Automatisierungssystems (200) mit Steuerungs-Redundanz, wobei das Automatisierungssystem (200) wenigstens eine erste Steuereinheit (201), eine zweite Steuereinheit (203) und eine Mehrzahl von Feldgeräten (205) umfasst, die über einen Datenbus (207) mit der ersten Steuereinheit (201) und der zweiten Steuereinheit (203) verbunden sind, wobei die erste Steuereinheit (201) und die zweite Steuereinheit (203) eingerichtet sind, einen Automatisierungsprozess des Automatisierungssystems (200) zyklisch zu steuern, wobei die erste Steuereinheit (201) umfasst:
eine erste Eingabe-Ausgabe-Einheit (209) zum Empfangen von Eingabedaten (231) der Feldgeräte (205) und zum Aussenden von Ausgabedaten (233) an die Feldgeräte (205), wobei die Eingabedaten (231) als ein Prozessabbild von Eingängen des Automatisierungsprozesses zusammengefasst sind, und wobei die Ausgabedaten (233) als ein Prozessabbild von Ausgängen des Automatisierungsprozesses zusammengefasst sind,
eine erste Bearbeitungseinheit (211) zum Ausführen wenigstens einer Steuerungs-Task (P) und zum Analysieren der empfangenen Eingabedaten (231) und zum Erzeugen von Ausgabedaten (233) gemäß der Steuerungs-Task (P), und
eine erste Ausgabespeichereinheit (215) zum Speichern der generierten Ausgabedaten (233), wobei die zweite Steuereinheit (201) umfasst:
eine zweite Eingabe-Ausgabe-Einheit (217) zum Empfangen von Eingabedaten (231) der Feldgeräte (205) und zum Aussenden von Ausgabedaten (233) an die Feldgeräte (205),
eine zweite Bearbeitungs-Einheit (219) zum Ausführen der wenigstens einen Steuerungs-Task (P) und zum Analysieren der empfangenen Eingabedaten (231) und zum Erzeugen von Ausgabedaten (233) gemäß der Steuerungs-Task (P), und
eine zweite Ausgabespeichereinheit (223) zum Speichern der generierten Ausgabedaten (233), und wobei das Verfahren (100) umfasst:
Zyklisches Steuern des Automatisierungsprozesses des Automatisierungssystems (200) durch die erste Steuereinheit (201) in einem ersten Steuerschritt (101), wobei der erste Steuerschritt (101) in einem n-ten Steuerzyklus ausgeführt wird, wobei der n-te Steuerzyklus zeitlich nach einem Ausführen von n-1 Steuerzyklen ausgeführt wird, wobei n eine natürliche Zahl >= 2 ist, wobei ein Steuerzyklus einen Zeitabschnitt zwischen einem Empfangen von Eingabedaten (231) durch die erste Steuereinheit (201) oder die zweite Steuereinheit (203) und einem Ausgeben von Ausgabedaten (233) durch die jeweilige Steuereinheit (201, 203) beschreibt, und wobei der erste Steuerschritt (101) umfasst:
Empfangen eines n-ten Satzes von Eingabedaten (In) durch die erste Eingabe-Ausgabe-Einheit (209) der ersten Steuereinheit (201) in einem ersten Eingabeempfangsschritt (103); und
Aussenden eines (n-x)-ten Satzes von Ausgabedaten durch die erste Eingabe-Ausgabe-Einheit (209) der ersten Steuereinheit (201) an die Feldgeräte (205) in einem ersten Ausgabesendeschritt (105), wobei x eine natürliche Zahl >=1 ist, wobei der ausgesendete (n-x)-te Satz von Ausgabedaten auf Basis eines in einem (n-x)-ten Steuerzyklus empfangenen (n-x)-ten Satzes von Eingabedaten gemäß der Steuerungs-Task (P) generiert wird, und wobei der (n-x)-te Steuerzyklus um x Steuerzyklen zeitlich vor dem n-ten Steuerzyklus durchgeführt wird;
Übermitteln des n-ten Satzes von Eingabedaten (In) von der ersten Steuereinheit (201) an die zweite Steuereinheit (203) in einem ersten Datenübermittlungsschritt (107);
Bearbeiten des n-ten Satzes von Eingabedaten (In) und Erzeugen eines n-ten Satzes von Ausgabedaten (On) durch die zweite Bearbeitungseinheit (219) der zweiten Steuereinheit (203) in einem ersten Bearbeitungsschritt (109);
Speichern des n-ten Satzes von Ausgabedaten (On) in der zweiten Ausgabespeichereinheit (223) der zweiten Steuereinheit (203) in einem ersten Ausgabespeicherschritt (111);
Ermitteln einer Fehlfunktion der ersten Steuereinheit (201) während eines (n+x)-ten Steuerzyklus in einem Fehlerermittlungsschritt (113), wobei der (n+x)-te Steuerzyklus um x Steuerzyklen zeitlich später als der n-te Steuerzyklus ausgeführt wird; und
Aussenden des n-ten Satzes von Ausgabedaten (On) über die zweite Eingabe-Ausgabe-Einheit (217) der zweiten Steuereinheit (203) an die Mehrzahl von Feldgeräten (205) im (n+x)-ten Steuerzyklus zum Steuern des Automatisierungsprozesses in einem weiteren Ausgabesendeschritt (115).

2. Verfahren (100) nach Anspruch 1, ferner umfassend:
Zyklisches Steuern des Automatisierungsprozesses des Automatisierungssystems (200) durch die zweite Steuereinheit (203) in einem zweiten Steuerschritt (117); wobei der zweite Steuerschritt (117) in einem (n+m+x)-ten Steuerzyklus ausgeführt wird, wobei m eine natürliche Zahl >=1 ist, wobei der (n+m+x)-te Steuerzyklus um m Steuerzyklen zeitlich später als der (n+x)-te Steuerzyklus ausgeführt wird, und wobei der zweite Steuerschritt (117) umfasst:
Empfangen eines (n+m+x)-ten Satzes von Eingabedaten durch die zweite Eingabe-Ausgabe-Einheit (217) der zweiten Steuereinheit (203) in einem zweiten Eingabeempfangsschritt (119); und
Aussenden eines (n+m)-ten Satzes von Ausgabedaten durch die zweite Eingabe-Ausgabe-Einheit (217) der zweiten Steuereinheit (203) an die Feldgeräte (205) in einem zweiten Ausgabesendeschritt (121), wobei der ausgesendete (n+m)-te Satz von Ausgabedaten auf Basis eines in einem (n+m)-ten Steuerzyklus empfangenen (n+m)-ten Satzes von Eingabedaten gemäß der Steuerungs-Task (P) generiert wird, und wobei der (n+m)-te Steuerzyklus um x Steuerzyklen zeitlich vor dem (n+m+x)-ten Steuerzyklus durchgeführt wird.

3. Verfahren (100) nach Anspruch 1 oder 2, wobei die erste Steuereinheit (201) ferner eine erste Ausgabespeichereinheit (215) zum Speichern von Ausgabedaten (233) umfasst, wobei im n-ten Steuerzyklus der (n-x)-te Satz von Ausgabedaten in der ersten Ausgabespeichereinheit (215) gespeichert ist, und wobei der (n-x)-te Satz von Ausgabedaten im (n-x)-ten Steuerzyklus oder in einem beliebigen Steuerzyklus, der zeitlich zwischen dem (n-x)-ten Steuerzyklus und dem n-ten Steuerzyklus angeordnet ist, generiert wird.

4. Verfahren (100) nach einem der voranstehenden Ansprüche, ferner umfassend:
Bearbeiten des n-ten Satzes von Eingabedaten (In) und Erzeugen eines n-ten Satzes von Ausgabedaten (On) durch die erste Bearbeitungseinheit (211) der ersten Steuereinheit (201) in einem zweiten Bearbeitungsschritt (123);
Speichern des n-ten Satzes von Ausgabedaten (On) in der ersten Ausgabespeichereinheit (215) der ersten Steuereinheit (201) in einem zweiten Ausgabespeicherschritt (125), wobei das Erzeugen des n-ten Satzes von Ausgabedaten (On) durch die erste Bearbeitungseinheit (211) der ersten Steuereinheit (201), das Speichern des n-ten Satzes von Ausgabedaten (On) in der zweiten Ausgabespeichereinheit (223) durch die zweite Steuereinheit (203) und das Übermitteln des n-ten Satzes von Eingabedaten (In) von der ersten Steuereinheit (201) an die zweite Steuereinheit (203) im n-ten Steuerzyklus oder in beliebigen Steuerzyklen, die zeitlich zwischen dem n-ten Steuerzyklus und dem (n+x)-ten Steuerzyklus angeordnet sind, durchgeführt werden;
Bearbeiten des (n+m)-ten Satzes von Eingabedaten (231) und Erzeugen eines (n+m)-ten Satzes von Ausgabedaten (233) durch die zweite Bearbeitungseinheit (219) der zweiten Steuereinheit (203) in einem dritten Bearbeitungsschritt (127);
Speichern des (n+m)-ten Satzes von Ausgabedaten (233) in der zweiten Ausgabespeichereinheit (223) der zweiten Steuereinheit (203) in einem dritten Ausgabespeicherschritt (129), wobei das Erzeugen des (n+m)-ten Satzes von Ausgabedaten (233) durch die zweite Bearbeitungseinheit (219) der zweiten Steuerungseinheit (203) und das Speichern des (n+m)-ten Satzes von Ausgabedaten (233) in der zweiten Ausgangsspeichereinheit (223) der zweiten Steuereinheit (203) im (n+m)-ten Steuerzyklus oder in einem beliebigen Steuerzyklus, der zeitlich zwischen dem (n+m)-ten Steuerzyklus und dem (n+m+x)-ten Steuerzyklus angeordnet ist, durchgeführt werden;
Bearbeiten des (n+m+x)-ten Satzes von Eingabedaten (231) und Erzeugen eines (n+m+x)-ten Satzes von Ausgabedaten (233) durch die zweite Bearbeitungseinheit (219) der zweiten Steuereinheit (203) in einem vierten Bearbeitungsschritt (131); und
Speichern des (n+m+x)-ten Satzes von Ausgabedaten (233) in der zweiten Ausgabespeichereinheit (223) der zweiten Steuereinheit (203) in einem vierten Ausgabespeicherschritt (133), wobei das Erzeugen des (n+m+x)-ten Satzes von Ausgabedaten (233) durch die zweite Bearbeitungseinheit (219) der zweiten Steuerungseinheit (203) und das Speichern des (n+m+x)-ten Satzes von Ausgabedaten (233) in der zweiten Ausgangsspeichereinheit (223) der zweiten Steuereinheit (203) im (n+m+x)-ten Steuerzyklus oder in einem beliebigen Steuerzyklus, der zeitlich zwischen dem (n+m+x)-ten Steuerzyklus und einem (n+m+2x)-ten Steuerzyklus angeordnet ist, durchgeführt wird.

5. Verfahren (100) nach einem der voranstehenden Ansprüche, ferner umfassend:
Empfangen eines weiteren n-ten Satzes von Eingabedaten (In) durch die zweite Eingabe-Ausgabe-Einheit (217) der zweiten Steuereinheit (203) im n-ten Steuerzyklus in einem dritten Eingabeempfangsschritt (135);
Vergleichen des n-ten Satzes von Eingabedaten (In) der ersten Steuereinheit (201) mit dem weiteren n-ten Satz von Eingabedaten (In) der zweiten Steuereinheit (203) in einem Vergleichsschritt (137);
Ermitteln einer Abweichung zwischen dem n-ten Satz von Eingabedaten der ersten Steuereinheit (201) und dem weiteren n-ten Satz von Eingabedaten (In) der zweiten Steuereinheit (203) in einem Abweichungsermittlungsschritt (139); und
Ermitteln eines Fehlers in einer Datenübertragung zwischen den Feldgeräten und der ersten Steuereinheit (201) in einem Übertragungsfehlerermittlungsschritt (141).

6. Verfahren (100) nach einem der voranstehenden Ansprüche, wobei in der ersten Ausgabespeichereinheit (215) der ersten Steuereinheit (201) und/oder in der zweiten Ausgabespeichereinheit (223) der zweiten Steuereinheit (203) während des n-ten Steuerzyklus eine Mehrzahl von Sätzen von Ausgabedaten (233) gespeichert sind, wobei die gespeicherten Sätze von Ausgabedaten (233) jeweils auf Basis eines in einem Steuerzyklus empfangenen Satzes von Eingabedaten (231) gemäß der Steuerungs-Task (P) generiert werden, und wobei die jeweiligen Steuerzyklen zeitlich zwischen dem (n-x)-ten Steuerzyklus und dem n-ten Steuerzyklus durchgeführt werden, und wobei die jeweiligen Sätze von Ausgabedaten (233) in entsprechenden Steuerzyklen, die zeitlich zwischen dem n-ten Steuerzyklus und dem (n+x)-ten Steuerzyklus ausgeführt werden, von der ersten Eingabe-Ausgabe-Einheit (209) der ersten Steuereinheit (201) an die Feldgeräte (205) ausgesendet werden.

7. Verfahren (100) nach einem der voranstehenden Ansprüche 2 bis 6, wobei in der zweiten Ausgabespeichereinheit (223) der zweiten Steuereinheit (203) während des (n+m+x)-ten Steuerzyklus eine Mehrzahl von Sätzen von Ausgabedaten (233) gespeichert sind, wobei die gespeicherten Sätze von Ausgabedaten (233) jeweils auf Basis eines in einem Steuerzyklus empfangenen Satzes von Eingabedaten (231) gemäß der Steuerungs-Task (P) generiert werden, und wobei die jeweiligen Steuerzyklen zeitlich zwischen dem (n+m)-ten Steuerzyklus und dem (n+m+x)-ten Steuerzyklus durchgeführt werden, und wobei die jeweiligen Sätze von Ausgabedaten (233) in entsprechenden Steuerzyklen, die zeitlich zwischen dem (n+m+x)-ten Steuerzyklus und einem (n+m+2x)-ten Steuerzyklus ausgeführt werden, von der zweiten Eingabe-Ausgabe-Einheit (209) der zweiten Steuereinheit (203) an die Feldgeräte (205) ausgesendet werden.

8. Verfahren (100) nach einem der voranstehenden Ansprüche, wobei die erste Steuereinheit (201) eine erste Eingabespeichereinheit (213) zum Speichern von Eingabedaten (231) umfasst, wobei die zweite Steuereinheit (203) eine zweite Eingabespeichereinheit (221) zum Speichern von Eingabedaten (231) umfasst, und wobei das Verfahren (100) ferner umfasst:
Speichern des n-ten Satzes von Eingabedaten (In) in der ersten Eingabespeichereinheit (213) der ersten Steuereinheit (201) im n-ten Steuerzyklus in einem ersten Eingabespeicherschritt (143); und/oder
Speichern des von der ersten Steuereinheit (201) an die zweite Steuereinheit (203) übertragenen n-ten Satzes von Eingabedaten (In) in der zweiten Eingabespeichereinheit (221) der zweiten Steuereinheit (203) im n-ten Steuerzyklus in einem zweiten Eingabespeicherschritt (145).

9. Verfahren (100) nach Anspruch 8, wobei die erste Steuereinheit (201) einen ersten Speicherbereich zum Speichern von ersten Steuerdaten der ersten Steuereinheit (201) aufweist, wobei die zweite Steuereinheit (203) einen zweiten Speicherbereich zum Speichern von zweiten Steuerdaten der zweiten Steuereinheit (203) aufweist, wobei der erste Speicherbereich die erste Eingabespeichereinheit (213) und die erste Ausgabespeichereinheit umfasst, und wobei der zweite Speicherbereich die zweite Eingabespeichereinheit (221) und die zweite Ausgabespeichereinheit (223) umfasst, ferner umfassend:
Generieren einer Speicherkopie (SK) in einem Speicherkopierschritt (147), wobei die Speicherkopie (SK) eine Kopie des ersten Speicherbereichs der ersten Steuereinheit (201) ist und die in der ersten Eingabespeichereinheit (213) gespeicherten Sätze von Eingabedaten (231) und die in der ersten Ausgabespeichereinheit (215) gespeicherten Sätze von Ausgabedaten (233) umfasst, wobei die Speicherkopie (SK) zu einem beliebigen Steuerzyklus, der zeitlich vor dem n-ten Steuerzyklus durchgeführt wird, durchgeführt wird und wenigstens einen zum Zeitpunkt des jeweiligen Steuerzyklus in der ersten Eingabespeichereinheit (213) gespeicherten Satz von Eingabedaten (231) und/oder wenigstens einen zum Zeitpunkt des jeweiligen Steuerzyklus in der ersten Ausgabespeichereinheit (215) gespeicherten Satz von Ausgabedaten (233) umfasst;
Übermitteln der Speicherkopie (SK) an die zweite Steuereinheit (203) in einem Kopieübermittlungsschritt (149);
Speichern des wenigstens einen Satzes von Eingabedaten (231) der Speicherkopie (SK) in der zweiten Eingabespeichereinheit (221) der zweiten Steuereinheit (203) in einem ersten Kopiespeicherschritt (151); und/oder
Speichern des wenigstens einen Satzes von Ausgabedaten (233) der Speicherkopie (SK) in der zweiten Ausgabespeichereinheit (223) der zweiten Steuereinheit (203) in einem zweiten Kopiespeicherschritt (153);
Bearbeiten des wenigstens einen Satzes von Eingabedaten (231) der Speicherkopie (SK) und Erzeugen eines entsprechenden Satzes von Ausgabedaten (233) durch die zweite Bearbeitungseinheit (219) der zweiten Steuereinheit (203) in einem fünften Bearbeitungsschritt (155); und
Speichern des erzeugten Satzes von Ausgabedaten (233) in der zweiten Ausgabespeichereinheit (223) der zweiten Steuereinheit (203) in einem fünften Ausgabespeicherschritt (157).

10. Verfahren (100) nach einem der voranstehenden Ansprüche, wobei die erste Steuereinheit (201) eine erste Kommunikationsschnittstelle zum Empfangen und Aussenden von Kommunikationsdaten umfasst, wobei die zweite Steuereinheit (203) eine zweite Kommunikationsschnittstelle zum Empfangen und Aussenden von Kommunikationsdaten aufweist, ferner umfassend:
Empfangen von n-ten Kommunikationsdaten (Kn) durch die erste Kommunikationseinheit der ersten Steuereinheit (201) im n-ten Steuerzyklus in einem ersten Nachrichtempfangsschritt (159);
Bestimmen von n-ten Antwortdaten (An) auf die empfangenen n-ten Kommunikationsdaten (Kn) in einem ersten Antworterzeugungsschritt (161);
Speichern der n-ten Antwortdaten (An) in der ersten Ausgabespeichereinheit der ersten Steuereinheit (201) in einem ersten Antwortspeicherschritt (163), wobei die n-ten Antwortdaten (An) in der ersten Ausgabespeichereinheit gemeinsam mit dem n-ten Satz von Ausgabedaten (On) gespeichert sind;
Aussenden der n-ten Antwortdaten (An) über die erste Kommunikationsschnittstelle der ersten Steuereinheit (201) im (n+x)-ten Steuerzyklus in einem ersten Antwortsendeschritt (165);
und/oder
Empfangen von (n+m+x)-ten Kommunikationsdaten durch die zweite Kommunikationseinheit der zweiten Steuereinheit (203) im (n+m+x)-ten Steuerzyklus in einem zweiten Nachrichtempfangsschritt (167);
Bestimmen von (n+m+x)-ten Antwortdaten auf die empfangenen (n+m+x)-ten Kommunikationsdaten in einem zweiten Antworterzeugungsschritt (169);
Speichern der (n+m+x)-ten Antwortdaten in der zweiten Ausgabespeichereinheit der zweiten Steuereinheit (203) in einem zweiten Antwortspeicherschritt (171), wobei die (n+m+x)-ten Kommunikationsdaten in der zweiten Ausgabespeichereinheit gemeinsam mit dem (n+m+x)-ten Satz von Ausgabedaten gespeichert sind; und
Aussenden der (n+m+x)-ten Antwortdaten über die zweite Kommunikationsschnittstelle der zweiten Steuereinheit (203) im (n+m+2x)-ten Steuerzyklus in einem zweiten Antwortsendeschritt (173).

11. Verfahren (100) nach einem der voranstehenden Ansprüche, wobei die erste Steuereinheit (201) eine weitere erste Bearbeitungseinheit zum Ausführen wenigstens einer weiteren Steuerungs-Task (P) und zum Analysieren der empfangenen Eingabedaten (231) und zum Erzeugen von weiteren Ausgabedaten gemäß der weiteren Steuerungs-Task (P) umfasst, wobei die zweite Steuereinheit (203) eine weitere zweite Bearbeitungseinheit (219) zum Ausführen der wenigstens einen weiteren Steuerungs-Task (P) und zum Analysieren der empfangenen Eingabedaten (231) und zum Erzeugen von weiteren Ausgabedaten (233) gemäß der weiteren Steuerungs-Task (P) umfasst, und wobei die Steuerungs-Task (P) durch die erste Bearbeitungseinheit (211) und die weitere Steuerungs-Task (P) durch die weitere erste Bearbeitungseinheit der ersten Steuereinheit (201) und/oder die Steuerungs-Task (P) durch die zweite Bearbeitungseinheit (219) und die weitere Steuerungs-Task (P) durch die weitere zweite Bearbeitungseinheit der zweiten Steuereinheit (203) zeitgleich ausführbar sind.

12. Verfahren (100) nach einem der voranstehenden Ansprüche, wobei die erste Eingabespeichereinheit (213) und die erste Ausgabespeichereinheit (215) der ersten Steuereinheit (201) und die zweite Eingabespeichereinheit (221) und die zweite Ausgabespeichereinheit (223) der zweiten Steuereinheit (203) als First-In-First-Out-Speicher ausgebildet sind.

13. Automatisierungssystem (200) mit wenigstens einer ersten Steuereinheit (201) und einer zweiten Steuereinheit (203) und einer Mehrzahl von Feldgeräten (205), die über einen Datenbus (207) mit der ersten Steuereinheit (201) und der zweiten Steuereinheit (203) verbunden sind, wobei die erste Steuereinheit (201) und die zweite Steuereinheit (203) eingerichtet sind, einen Automatisierungsprozess des Automatisierungssystems (200) zyklisch zu steuern, wobei die erste Steuereinheit (201) umfasst:
eine erste Eingabe-Ausgabe-Einheit (209) zum Empfangen von Eingabedaten (213) der Feldgeräte (205) und zum Aussenden von Ausgabedaten (233) an die Feldgeräte (205), wobei die Eingabedaten (231) als ein Prozessabbild von Eingängen des Automatisierungsprozesses zusammengefasst sind, und wobei die Ausgabedaten (233) als ein Prozessabbild von Ausgängen des Automatisierungsprozesses zusammengefasst sind,
eine erste Bearbeitungseinheit (211) zum Ausführen wenigstens einer Steuerungs-Task (P) und zum Analysieren der empfangenen Eingabedaten (231) und zum Erzeugen von Ausgabedaten (233) gemäß der Steuerungs-Task (P),
eine erste Eingabespeichereinheit (213) zum Speichern der empfangenen Eingabedaten (231), und
eine erste Ausgabespeichereinheit (215) zum Speichern der generierten Ausgabedaten (233), wobei die zweite Steuereinheit (203) umfasst:
eine zweite Eingabe-Ausgabe-Einheit (217) zum Empfangen von Eingabedaten (231) der Feldgeräte (205) und zum Aussenden von Ausgabedaten (233) an die Feldgeräte (205),
eine zweite Bearbeitungs-Einheit (219) zum Ausführen der wenigstens einen Steuerungs-Task (P) und zum Analysieren der empfangenen Eingabedaten (231) und zum Erzeugen von Ausgabedaten (233) gemäß der Steuerungs-Task (P),
eine zweite Eingabespeichereinheit (221) zum Speichern von Eingabedaten (231), und
eine zweite Ausgabespeichereinheit (223) zum Speichern der generierten Ausgabedaten (233), und wobei das Automatisierungssystem (200) ausgebildet ist, das Verfahren (100) nach einem der voranstehenden Ansprüche 1 bis 12 auszuführen.

14. Automatisierungssystem (200) nach Anspruch 13, wobei die erste Steuereinheit (201) einen ersten Speicherbereich zum Speichern von ersten Steuerdaten der ersten Steuereinheit (201) aufweist, wobei die zweite Steuereinheit (203) einen zweiten Speicherbereich zum Speichern von zweiten Steuerdaten der zweiten Steuereinheit (203) aufweist, wobei der erste Speicherbereich die erste Eingabespeichereinheit (213) und die erste Ausgabespeichereinheit umfasst, und wobei der zweite Speicherbereich die zweite Eingabespeichereinheit (221) und die zweite Ausgabespeichereinheit umfasst, und/oder wobei die erste Steuereinheit (201) und die zweite Steuereinheit (203) über eine Datenverbindung (227) miteinander verbunden sind und eingerichtet sind, mittels einer Datenkommunikation einen Datenaustausch auszuführen.

15. Automatisierungssystem (200) nach Anspruch 13 oder 14, ferner umfassend eine erste Verbindungseinheit (229) und eine zweite Verbindungseinheit (230), wobei die erste Verbindungseinheit (229) und die zweite Verbindungseinheit (239) über den Datenbus (207) mit den Feldgeräten (205) und der ersten Steuereinheit (201) und der zweiten Steuereinheit (203) verbunden sind, und wobei die erste Verbindungseinheit (229) und die zweite Verbindungseinheit (230) eingerichtet sind, einen Datenfluss von Eingabedaten von Feldgeräten (205) zu der ersten Steuereinheit (201) und der zweiten Steuereinheit (203) und/oder einen Datenfluss von Ausgabedaten von der ersten Steuereinheit (201) und/oder von der zweiten Steuereinheit (203) zu den Feldgeräten (205) zu steuern, und/oder wobei die erste Steuereinheit (201) eine weitere erste Bearbeitungseinheit zum Ausführen wenigstens einer weiteren Steuerungs-Task (P) und zum Analysieren der empfangenen Eingabedaten (231) und zum Erzeugen von weiteren Ausgabedaten (233) gemäß der weiteren Steuerungs-Task (P) umfasst, wobei die zweite Steuereinheit (203) eine weitere zweite Bearbeitungseinheit zum Ausführen der wenigstens einen weiteren Steuerungs-Task (P) und zum Analysieren der empfangenen Eingabedaten (231) und zum Erzeugen von Ausgabedaten (233) gemäß der weiteren Steuerungs-Task (P) umfasst, und wobei die Steuerungs-Task (P) durch die erste Bearbeitungseinheit (211) und die weitere Steuerungs-Task (P) durch die weitere erste Bearbeitungseinheit der ersten Steuereinheit (201) und/oder die Steuerungs-Task (P) durch die zweite Bearbeitungseinheit (219) und die weitere Steuerungs-Task (P) durch die weitere zweite Bearbeitungseinheit der zweiten Steuereinheit (203) zeitgleich ausführbar sind.

## Claims

1. A method (100) for controlling an automation system (200) having control redundancy, wherein the automation system (200) comprises at least a first controller (201), a second controller (203), and a plurality of field devices (205) connected to the first controller (201) and the second controller (203) via a data bus (207), wherein the first controller (201) and the second controller (203) are set up to cyclically control an automation process of the automation system (200), wherein the first controller (201) comprises:
a first input-output unit (209) for receiving input data (231) from the field devices (205) and sending out output data (233) to the field devices (205), wherein the input data (231) are combined to form a process image of inputs of the automation process, and wherein the output data (233) are combined to form a process image of outputs of the automation process,
a first processing unit (211) for executing at least one control task (P) and for analyzing the received input data (231) and for generating output data (233) according to the control task (P), and
a first output memory unit (215) for storing the generated output data (233),
wherein the second controller (201) comprises:
a second input-output unit (217) for receiving input data (231) from the field devices (205) and sending out output data (233) to the field devices (205),
a second processing unit (219) for executing the at least one control task (P) and for analyzing the received input data (231) and for generating output data (233) according to the control task (P), and
a second output memory unit (223) for storing the generated output data (233),
and wherein the method (100) comprises:
cyclically controlling the automation process of the automation system (200) via the first controller (201) in a first controlling step (101), wherein the first controlling step (101) is executed in an nth control cycle, wherein the nth control cycle is executed temporally after executing n-1 control cycles, wherein n is a natural number >= 2, wherein a control cycle describes a time period between a receipt of input data (231) by the first controller (201) or by the second controller (203) and an output of output data (233) by the respective controller (201, 203), and wherein the first controlling step (101) comprises:
receiving an nth set of input data (In) via the first input-output unit (209) of the first controller (201) in a first input receiving step (103); and
sending out an (n-x)-th set of output data via the first input-output unit (209) of the first controller (201) to the field devices (205) in a first output transmitting step (105), wherein x is a natural number >=1, wherein the transmitted (n-x)-th set of output data is generated based on an (n-x)-th set of input data received in an (n-x)-th control cycle according to the control task (P), and wherein the (n-x)-th control cycle is executed ahead in time of the nth control cycle by x control cycles;
transmitting the nth set of input data (In) from the first controller (201) to the second controller (203) in a first data transmitting step (107);
processing the nth set of input data (In) and generating an nth set of output data (On) via the second processing unit (219) of the second controller (203) in a first processing step (109);
storing the nth set of output data (On) in the second output memory unit (223) of the second controller (203) in a first output storing step (111);
determining a malfunction of the first controller (201) during an (n+x)-th control cycle in a malfunction determining step (113), wherein the (n+x)-th control cycle is executed by x control cycles later in time than the nth control cycle; and
sending out the nth set of output data (On) via the second input-output unit (217) of the second controller (203) to the plurality of field devices (205) in the (n+x)-th control cycle for controlling the automation process in a further output transmitting step (115).

2. The method (100) according to claim 1, further comprising:
cyclically controlling the automation process of the automation system (200) via the second controller (203) in a second controlling step (117); wherein the second controlling step (117) is executed in an (n+m+x)-th control cycle, wherein m is a natural number >=1, wherein the (n+m+x)-th control cycle is executed by m control cycles later in time than the (n+x)-th control cycle, and wherein the second controlling step (117) comprises:
receiving an (n+m+x)-th set of input data via the second input-output unit (217) of the second controller (203) in a second input receiving step (119); and
sending out an (n+m)-th set of output data via the second input-output unit (217) of the second controller (203) to the field devices (205) in a second output transmitting step (121), wherein the transmitted (n+m)-th set of output data is generated based on an (n+m)-th set of input data received in an (n+m)-th control cycle according to the control task (P), and wherein the (n+m)-th control cycle is carried out x control cycles ahead in time of the (n+m+x)-th control cycle.

3. The method (100) according to claim 1 or 2, wherein the first controller (201) further comprises a first output memory unit (215) for storing output data (233), wherein in the nth control cycle the (n-x)-th set of output data is stored in the first output memory unit (215), and wherein the (n-x)-th set of output data is generated in the (n-x)-th control cycle or in any control cycle temporally interposed between the (n-x)-th control cycle and the nth control cycle.

4. The method (100) according to any one of the preceding claims, further comprising:
processing the nth set of input data (In) and generating an nth set of output data (On) via the first processing unit (211) of the first controller (201) in a second processing step (123);
storing the nth set of output data (On) in the first output memory unit (215) of the first controller (201) in a second output storing step (125), wherein generating the nth set of output data (On) via the first processing unit (211) of the first controller (201), storing the nth set of output data (On) in the second output memory unit (223) via the second controller (203), and transmitting the nth set of input data (In) from the first controller (201) to the second controller (203) is carried out in the nth control cycle or in arbitrary control cycles arranged in time between the nth control cycle and the (n+x)-th control cycle;
processing the (n+m)-th set of input data (231) and generating an (n+m)-th set of output data (233) via the second processing unit (219) of the second controller (203) in a third processing step (127);
storing the (n+m)-th set of output data (233) in the second output memory unit (223) of the second controller (203) in a third output storing step (129), wherein generating the (n+m)-th set of output data (233) via the second processing unit (219) of the second controller (203) and storing the (n+m)-th set of output data (233) in the second output memory unit (223) of the second controller (203) is carried out in the (n+m)-th control cycle or in any control cycle temporally arranged between the (n+m)-th control cycle and the (n+m+x)-th control cycle;
processing the (n+m+x)-th set of input data (231) and generating an (n+m+x)-th set of output data (233) via the second processing unit (219) of the second controller (203) in a fourth processing step (131); and
storing the (n+m+x)-th set of output data (233) in the second output memory unit (223) of the second controller (203) in a fourth output storing step (133), wherein generating the (n+m+x)-th set of output data (233) via the second processing unit (219) of the second controller (203) and storing the (n+m+x)-th set of output data (233) in the second output memory unit (223) of the second controller (203) is carried out in the (n+m+x)-th control cycle or in any control cycle which is temporally arranged between the (n+m+x)-th control cycle and an (n+m+2x)-th control cycle.

5. The method (100) according to any one of the preceding claims, further comprising:
receiving a further nth set of input data (In) via the second input-output unit (217) of the second controller (203) in the nth control cycle in a third input receiving step (135);
comparing the nth set of input data (In) of the first controller (201) with the further nth set of input data (In) of the second controller (203) in a comparing step (137);
determining a deviation between the nth set of input data of the first controller (201) and the further nth set of input data (In) of the second controller (203) in a deviation determining step (139); and
determining an error in a data transmission between the field devices and the first controller (201) in a transmission error determining step (141).

6. The method (100) according to any one of the preceding claims, wherein a plurality of sets of output data (233) are stored in the first output memory unit (215) of the first controller (201) and/or in the second output memory unit (223) of the second controller (203) during the nth control cycle, wherein the stored sets of output data (233) are in each case generated based on a set of input data (231) received in a control cycle according to the control task (P), and wherein the respective control cycles are executed in time between the (n-x)-th control cycle and the nth control cycle, and wherein the respective sets of output data (233) are sent out to the field devices (205) from the first input-output unit (209) of the first controller (201) in respective control cycles executed in time between the nth control cycle and the (n+x)-th control cycle.

7. The method (100) according to any one of the preceding claims 2 to 6, wherein a plurality of sets of output data (233) are stored in the second output memory unit (223) of the second controller (203) during the (n+m+x)-th control cycle, wherein the stored sets of output data (233) are in each case generated according to the control task (P) on the basis of a set of input data (231) received in a control cycle, and wherein the respective control cycles are executed in time between the (n+m)-th control cycle and the (n+m+x)-th control cycle, and wherein the respective sets of output data (233) are sent out to the field devices (205) from the second input-output unit (209) of the second controller (203) in respective control cycles executed in time between the (n+m+x)-th control cycle and an (n+m+2x)-th control cycle.

8. The method (100) according to any one of the preceding claims, wherein the first controller (201) comprises a first input memory unit (213) for storing input data (231), wherein the second controller (203) comprises a second input memory unit (221) for storing input data (231), and wherein the method (100) further comprises:
storing the nth set of input data (In) in the first input memory unit (213) of the first controller (201) in the nth control cycle in a first input storing step (143); and/or
storing the nth set of input data (In) transmitted from the first controller (201) to the second controller (203) in the second input memory unit (221) of the second controller (203) in the nth control cycle in a second input storing step (145).

9. The method (100) according to claim 8, wherein the first controller (201) comprises a first memory area for storing first control data of the first controller (201), wherein the second controller (203) comprises a second memory area for storing second control data of the second controller (203), wherein the first memory area comprises the first input memory unit (213) and the first output memory unit, and wherein the second memory area comprises the second input memory unit (221) and the second output memory unit (223), further comprising:
generating a memory copy (SK) in a memory copying step (147), wherein the memory copy (SK) is a copy of the first memory area of the first controller (201) and comprises the sets of input data (231) stored in the first input memory unit (213) and the sets of output data (233) stored in the first output memory unit (215), wherein the memory copy (SK) is generated in any control cycle performed temporally before the nth control cycle and comprises at least one set of input data (231) stored in the first input memory unit (213) at the time of the respective control cycle and/or at least one set of output data (233) stored in the first output memory unit (215) at the time of the respective control cycle;
transmitting the memory copy (SK) to the second controller (203) in a copy transmitting step (149);
storing the at least one set of input data (231) of the memory copy (SK) in the second input memory unit (221) of the second controller (203) in a first copy storing step (151); and/or
storing the at least one set of output data (233) of the memory copy (SK) in the second output memory unit (223) of the second controller (203) in a second copy storing step (153);
processing the at least one set of input data (231) of the memory copy (SK) and generating a corresponding set of output data (233) via the second processing unit (219) of the second controller (203) in a fifth processing step (155); and
storing the generated set of output data (233) in the second output memory unit (223) of the second controller (203) in a fifth output storing step (157).

10. The method (100) according to any one of the preceding claims, wherein the first controller (201) comprises a first communication interface for receiving and transmitting communication data, wherein the second controller (203) comprises a second communication interface for receiving and transmitting communication data, further comprising:
receiving nth communication data (Kn) via the first communication unit of the first controller (201) in the nth control cycle in a first message receiving step (159);
determining nth response data (An) upon the received nth communication data (Kn) in a first response generating step (161);
storing the nth response data (An) in the first output memory unit of the first controller (201) in a first response storing step (163), wherein the nth response data (An) are stored in the first output memory unit with the nth set of output data (On);
sending out the nth response data (An) via the first communication interface of the first controller (201) in the (n+x)-th control cycle in a first response transmitting step (165); and/or
receiving (n+m+x)-th communication data via the second communication unit of the second controller (203) in the (n+m+x)-th control cycle in a second message receiving step (167);
determining (n+m+x)-th response data to the received (n+m+x)-th communication data in a second response generating step (169);
storing the (n+m+x)-th response data in the second output memory unit of the second controller (203) in a second response storing step (171), wherein the (n+m+x)-th communication data are stored in the second output memory unit with the (n+m+x)-th set of output data; and
sending out the (n+m+x)-th response data via the second communication interface of the second controller (203) in the (n+m+2x)-th control cycle in a second response transmitting step (173).

11. The method (100) according to any one of the preceding claims, wherein the first controller (201) comprises a further first processing unit for executing at least one further control task (P) and for analyzing the received input data (231) and for generating further output data according to the further control task (P), wherein the second controller (203) comprises a further second processing unit (219) for executing the at least one further control task (P) and for analyzing the received input data (231) and for generating further output data (233) according to the further control task (P), and wherein the control task (P) may be executed by the first processing unit (211) and the further control task (P) by the further first processing unit of the first controller (201) and/or the control task (P) may be executed by the second processing unit (219) and the further control task (P) by the further second processing unit of the second controller (203) simultaneously.

12. The method (100) according to any one of the preceding claims, wherein the first input memory unit (213) and the first output memory unit (215) of the first controller (201) and the second input memory unit (221) and the second output memory unit (223) of the second controller (203) are configured as first-in-first-out memories.

13. An automation system (200) comprising at least a first controller (201) and a second controller (203) and a plurality of field devices (205) connected to the first controller (201) and the second controller (203) via a data bus (207), wherein the first controller (201) and the second controller (203) are set up to cyclically control an automation process of the automation system (200), wherein the first controller (201) comprises:
a first input-output unit (209) for receiving input data (213) from the field devices (205) and sending output data (233) to the field devices (205), wherein the input data (231) are combined to form a process image of inputs of the automation process, and wherein the output data (233) are combined to form a process image of outputs of the automation process,
a first processing unit (211) for executing at least one control task (P) and for analyzing the received input data (231) and for generating output data (233) according to the control task (P),
a first input memory unit (213) for storing the received input data (231), and
a first output memory unit (215) for storing the generated output data (233),
wherein the second controller (203) comprises:
a second input-output unit (217) for receiving input data (231) of the field devices (205) and sending output data (233) to the field devices (205),
a second processing unit (219) for executing the at least one control task (P) and for analyzing the received input data (231) and for generating output data (233) according to the control task (P),
a second input memory unit (221) for storing input data (231), and
a second output memory unit (223) for storing the generated output data (233), and wherein the automation system (200) is embodied to execute the method (100) according to any of the preceding claims 1 to 12.

14. The automation system (200) according to claim 13, wherein the first controller (201) comprises a first memory area for storing first control data of the first controller (201), wherein the second controller (203) comprises a second memory area for storing second control data of the second controller (203), wherein the first memory area comprises the first input memory unit (213) and the first output memory unit, and wherein the second memory area comprises the second input memory unit (221) and the second output memory unit, and/or wherein the first controller (201) and the second controller (203) are connected to each other via a data connection (227) and are set up to carry out a data exchange by means of a data communication.

15. The automation system (200) according to claim 13 or 14, further comprising a first connecting unit (229) and a second connecting unit (230), wherein the first connecting unit (229) and the second connecting unit (239) are connected to the field devices (205) and the first controller (201) and the second controller (203) via the data bus (207), and wherein the first connecting unit (229) and the second connecting unit (230) are set up to control a data flow of input data from field devices (205) to the first controller (201) and to the second controller (203) and/or a data flow of output data from the first controller (201) and/or from the second controller (203) to the field devices (205), and/or wherein the first controller (201) comprises a further first processing unit for executing at least one further control task (P) and for analyzing the received input data (231) and for generating further output data (233) according to the further control task (P), wherein the second controller (203) comprises a further second processing unit for executing the at least one further control task (P) and for analyzing the received input data (231) and for generating output data (233) according to the further control task (P), and wherein the control task (P) may be executed by the first processing unit (211) and the further control task (P) by the further first processing unit of the first controller (201) and/or the control task (P) may be executed by the second processing unit (219) and the further control task (P) by the further second processing unit of the second controller (203) simultaneously.

## Revendications

1. Procédé (100) de commande d'un système d'automatisation (200) avec redondance de commande, le système d'automatisation (200) comprenant au moins une première unité de commande (201), une deuxième unité de commande (203) et une pluralité d'appareils de terrain (205) qui sont connectés à la première unité de commande (201) et à la deuxième unité de commande (203) par le biais d'un bus de données (207), la première unité de commande (201) et la deuxième unité de commande (203) étant conçues pour commander de manière cyclique un processus d'automatisation du système d'automatisation (200), la première unité de commande (201) comprenant :
une première unité d'entrée/sortie (209) destinée à recevoir des données d'entrée (231) des appareils de terrain (205) et destinée à émettre des données de sortie (233) aux appareils de terrain (205), les données d'entrée (231) étant regroupées sous la forme d'une image de processus des entrées du processus d'automatisation, et les données de sortie (233) étant regroupées sous la forme d'une image de processus des sorties du processus d'automatisation,
une première unité de traitement (211) destinée à exécuter au moins une tâche de commande (P) et à analyser les données d'entrée (231) reçues et à générer des données de sortie (233) conformément à la tâche de commande (P), et
une première unité de mémoire de sortie (215) destinée à mémoriser les données de sortie (233) générées, la deuxième unité de commande (201) comprenant :
une deuxième unité d'entrée/sortie (217) destinée à recevoir des données d'entrée (231) des appareils de terrain (205) et à émettre des données de sortie (233) aux appareils de terrain (205),
une deuxième unité de traitement (219) destinée à exécuter l'au moins une tâche de commande (P) et à analyser les données d'entrée (231) reçues et à générer des données de sortie (233) conformément à la tâche de commande (P), et
une deuxième unité de mémoire de sortie (223) destinée à mémoriser les données de sortie (233) générées, et le procédé (100) comprenant :
commande cyclique du processus d'automatisation du système d'automatisation (200) par la première unité de commande (201) dans une première étape de commande (101), la première étape de commande (101) étant exécutée dans un n-ième cycle de commande, le n-ième cycle de commande étant exécuté chronologiquement après une exécution de n-1 cycles de commande, n étant un nombre naturel >= 2, un cycle de commande décrivant un intervalle de temps entre une réception de données d'entrée (231) par la première unité de commande (201) ou la deuxième unité de commande (203) et une émission de données de sortie (233) par l'unité de commande respective (201, 203), et la première étape de commande (101) comprenant :
réception d'un n-ième jeu de données d'entrée (In) par la première unité d'entrée/sortie (209) de la première unité de commande (201) dans une première étape de réception d'entrée (103) ; et
émission d'un (n-x)-ième jeu de données de sortie par la première unité d'entrée/sortie (209) de la première unité de commande (201) aux appareils de terrain (205) dans une première étape d'émission de sortie (105), x étant un nombre naturel >= 1, le (n-x)-ième jeu de données de sortie émis étant généré sur la base d'un (n-x)-ième jeu de données d'entrée reçu dans un (n-x)-ième cycle de commande conformément à la tâche de commande (P), et le (n-x)-ième cycle de commande étant exécuté chronologiquement x cycles de commande avant le n-ième cycle de commande ;
communication du n-ième jeu de données d'entrée (In) de la première unité de commande (201) à la deuxième unité de commande (203) dans une première étape de communication de données (107) ;
traitement du n-ième jeu de données d'entrée (In) et génération d'un n-ième jeu de données de sortie (On) par la deuxième unité de traitement (219) de la deuxième unité de commande (203) dans une première étape de traitement (109) ;
mémorisation du n-ième jeu de données de sortie (On) dans la deuxième unité de mémoire de sortie (223) de la deuxième unité de commande (203) dans une première étape de mémorisation de sortie (111) ;
détermination d'un défaut de fonctionnement de la première unité de commande (201) pendant un (n+x)-ième cycle de commande dans une étape de détermination de défaut (113), le (n+x)-ième cycle de commande étant exécuté chronologiquement x cycles de commande plus tard que le n-ième cycle de commande ; et
émission du n-ième jeu de données de sortie (On) par le biais de la deuxième unité d'entrée/sortie (217) de la deuxième unité de commande (203) à la pluralité d'appareils de terrain (205) dans le (n+x)-ième cycle de commande afin de commander le processus d'automatisation dans une étape d'émission de sortie supplémentaire (115).

2. Procédé (100) selon la revendication 1, comprenant en outre :
commande cyclique du processus d'automatisation du système d'automatisation (200) par la deuxième unité de commande (203) dans une deuxième étape de commande (117) ; la deuxième étape de commande (117) étant exécutée dans un (n+m+x)-ième cycle de commande, m étant un nombre naturel >= 1, le (n+m+x)-ième cycle de commande étant exécuté chronologiquement m cycles de commande plus tard que le (n+x)-ième cycle de commande, et la deuxième étape de commande (117) comprenant :
réception d'un (n+m+x)-ième jeu de données d'entrée par la deuxième unité d'entrée/sortie (217) de la deuxième unité de commande (203) dans une deuxième étape de réception d'entrée (119) ; et
émission d'un (n+m)-ième jeu de données de sortie par la deuxième unité d'entrée/sortie (217) de la deuxième unité de commande (203) aux appareils de terrain (205) dans une deuxième étape d'émission de sortie (121), le (n+m)-ième jeu de données de sortie émis étant généré sur la base d'un (n+m)-ième jeu de données d'entrée reçu dans un (n+m)-ième cycle de commande conformément à la tâche de commande (P), et le (n+m)-ième cycle de commande étant exécuté chronologiquement x cycles de commande avant le (n+m+x)-ième cycle de commande.

3. Procédé (100) selon la revendication 1 ou 2, la première unité de commande (201) comprenant en outre une première unité de mémoire de sortie (215) destinée à mémoriser des données de sortie (233), (n-x)-ième jeu de données de sortie étant mémorise dans la première unité de mémoire de sortie (215) dans le n-ième cycle de commande, et le (n-x)-ième jeu de données de sortie étant généré dans le (n-x)-ième cycle de commande ou dans un cycle de commande quelconque qui est situé chronologiquement entre le (n-x)-ième cycle de commande et le n-ième cycle de commande.

4. Procédé (100) selon l'une des revendications précédentes, comprenant en outre :
traitement du n-ième jeu de données d'entrée (In) et génération d'un n-ième jeu de données de sortie (On) par la première unité de traitement (211) de la première unité de commande (201) dans une deuxième étape de traitement (123) ;
mémorisation du n-ième jeu de données de sortie (On) dans la première unité de mémoire de sortie (215) de la première unité de commande (201) dans une deuxième étape de mémorisation de sortie (125), la génération du n-ième jeu de données de sortie (On) par la première unité de traitement (211) de la première unité de commande (201), la mémorisation du n-ième jeu de données de sortie (On) dans la deuxième unité de mémoire de sortie (223) par la deuxième unité de commande (203) et la communication du n-ième jeu de données d'entrée (In) de la première unité de commande (201) à la deuxième unité de commande (203) étant effectuées dans le n-ième cycle de commande ou dans des cycles de commande quelconques qui sont situés chronologiquement entre le n-ième cycle de commande et le (n+x)-ième cycle de commande ;
traitement du (n+m)-ième jeu de données d'entrée (231) et génération d'un (n+m)-ième jeu de données de sortie (233) par la deuxième unité de traitement (219) de la deuxième unité de commande (203) dans une troisième étape de traitement (127) ;
mémorisation du (n+m)-ième jeu de données de sortie (233) dans la deuxième unité de mémoire de sortie (223) de la deuxième unité de commande (203) dans une troisième étape de mémorisation de sortie (129), la génération du (n+m)-ième jeu de données de sortie (233) par la deuxième unité de traitement (219) de la deuxième unité de commande (203) et la mémorisation du (n+m)-ième jeu de données de sortie (233) dans la deuxième unité de mémoire de sortie (223) de la deuxième unité de commande (203) étant effectuées dans le (n+m)-ième cycle de commande ou dans un cycle de commande quelconque qui est situé chronologiquement entre le (n+m)-ième cycle de commande et le (n+m+x)-ième cycle de commande ;
traitement du (n+m+x)-ième jeu de données d'entrée (231) et génération d'un (n+m+x)-ième jeu de données de sortie (233) par la deuxième unité de traitement (219) de la deuxième unité de commande (203) dans une quatrième étape de traitement (131) ; et
mémorisation du (n+m+x)-ième jeu de données de sortie (233) dans la deuxième unité de mémoire de sortie (223) de la deuxième unité de commande (203) dans une quatrième étape de mémorisation de sortie (133), la génération du (n+m+x)-ième jeu de données de sortie (233) par la deuxième unité de traitement (219) de la deuxième unité de commande (203) et la mémorisation du (n+m+x)-ième jeu de données de sortie (233) dans la deuxième unité de mémoire de sortie (223) de la deuxième unité de commande (203) étant effectuées dans le (n+m+x)-ième cycle de commande ou dans un cycle de commande quelconque qui est situé chronologiquement entre le (n+m+x)-ième cycle de commande et un (n+m+2x)-ième cycle de commande.

5. Procédé (100) selon l'une des revendications précédentes, comprenant en outre :
réception d'un n-ième jeu supplémentaire de données d'entrée (In) par la deuxième unité d'entrée/sortie (217) de la deuxième unité de commande (203) dans le n-ième cycle de commande dans une troisième étape de réception d'entrée (135) ;
comparaison du n-ième jeu de données d'entrée (In) de la première unité de commande (201) avec le n-ième jeu supplémentaire de données d'entrée (In) de la deuxième unité de commande (203) dans une étape de comparaison (137) ;
détermination d'un écart entre le n-ième jeu de données d'entrée de la première unité de commande (201) et le n-ième jeu supplémentaire de données d'entrée (In) de la deuxième unité de commande (203) dans une étape de détermination d'écart (139) ; et
détermination d'une erreur dans une transmission de données entre les appareils de terrain et la première unité de commande (201) dans une étape de détermination d'erreur de transmission (141).

6. Procédé (100) selon l'une des revendications précédentes, une pluralité de jeu de données de sortie (233) étant mémorisés dans la première unité de mémoire de sortie (215) de la première unité de commande (201) et/ou dans la deuxième unité de mémoire de sortie (223) de la deuxième unité de commande (203) pendant le n-ième cycle de commande, les jeux de données de sortie (233) mémorisés étant générés respectivement sur la base d'un jeu de données d'entrée (231) reçu dans un cycle de commande conformément à la tâche de commande (P), et les cycles de commande respectifs étant exécutés chronologiquement entre le (n-x)-ième cycle de commande et le n-ième cycle de commande, et les jeux respectifs de données de sortie (233) étant émis dans des cycles de commande correspondants, qui sont exécutés chronologiquement entre le n-ième cycle de commande et le (n+x)-ième cycle de commande, de la première unité d'entrée/sortie (209) de la première unité de commande (201) aux appareils de terrain (205).

7. Procédé (100) selon l'une des revendications 2 à 6 précédentes, une pluralité de jeu de données de sortie (233) étant mémorisés dans la deuxième unité de mémoire de sortie (223) de la deuxième unité de commande (203) pendant le (n+m+x)-ième cycle de commande, les jeux de données de sortie (233) mémorisés étant générés respectivement sur la base d'un jeu de données d'entrée (231) reçu dans un cycle de commande conformément à la tâche de commande (P), et les cycles de commande respectifs étant exécutés chronologiquement entre le (n+m)-ième cycle de commande et le (n+m+x)-ième cycle de commande, et les jeux respectifs de données de sortie (233) étant émis dans des cycles de commande correspondants, qui sont exécutés chronologiquement entre le (n+m+x)-ième cycle de commande et le (n+m+2x)-ième cycle de commande, de la deuxième unité d'entrée/sortie (209) de la deuxième unité de commande (203) aux appareils de terrain (205).

8. Procédé (100) selon l'une des revendications précédentes, la première unité de commande (201) comprenant une première unité de mémoire d'entrée (213) destinée à mémoriser des données d'entrée (231), la deuxième unité de commande (203) comprenant une deuxième unité de mémoire d'entrée (221) destinée à mémoriser des données d'entrée (231), et dans lequel le procédé (100) comprenant en outre :
mémorisation du n-ième jeu de données d'entrée (In) dans la première unité de mémoire d'entrée (213) de la première unité de commande (201) dans le n-ième cycle de commande dans une première étape de mémorisation d'entrée (143) ; et/ou
mémorisation du n-ième jeu de données d'entrée (In) transmis de la première unité de commande (201) à la deuxième unité de commande (203) dans la deuxième unité de mémoire d'entrée (221) de la deuxième unité de commande (203) dans le n-ième cycle de commande, dans une deuxième étape de mémorisation d'entrée (145).

9. Procédé (100) selon la revendication 8, la première unité de commande (201) possédant une première zone de mémoire destinée à mémoriser des premières données de commande de la première unité de commande (201), la deuxième unité de commande (203) possédant une deuxième zone de mémoire destinée à mémoriser des deuxièmes données de commande de la deuxième unité de commande (203), la première zone de mémoire comprenant la première unité de mémoire d'entrée (213) et la première unité de mémoire de sortie, et la deuxième zone de mémoire comprenant la deuxième unité de mémoire d'entrée (221) et la deuxième unité de mémoire de sortie (223), comprenant en outre :
génération d'une copie de mémoire (SK) dans une étape de copie de mémoire (147), la copie de mémoire (SK) étant une copie de la première zone de mémoire de la première unité de commande (201) et comprenant les jeux de données d'entrée (231) mémorisés dans la première unité de mémoire d'entrée (213) et les jeux de données de sortie (233) mémorisés dans la première unité de mémoire de sortie (215), la copie de mémoire (SK) étant exécutée à un cycle de commande quelconque qui est exécuté chronologiquement avant le n-ième cycle de commande, et comprend au moins un jeu de données d'entrée (231) mémorisé dans la première unité de mémoire d'entrée (213) au moment du cycle de commande respectif et/ou au moins un jeu de données de sortie (233) mémorisé dans la première unité de mémoire de sortie (215) au moment du cycle de commande respectif ;
communication de la copie de mémoire (SK) à la deuxième unité de commande (203) dans une étape de communication de copie (149) ;
mémorisation de l'au moins un ensemble de données d'entrée (231) de la copie de mémoire (SK) dans la deuxième unité de mémoire d'entrée (221) de la deuxième unité de commande (203) dans une première étape de copie de mémoire (151) ; et/ou
mémorisation de l'au moins un jeu de données de sortie (233) de la copie de mémoire (SK) dans la deuxième unité de mémoire de sortie (223) de la deuxième unité de commande (203) dans une deuxième étape de copie de mémoire (153) ;
traitement de l'au moins un jeu de données d'entrée (231) de ma copie de mémoire (SK) et génération d'un jeu correspondant de données de sortie (233) par la deuxième unité de traitement (219) de la deuxième unité de commande (203) dans une cinquième étape de traitement (155) ; et
mémorisation du jeu généré de données de sortie (233) dans la deuxième unité de mémoire de sortie (223) de la deuxième unité de commande (203) dans une cinquième étape de mémorisation de sortie (157).

10. Procédé (100) selon l'une des revendications précédentes, la première unité de commande (201) comprenant une première interface de communication destinée à recevoir et émettre des données de communication, la deuxième unité de commande (203) possédant une deuxième interface de communication destinée à recevoir et émettre des données de communication, comprenant en outre :
réception de n-ième données de communication (Kn) par la première unité de communication de la première unité de commande (201) dans le n-ième cycle de commande dans une première étape de réception de message (159) ;
spécification de n-ième données de réponse (An) aux n-ième données de communication (Kn) reçues dans une première étape de génération de réponse (161) ;
mémorisation des n-ièmes données de réponse (An) dans la première unité de mémoire de sortie de la première unité de commande (201) dans une première étape de mémorisation de réponse (163), les n-ièmes données de réponse (An) étant mémorisées dans la première unité de mémoire de sortie conjointement avec le n-ième jeu de données de sortie (On) ;
émission des n-ièmes données de réponse (An) par le biais de la première interface de communication de la première unité de commande (201) dans le (n+x)-ième cycle de commande dans une première étape d'émission de réponse (165) ; et/ou
réception de (n+m+x)-ième données de communication par la deuxième unité de communication de la deuxième unité de commande (203) dans le (n+m+x)-ième cycle de commande dans une deuxième étape de réception de message (167) ;
spécification de (n+m+x)-ième données de réponse aux (n+m+x)-ième données de communication reçues dans une deuxième étape de génération de réponse (169) ;
mémorisation des (n+m+x)-ièmes données de réponse dans la deuxième unité de mémoire de sortie de la deuxième unité de commande (203) dans une deuxième étape de mémorisation de réponse (171), les (n+m+x)-ièmes données de communication étant mémorisées dans la deuxième unité de mémoire de sortie conjointement avec le (n+m+x)-ième jeu de données de sortie ; et
émission des (n+m+x)-ième données de réponse par le biais de la deuxième interface de communication de la deuxième unité de commande (203) dans le (n+m+2x)-ième cycle de commande dans une deuxième étape d'émission de réponse (173).

11. Procédé (100) selon l'une des revendications précédentes, la première unité de commande (201) comprenant une première unité de traitement supplémentaire destinée à exécuter au moins une tâche de commande (P) supplémentaire et à analyser les données d'entrée (231) reçues et destinée à générer des données de sortie supplémentaires conformément à la tâche de commande (P) supplémentaire, la deuxième unité de commande (203) comprenant une deuxième unité de traitement supplémentaire (219) destinée à exécuter l'au moins une tâche de commande (P) supplémentaire et à analyser les données d'entrée reçues (231) et destinée à générer des données de sortie supplémentaire (233) conformément à la tâche de commande (P) supplémentaire, et la tâche de commande (P) pouvant être exécutée simultanément par la première unité de traitement (211) et la tâche de commande supplémentaire (P) par la première unité de traitement supplémentaire de la première unité de commande (201) et/ou la tâche de commande (P) par la deuxième unité de traitement (219) et la tâche de commande supplémentaire (P) par la deuxième unité de traitement supplémentaire de la deuxième unité de commande (203).

12. Procédé (100) selon l'une des revendications précédentes, la première unité de mémoire d'entrée (213) et la première unité de mémoire de sortie (215) de la première unité de commande (201) et la deuxième unité de mémoire d'entrée (221) et la deuxième unité de mémoire de sortie (223) de la deuxième unité de commande (203) étant réalisées sous la forme de mémoires de type premier entré/premier sorti.

13. Système d'automatisation (200) comprenant au moins une première unité de commande (201) et une deuxième unité de commande (203) et une pluralité d'appareils de terrain (205), qui sont connectés à la première unité de commande (201) et à la deuxième unité de commande (203) par le biais d'un bus de données (207), la première unité de commande (201) et la deuxième unité de commande (203) étant conçues pour commander de manière cyclique un processus d'automatisation du système d'automatisation (200), la première unité de commande (201) comprenant :
une première unité d'entrée/sortie (209) destinée à recevoir des données d'entrée (213) des appareils de terrain (205) et destinée à émettre des données de sortie (233) aux appareils de terrain (205), les données d'entrée (231) étant regroupées sous la forme d'une image de processus des entrées du processus d'automatisation, et les données de sortie (233) étant regroupées sous la forme d'une image de processus des sorties du processus d'automatisation,
une première unité de traitement (211) destinée à exécuter au moins une tâche de commande (P) et à analyser les données d'entrée (231) reçues et à générer des données de sortie (233) conformément à la tâche de commande (P),
une première unité de mémoire d'entrée (213) destinée à mémoriser les données d'entrée (231) reçues, et
une première unité de mémoire de sortie (215) destinée à mémoriser les données de sortie (233) générées, la deuxième unité de commande (203) comprenant :
une deuxième unité d'entrée/sortie (217) destinée à recevoir des données d'entrée (231) des appareils de terrain (205) et à émettre des données de sortie (233) aux appareils de terrain (205),
une deuxième unité de traitement (219) destinée à exécuter l'au moins une tâche de commande (P) et à analyser les données d'entrée (231) reçues et à générer des données de sortie (233) conformément à la tâche de commande (P),
une deuxième unité de mémoire d'entrée (221) destinée à mémoriser des données d'entrée (231), et
une deuxième unité de mémoire de sortie (223) destinée à mémoriser les données de sortie (233) générées, et le système d'automatisation (200) étant configuré pour mettre en œuvre le procédé (100) selon l'une des revendications 1 à 12 précédentes.

14. Système d'automatisation (200) selon la revendication 13, la première unité de commande (201) possédant une première zone de mémoire destinée à mémoriser des premières données de commande de la première unité de commande (201), la deuxième unité de commande (203) possédant une deuxième zone de mémoire destinée à mémoriser des deuxièmes données de commande de la deuxième unité de commande (203), la première zone de mémoire comprenant la première unité de mémoire d'entrée (213) et la première unité de mémoire de sortie, et la deuxième zone de mémoire comprenant la deuxième unité de mémoire d'entrée (221) et la deuxième unité de mémoire de sortie, et/ou la première unité de commande (201) et la deuxième unité de commande (203) étant connectées l'une à l'autre par le biais d'une liaison de données (227) et étant conçues pour réaliser un échange de données au moyen d'une communication de données.

15. Système d'automatisation (200) selon la revendication 13 ou 14, comprenant en outre une première unité de connexion (229) et une deuxième unité de connexion (230), la première unité de connexion (229) et la deuxième unité de connexion (239) étant reliées aux appareils de terrain (205) et à la première unité de commande (201) et à la deuxième unité de commande (203) par le biais du bus de données (207), et la première unité de connexion (229) et la deuxième unité de connexion (230) étant configurées pour commander un flux de données d'entrée des appareils de terrain (205) à la première unité de commande (201) et la deuxième unité de commande (203) et/ou un flux de données de sortie de la première unité de commande (201) et/ou de la deuxième unité de commande (203) aux les appareils de terrain (205), et/ou la première unité de commande (201) comprenant une première unité de traitement supplémentaire destinée à exécuter au moins une tâche de commande (P) supplémentaire et à analyser les données d'entrée (231) reçues et destinée à générer des données de sortie (233) supplémentaires conformément à la tâche de commande (P) supplémentaire, la deuxième unité de commande (203) comprenant une deuxième unité de traitement supplémentaire destinée à exécuter l'au moins une tâche de commande (P) supplémentaire et à analyser les données d'entrée (231) reçues et destinée à générer des données de sortie (233) conformément à la tâche de commande (P) supplémentaire, et la tâche de commande (P) pouvant être exécutée simultanément par la première unité de traitement (211) et la tâche de commande supplémentaire (P) par la première unité de traitement supplémentaire de la première unité de commande (201) et/ou la tâche de commande (P) par la deuxième unité de traitement (219) et la tâche de commande (P) supplémentaire par la deuxième unité de traitement supplémentaire de la deuxième unité de commande (203).
